# EUROPEAN PATENT APPLICATION

(11) **EP 4 660 758 A1**
(43) Date of publication of application: **10.12.2025**
(21) Application number: 25181183.2
(22) Date of filing: 05.06.2025
(51) Int. Cl.: G06F 3/01, G06F 3/03, G06N 5/022, G06V 20/20, G06F 3/16, G06F 16/3329, G06N 20/00, G06V 20/00, G06N 5/046

(54) **FACILITATING USER INTERACTIONS WITH A THREE-DIMENSIONAL SCENE**

(30) Priority: 07.06.2024 US 202463657599 P; 22.05.2025 US 202519216221
(71) Applicant: Apple Inc., Cupertino, CA 95014 (US)
(72) Inventor: JONES, Evan, Cupertino, California, 95014 (US); YANG, In Young, Cupertino, California, 95014 (US); FROST, Joshua J., Cupertino, California, 95014 (US); VADLAPUDI, Ravikiran, Cupertino, California, 95014 (US); MOORE, Thomas J., Cupertino, California, 95014 (US)
(74) Representative: Simmons & Simmons

(57) **Abstract**

An example process includes: detecting, via at least the one or more image sensors, first data that represents a first scene; and in response to detecting, via at least the one or more image sensors, the first data that represents the first scene and after an inference about a user intent with respect to the first scene is determined based on the first data that represents the first scene: in accordance with a determination that a portion of a knowledge base is selected based on the inference about the user intent with respect to the first scene, wherein the knowledge base is personal to a user of the computer system, and in accordance with a determination that a first action satisfies a set of action criteria, performing the first action, wherein the first action is generated based on the selected portion of the knowledge base.

## Description

### TECHNICAL FIELD

The present disclosure relates generally to computer systems that are configured to assist a user with tasks related to a three-dimensional scene in which the user and/or their avatar is present.

### BACKGROUND

The development of computer systems for interacting with and/or providing three-dimensional scenes has expanded significantly in recent years. Example three-dimensional scenes (e.g., environments) include physical scenes and extended reality scenes.

### SUMMARY

Example methods are disclosed herein. An example method includes: at a computer system that is in communication with one or more image sensors: detecting, via at least the one or more image sensors, first data that represents a first scene; and in response to detecting, via at least the one or more image sensors, the first data that represents the first scene and after an inference about a user intent with respect to the first scene is determined based on the first data that represents the first scene: in accordance with a determination that a portion of a knowledge base is selected based on the inference about the user intent with respect to the first scene, wherein the knowledge base is personal to a user of the computer system, and in accordance with a determination that a first action satisfies a set of action criteria, performing the first action, wherein the first action is generated based on the selected portion of the knowledge base.

Example non-transitory computer-readable storage media are disclosed herein. An example non-transitory computer-readable storage medium stores one or more programs. The one or more programs are configured to be executed by one or more processors of a computer system that is in communication with one or more image sensors. The one or more programs include instructions for: detecting, via at least the one or more image sensors, first data that represents a first scene; and in response to detecting, via at least the one or more image sensors, the first data that represents the first scene and after an inference about a user intent with respect to the first scene is determined based on the first data that represents the first scene: in accordance with a determination that a portion of a knowledge base is selected based on the inference about the user intent with respect to the first scene, wherein the knowledge base is personal to a user of the computer system, and in accordance with a determination that a first action satisfies a set of action criteria, performing the first action, wherein the first action is generated based on the selected portion of the knowledge base.

Example computer systems are disclosed herein. An example computer system is configured to communicate with one or more image sensors. The computer system comprises: one or more processors; and memory storing one or more programs configured to be executed by the one or more processors, the one or more programs including instructions for: detecting, via at least the one or more image sensors, first data that represents a first scene; and in response to detecting, via at least the one or more image sensors, the first data that represents the first scene and after an inference about a user intent with respect to the first scene is determined based on the first data that represents the first scene: in accordance with a determination that a portion of a knowledge base is selected based on the inference about the user intent with respect to the first scene, wherein the knowledge base is personal to a user of the computer system, and in accordance with a determination that a first action satisfies a set of action criteria, performing the first action, wherein the first action is generated based on the selected portion of the knowledge base.

An example computer system is configured to communicate with one or more image sensors. The computer system comprises: means for detecting, via at least the one or more image sensors, first data that represents a first scene; and means, in response to detecting, via at least the one or more image sensors, the first data that represents the first scene and after an inference about a user intent with respect to the first scene is determined based on the first data that represents the first scene, for: in accordance with a determination that a portion of a knowledge base is selected based on the inference about the user intent with respect to the first scene, wherein the knowledge base is personal to a user of the computer system, and in accordance with a determination that a first action satisfies a set of action criteria, performing the first action, wherein the first action is generated based on the selected portion of the knowledge base.

Performing the action that is generated based on the selected portion of the knowledge base may improve how a computer system assists a user with tasks related to a three-dimensional environment. For example, the generated action can account for both the user's personal information and the three-dimensional environment the user (or their avatar) is present within, thereby allowing the computer system to provide relevant and personalized assistance. Further, selecting the portion of the knowledge base as described herein can allow the computer system to use only a relevant subset of the available personal information to generate the action, thereby improving the accuracy and efficiency with which the action is generated (e.g., as compared to using the entirety of the available personal information to generate the action). In this manner, the user-device interface is made more efficient and accurate (e.g., by reducing the number of user inputs required to operate the device as desired, by improving the accuracy of suggested and/or performed actions, by improving the efficiency with which the actions are generated, and by reducing the number of user inputs required to cease unwanted actions and/or to undo the results of unwanted actions), which additionally reduces power usage and improves battery life of the device by enabling the user to use the device more quickly and efficiently.

Example methods are disclosed herein. An example method includes: at a computer system that is in communication with one or more image sensors: detecting, via at least the one or more image sensors, first data that represents a first scene; in response to detecting, via at least the one or more image sensors, the first data that represents the first scene: in accordance with a determination that the first data that represents the first scene satisfies a set of reminder setting criteria, setting a reminder based on the first data that represents the first scene; and after setting the reminder based on the first data that represents the first scene: detecting, via at least the one or more image sensors, second data that represents a second scene, wherein the second scene occurs after the first scene; and in response to detecting, via at least the one or more image sensors, the second data that represents the second scene: in accordance with a determination that the second data that represents the second scene satisfies a set of triggering criteria for the reminder, triggering the reminder.

Example non-transitory computer-readable storage media are disclosed herein. An example non-transitory computer-readable storage medium stores one or more programs. The one or more programs are configured to be executed by one or more processors of a computer system that is in communication with one or more image sensors. The one or more programs include instructions for: detecting, via at least the one or more image sensors, first data that represents a first scene; in response to detecting, via at least the one or more image sensors, the first data that represents the first scene: in accordance with a determination that the first data that represents the first scene satisfies a set of reminder setting criteria, setting a reminder based on the first data that represents the first scene; and after setting the reminder based on the first data that represents the first scene: detecting, via at least the one or more image sensors, second data that represents a second scene, wherein the second scene occurs after the first scene; and in response to detecting, via at least the one or more image sensors, the second data that represents the second scene: in accordance with a determination that the second data that represents the second scene satisfies a set of triggering criteria for the reminder, triggering the reminder.

Example computer systems are disclosed herein. An example computer system is configured to communicate with one or more image sensors. The computer system comprises: one or more processors; and memory storing one or more programs configured to be executed by the one or more processors, the one or more programs including instructions for: detecting, via at least the one or more image sensors, first data that represents a first scene; in response to detecting, via at least the one or more image sensors, the first data that represents the first scene: in accordance with a determination that the first data that represents the first scene satisfies a set of reminder setting criteria, setting a reminder based on the first data that represents the first scene; and after setting the reminder based on the first data that represents the first scene: detecting, via at least the one or more image sensors, second data that represents a second scene, wherein the second scene occurs after the first scene; and in response to detecting, via at least the one or more image sensors, the second data that represents the second scene: in accordance with a determination that the second data that represents the second scene satisfies a set of triggering criteria for the reminder, triggering the reminder.

An example computer system is configured to communicate with one or more image sensors. The computer system comprises: means for detecting, via at least the one or more image sensors, first data that represents a first scene; means, in response to detecting, via at least the one or more image sensors, the first data that represents the first scene, for: in accordance with a determination that the first data that represents the first scene satisfies a set of reminder setting criteria, setting a reminder based on the first data that represents the first scene; means, after setting the reminder based on the first data that represents the first scene, for detecting, via at least the one or more image sensors, second data that represents a second scene, wherein the second scene occurs after the first scene; and means, after setting the reminder based on the first data that represents the first scene and in response to detecting, via at least the one or more image sensors, the second data that represents the second scene, for: in accordance with a determination that the second data that represents the second scene satisfies a set of triggering criteria for the reminder, triggering the reminder.

Generating a reminder based on data that represents an earlier scene and triggering the reminder based on the data that represents a later scene may allow a computer system to intelligently generate reminders and to provide reminders at appropriate times. For example, instead of triggering the reminder in response to satisfaction of a predetermined condition (e.g., a time condition or a location condition), triggering the reminder as described herein may allow output of the reminder at a more relevant time that accounts for the three-dimensional environment that the user or their avatar is present within. In this manner, the user-device interface is made more accurate and efficient (e.g., by reducing the number of user inputs required to set a reminder, by reducing the number of user inputs required to cease and/or remove unwanted reminders, and by providing reminders at an appropriate time and under appropriate circumstances), which additionally reduces power usage and improves battery life of the device by enabling the user to use the device more quickly and efficiently.

Example methods are disclosed herein. An example method includes: at a computer system that is in communication with one or more image sensors: obtaining data associated with a user of the computer system; after obtaining the data associated with the user of the computer system, detecting, via at least the one or more image sensors, first data that represents a first scene; and in response to detecting, via at least the one or more image sensors, the first data that represents the first scene: in accordance with a determination that a set of scene description criteria is satisfied, wherein the set of scene description criteria is satisfied based on the first data that represents the first scene: providing an output that describes a selected portion of the first scene, wherein the portion of the first scene is selected based on the data associated with the user of the computer system.

Example non-transitory computer-readable storage media are disclosed herein. An example non-transitory computer-readable storage medium stores one or more programs. The one or more programs are configured to be executed by one or more processors of a computer system that is in communication with one or more image sensors. The one or more programs include instructions for: obtaining data associated with a user of the computer system; after obtaining the data associated with the user of the computer system, detecting, via at least the one or more image sensors, first data that represents a first scene; and in response to detecting, via at least the one or more image sensors, the first data that represents the first scene: in accordance with a determination that a set of scene description criteria is satisfied, wherein the set of scene description criteria is satisfied based on the first data that represents the first scene: providing an output that describes a selected portion of the first scene, wherein the portion of the first scene is selected based on the data associated with the user of the computer system.

Example computer systems are disclosed herein. An example computer system is configured to communicate with one or more image sensors. The computer system comprises: one or more processors; and memory storing one or more programs configured to be executed by the one or more processors, the one or more programs including instructions for: obtaining data associated with a user of the computer system; after obtaining the data associated with the user of the computer system, detecting, via at least the one or more image sensors, first data that represents a first scene; and in response to detecting, via at least the one or more image sensors, the first data that represents the first scene: in accordance with a determination that a set of scene description criteria is satisfied, wherein the set of scene description criteria is satisfied based on the first data that represents the first scene: providing an output that describes a selected portion of the first scene, wherein the portion of the first scene is selected based on the data associated with the user of the computer system.

An example computer system is configured to communicate with one or more image sensors. The computer system comprises: means for obtaining data associated with a user of the computer system; means, after obtaining the data associated with the user of the computer system, for detecting, via at least the one or more image sensors, first data that represents a first scene; and means, in response to detecting, via at least the one or more image sensors, the first data that represents the first scene, for: in accordance with a determination that a set of scene description criteria is satisfied, wherein the set of scene description criteria is satisfied based on the first data that represents the first scene: providing an output that describes a selected portion of the first scene, wherein the portion of the first scene is selected based on the data associated with the user of the computer system.

Determining to describe a scene and selectively describing the scene according to the techniques described herein may allow a computer system to accurately select the appropriate elements/features of a scene to describe and to automatically describe the selected elements/features under appropriate circumstances. In this manner, the computer system can improve the safety, efficiency, and accessibility of a user's interactions with a three-dimensional environment (e.g., by not overwhelming the user with description of irrelevant information about the scene, by describing relevant elements/features of the scene, by reducing the number of user inputs required to operate the computer system as desired, and by reducing the amount of information that the computer system outputs), which additionally reduces power usage and improves battery life of the computer system by enabling the user to use the computer system more quickly and efficiently.

Example methods are disclosed herein. An example method includes: at a computer system that is in communication with one or more image sensors: detecting, via at least the one or more image sensors, first data that represents a first scene; in response to detecting, via at least the one or more image sensors, the first data that represents the first scene: in accordance with a determination that a set of criteria for a first accessibility mode is satisfied, wherein satisfaction of the set of criteria for the first accessibility mode is based on the first data that represents the first scene, setting the computer system to the first accessibility mode; and in accordance with a determination that the set of criteria for the first accessibility mode is not satisfied, forgoing setting the computer system to the first accessibility mode; and while the computer system is set to the first accessibility mode: detecting, via at least the one or more image sensors, second data that represents a second scene; and after detecting, via at least the one or more image sensors, the second data that represents the second scene, performing an action based on the first accessibility mode and the second data that represents the second scene.

Example non-transitory computer-readable storage media are disclosed herein. An example non-transitory computer-readable storage medium stores one or more programs. The one or more programs are configured to be executed by one or more processors of a computer system that is in communication with one or more image sensors. The one or more programs include instructions for: detecting, via at least the one or more image sensors, first data that represents a first scene; in response to detecting, via at least the one or more image sensors, the first data that represents the first scene: in accordance with a determination that a set of criteria for a first accessibility mode is satisfied, wherein satisfaction of the set of criteria for the first accessibility mode is based on the first data that represents the first scene, setting the computer system to the first accessibility mode; and in accordance with a determination that the set of criteria for the first accessibility mode is not satisfied, forgoing setting the computer system to the first accessibility mode; and while the computer system is set to the first accessibility mode: detecting, via at least the one or more image sensors, second data that represents a second scene; and after detecting, via at least the one or more image sensors, the second data that represents the second scene, performing an action based on the first accessibility mode and the second data that represents the second scene.

Example computer systems are disclosed herein. An example computer system is configured to communicate with one or more image sensors. The computer system comprises: one or more processors; and memory storing one or more programs configured to be executed by the one or more processors, the one or more programs including instructions for: detecting, via at least the one or more image sensors, first data that represents a first scene; in response to detecting, via at least the one or more image sensors, the first data that represents the first scene: in accordance with a determination that a set of criteria for a first accessibility mode is satisfied, wherein satisfaction of the set of criteria for the first accessibility mode is based on the first data that represents the first scene, setting the computer system to the first accessibility mode; and in accordance with a determination that the set of criteria for the first accessibility mode is not satisfied, forgoing setting the computer system to the first accessibility mode; and while the computer system is set to the first accessibility mode: detecting, via at least the one or more image sensors, second data that represents a second scene; and after detecting, via at least the one or more image sensors, the second data that represents the second scene, performing an action based on the first accessibility mode and the second data that represents the second scene.

An example computer system is configured to communicate with one or more image sensors. The computer system comprises: means for detecting, via at least the one or more image sensors, first data that represents a first scene; means, in response to detecting, via at least the one or more image sensors, the first data that represents the first scene, for: in accordance with a determination that a set of criteria for a first accessibility mode is satisfied, wherein satisfaction of the set of criteria for the first accessibility mode is based on the first data that represents the first scene, setting the computer system to the first accessibility mode; and in accordance with a determination that the set of criteria for the first accessibility mode is not satisfied, forgoing setting the computer system to the first accessibility mode; and while the computer system is set to the first accessibility mode: means for detecting, via at least the one or more image sensors, second data that represents a second scene; and means, after detecting, via at least the one or more image sensors, the second data that represents the second scene, for performing an action based on the first accessibility mode and the second data that represents the second scene.

Setting the computer system to the accessibility mode and performing operations based on the accessibility mode allows a computer system to provide timely and accurate assistance to users, e.g., users of accessibility features of the computer system. Accordingly, the computer system can improve the safety, efficiency, and accessibility of a user's interactions with a three-dimensional environment (e.g., by assisting the user with navigating through the world around them, by helping the user interact with other users who have disabilities, by performing appropriate assistive actions under appropriate circumstances, by reducing the amount of inputs required to operate the computer system as desired, and by reducing the number of user inputs required to undo/cease the results of unwanted actions), which additionally reduces power usage and improves battery life of the computer system by enabling the user to use the computer system more quickly and efficiently.

In some examples, the computer system is a desktop computer with an associated display. In some examples, the computer system is a portable device (e.g., a notebook computer, tablet computer, or handheld device such as a smartphone). In some examples, the computer system is a personal electronic device (e.g., a wearable electronic device, such as a watch or a head-mounted device). In some examples, the computer system has a touchpad. In some examples, the computer system has one or more cameras. In some examples, the computer system has a display generation component (e.g., a display device such as a head-mounted display, a display, a projector, a touch-sensitive display (also known as a "touch screen" or "touch-screen display"), or other device or component that presents visual content to a user, for example on or in the display generation component itself or produced from the display generation component and visible elsewhere). In some examples, the computer system does not have a display generation component and does not present visual content to a user. In some examples, the computer system has a touch-sensitive display (also known as a "touch screen" or "touch-screen display"). In some examples, the computer system has one or more eye-tracking components. In some examples, the computer system has one or more hand-tracking components. In some examples, the computer system has one or more output devices, the output devices including one or more tactile output generators and/or one or more audio output devices. In some examples, the computer system has one or more processors, memory, and one or more modules, programs or sets of instructions stored in the memory for performing various functions described herein. In some examples, the user interacts with the computer system through a stylus and/or finger contacts and gestures on the touch-sensitive surface, movement of the user's eyes and hand in space or the user's body as captured by cameras and other movement sensors, and/or voice inputs as captured by one or more audio input devices. Executable instructions for performing these functions are, optionally, included in a transitory and/or non-transitory computer-readable storage medium or other computer program product configured for execution by one or more processors.

Note that the various examples described above can be combined with any other examples described herein. The features and advantages described in the specification are not all inclusive and, in particular, many additional features and advantages will be apparent to one of ordinary skill in the art in view of the drawings, specification, and claims. Moreover, it should be noted that the language used in the specification has been principally selected for readability and instructional purposes, and may not have been selected to delineate or circumscribe the inventive subject matter.

### BRIEF DESCRIPTION OF THE DRAWINGS

For a better understanding of the various described examples, reference should be made to the Detailed Description below, in conjunction with the following drawings in which like reference numerals refer to corresponding parts throughout the figures.
FIG. 1 is a block diagram illustrating an operating environment of a computer system for interacting with three-dimensional (3D) scenes, according to some examples.
FIG. 2 is a block diagram of a user-facing component of the computer system, according to some examples.
FIG. 3 is a block diagram of a controller of the computer system, according to some examples.
FIG. 4 illustrates an architecture for a foundation model, according to some examples.
FIG. 5 illustrates additional components of the 3D experience module of the controller, according to some examples.
FIG. 6 illustrates a portion of a personal knowledge graph, according to some examples.
FIGS. 7A-7C illustrate a device performing actions based on data that represents a three-dimensional scene, according to some examples.
FIG. 8 is a flow diagram of a method for performing actions with respect to a three-dimensional scene, according to some examples.
FIG. 9 illustrates additional components of the 3D experience module of the controller, according to some examples.
FIGS. 10A-10G illustrate a device setting reminders based on data that represents a three-dimensional scene and triggering a reminder based on data that represents a later three-dimensional scene, according to some examples.
FIG. 11 is a flow diagram of a method for generating and setting reminders with respect to a three-dimensional scene, according to some examples.
FIG. 12 illustrates additional components of the 3D experience module of the controller, according to some examples.
FIGS. 13A-13G illustrate a device providing outputs that describe selected portions of respective three-dimensional scenes, according to some examples.
FIG. 14 is a flow diagram of a method for selectively describing a three-dimensional scene, according to some examples.
FIG. 15 illustrates additional components of the 3D experience module of the controller, according to some examples.
FIGS. 16A-16D illustrate a device performing actions based on different accessibility modes, according to some examples.
FIG. 17 is a flow diagram of a method for performing actions according to different accessibility modes, according to some examples.

### DETAILED DESCRIPTION

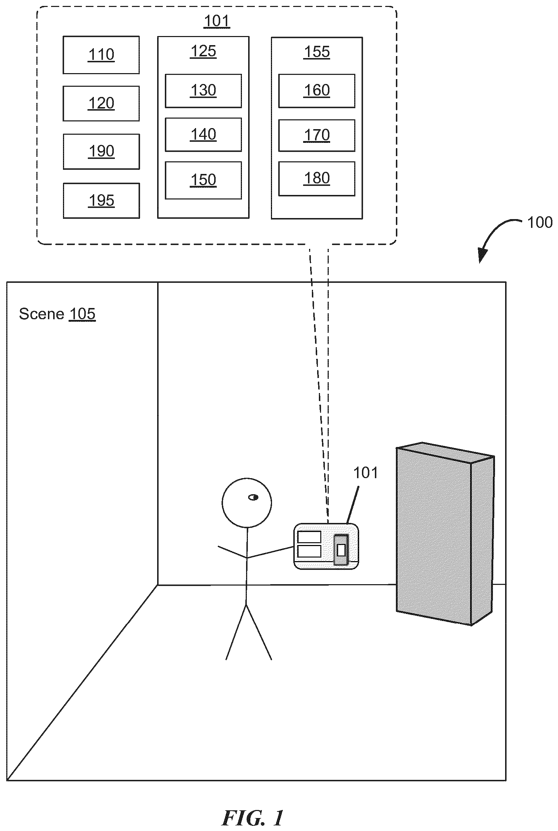

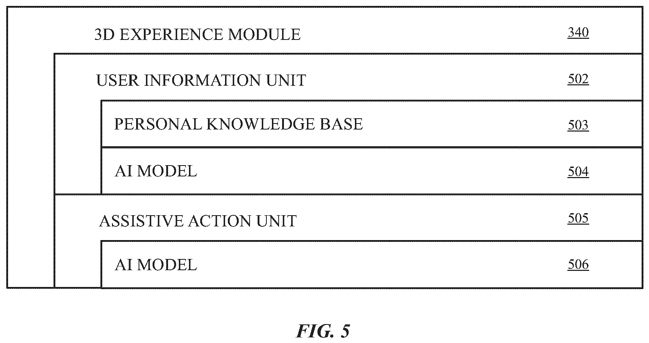

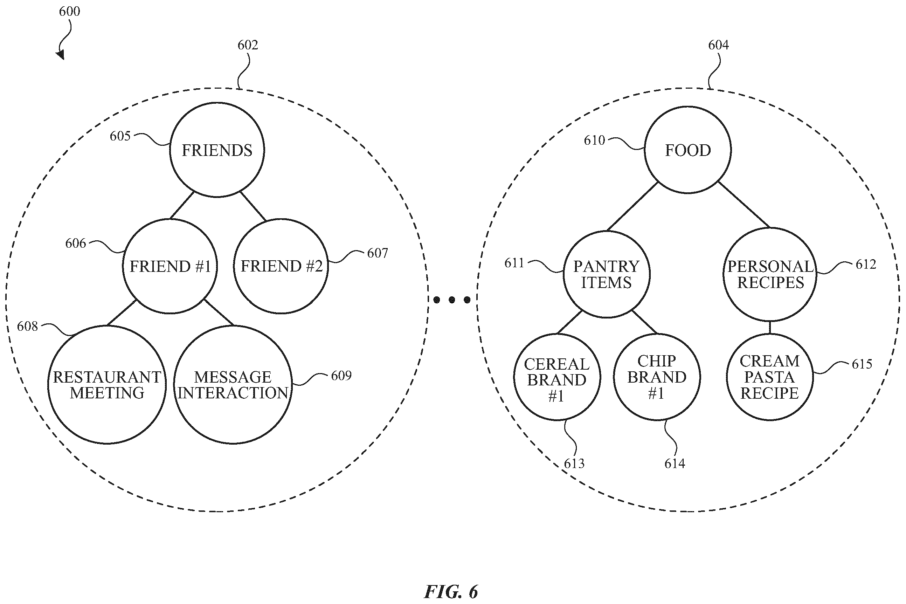

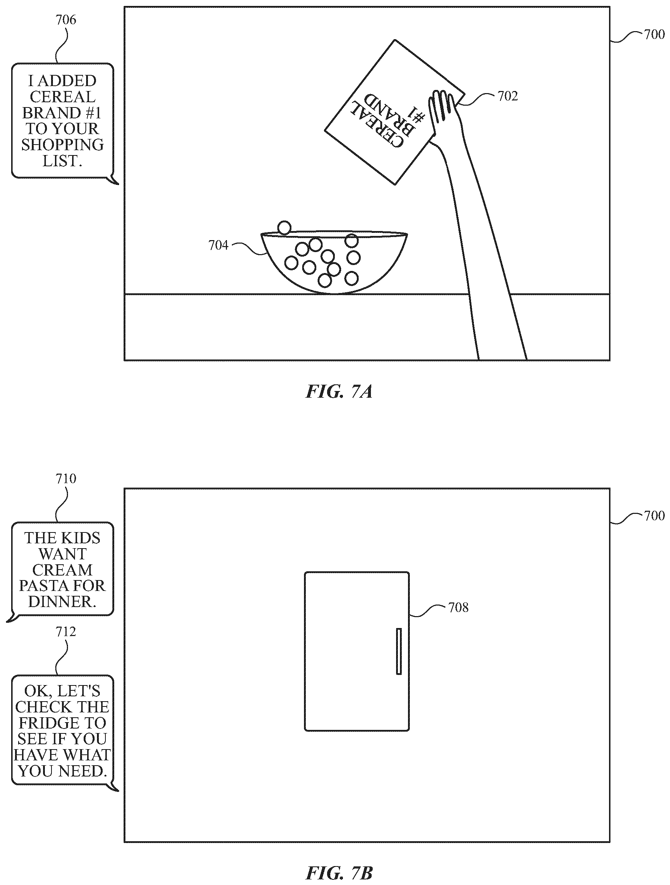

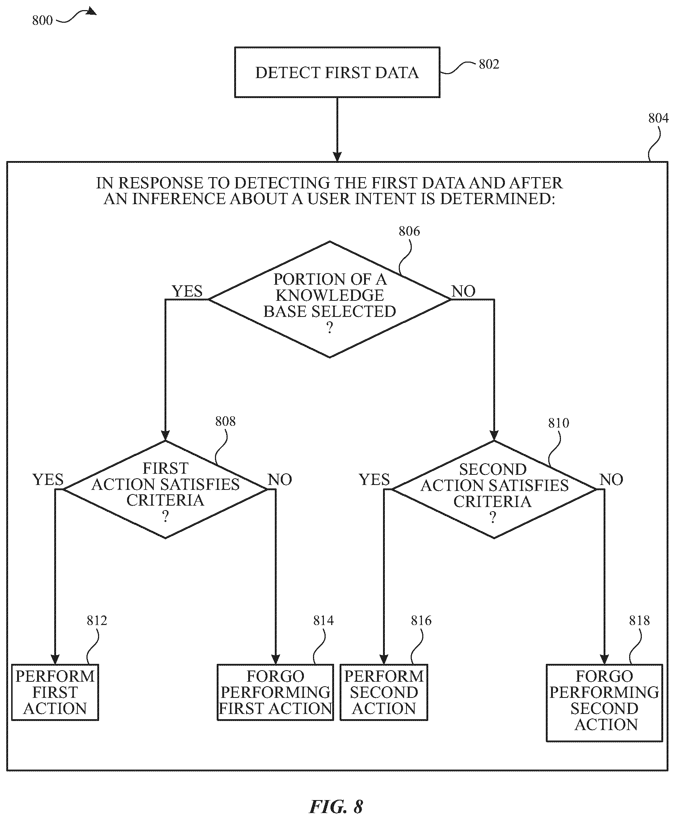

FIGS. 1-4 provide a description of example computer systems and techniques for interacting with three-dimensional scenes. FIG. 5 illustrates additional components of the 3D experience module of the controller that are configured to generate actions based on data that represents a three-dimensional scene. FIG. 6 illustrates a portion of a personal knowledge graph. FIGS. 7A-7C illustrate a device performing actions based on data that represents a three-dimensional scene. FIG. 8 is a flow diagram of a method for performing actions with respect to a three-dimensional scene. FIGS. 5, 6, and 7A-7C are used to describe the processes in FIG. 8.

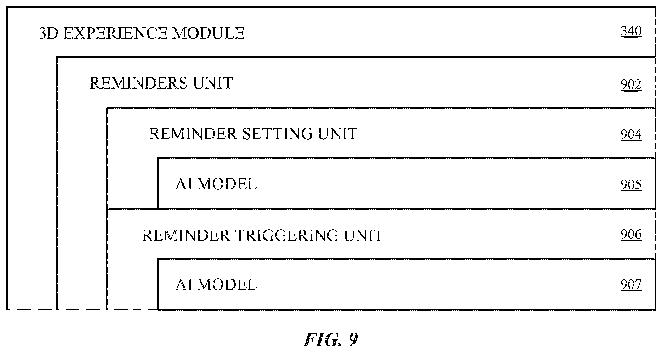

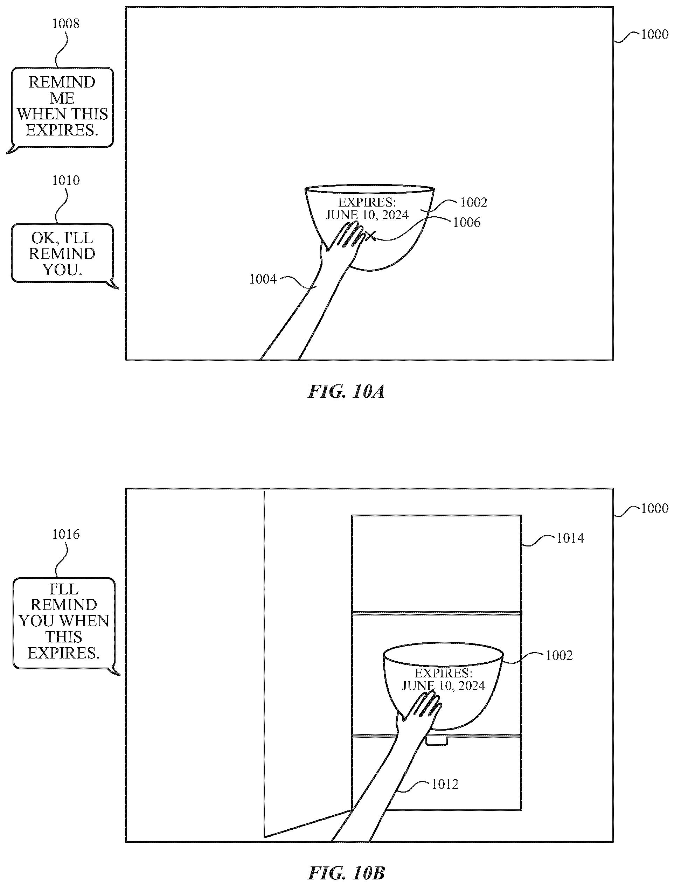

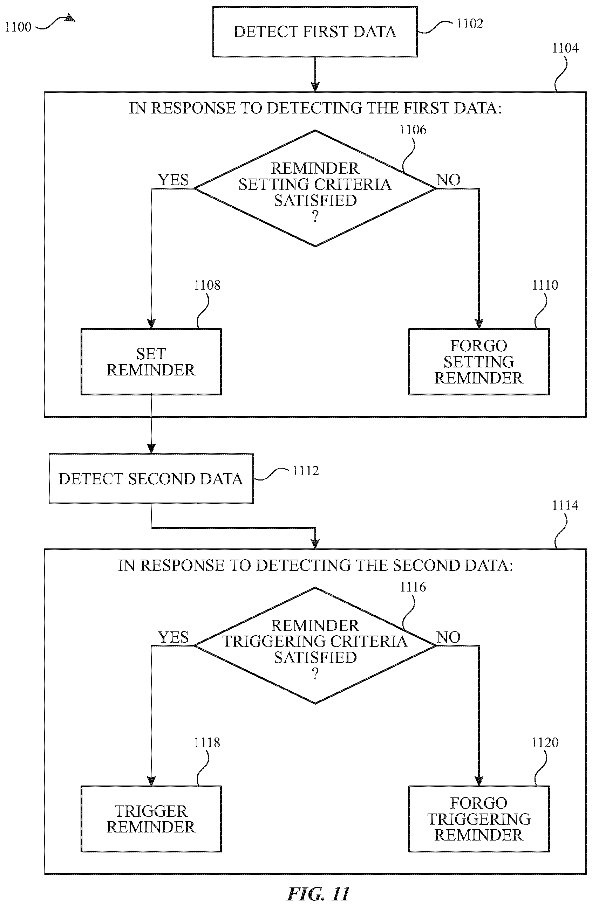

FIG. 9 illustrates additional components of the 3D experience module of the controller that are configured to generate and trigger reminders with respect to three-dimensional scenes. FIGS. 10A-10G illustrate a device setting reminders based on data that represents a three-dimensional scene and triggering a reminder based on data that represents a later three-dimensional scene. FIG. 11 is a flow diagram of a method for generating and setting reminders with respect to a three-dimensional scene. FIGS. 9 and 10A-10G are used to describe the processes in FIG. 11.

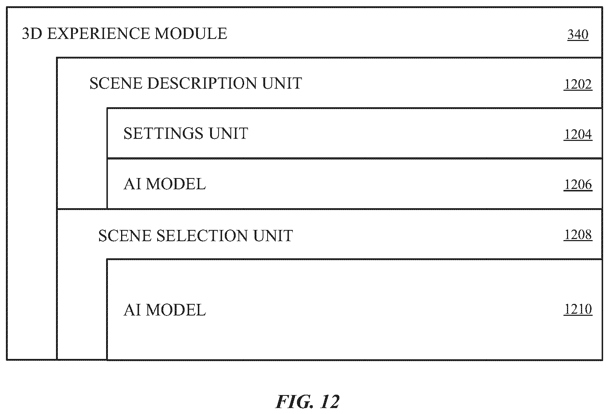

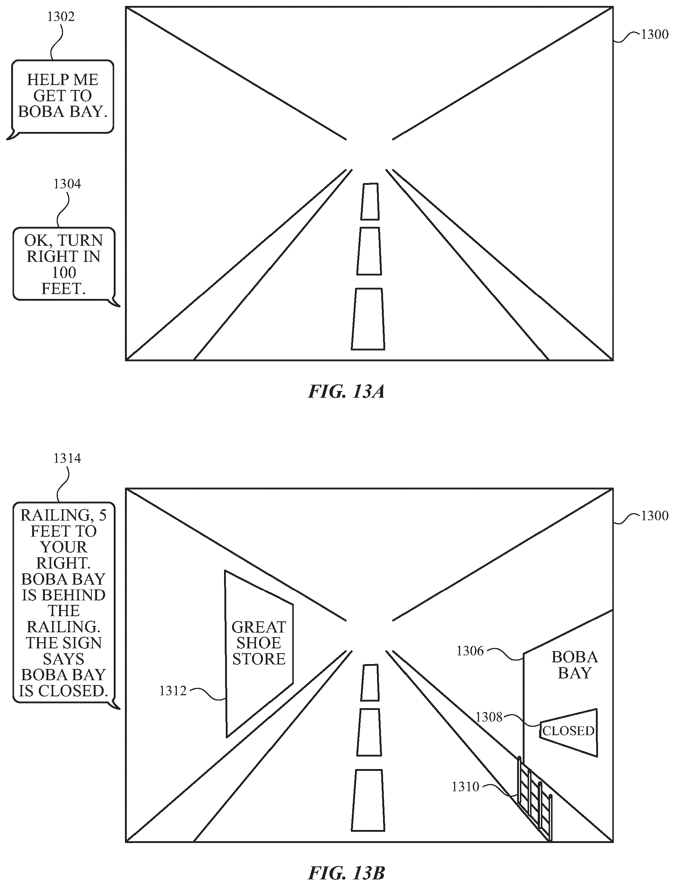

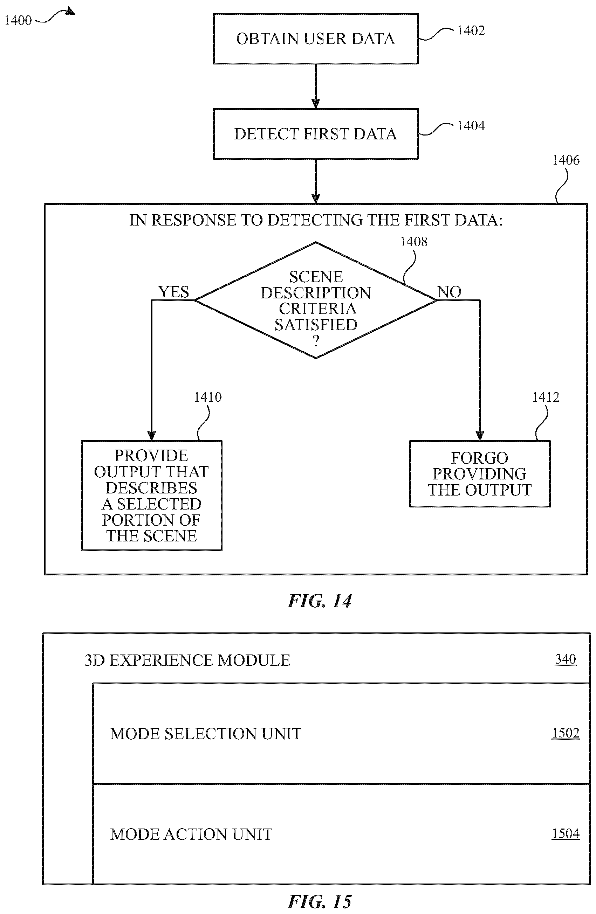

FIG. 12 illustrates additional components of the 3D experience module of the controller that are configured to select a portion of a three-dimensional scene to describe. FIGS. 13A-13G illustrate a device providing outputs that describe selected portions of respective three-dimensional scenes. FIG. 14 is a flow diagram of a method for selectively describing a three-dimensional scene, according to some examples. FIGS. 12 and 13A-13G are used to describe the processes in FIG. 14.

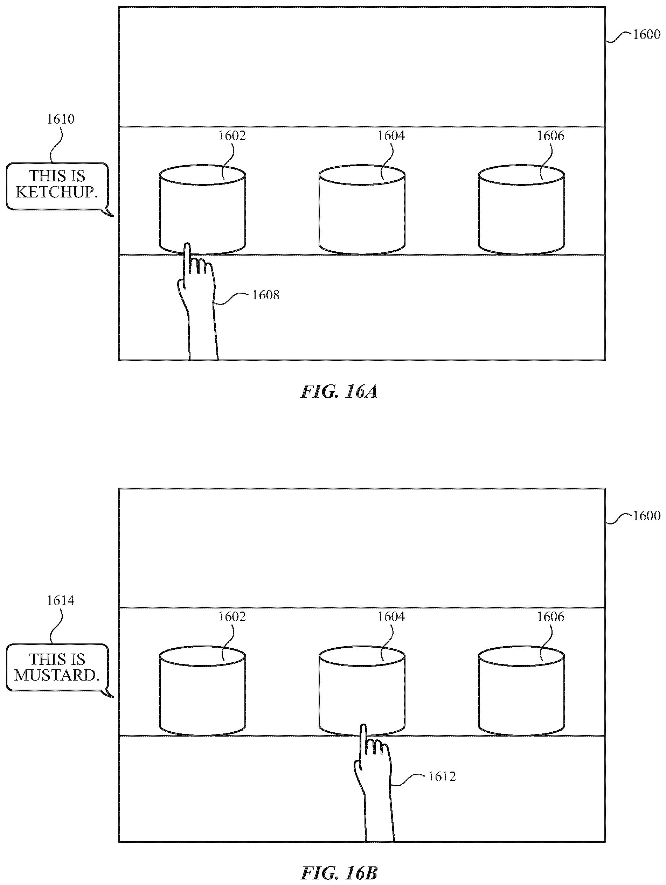

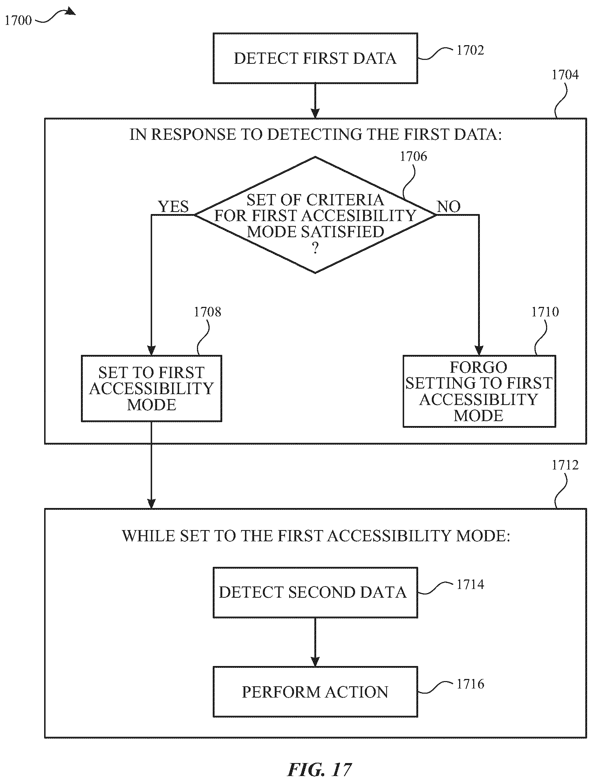

FIG. 15 illustrates additional components of the 3D experience module of the controller that are configured to set a device to an accessibility mode and cause the device to perform actions according to the accessibility mode. FIGS. 16A-16D illustrate a device performing actions based on different accessibility modes. FIG. 17 is a flow diagram of a method for performing actions according to different accessibility modes. FIGS. 15 and 16A-16D are used to describe the processes in FIG. 17.

In addition, in methods described herein where one or more steps are contingent upon one or more conditions having been met, it should be understood that the described method can be repeated in multiple repetitions so that over the course of the repetitions all of the conditions upon which steps in the method are contingent have been met in different repetitions of the method. For example, if a method requires performing a first step if a condition is satisfied, and a second step if the condition is not satisfied, then a person of ordinary skill would appreciate that the claimed steps are repeated until the condition has been both satisfied and not satisfied, in no particular order. Thus, a method described with one or more steps that are contingent upon one or more conditions having been met could be rewritten as a method that is repeated until each of the conditions described in the method has been met. This, however, is not required of system or computer-readable medium claims where the system or computer-readable medium contains instructions for performing the contingent operations based on the satisfaction of the corresponding one or more conditions and thus is capable of determining whether the contingency has or has not been satisfied without explicitly repeating steps of a method until all of the conditions upon which steps in the method are contingent have been met. A person having ordinary skill in the art would also understand that, similar to a method with contingent steps, a system or computer-readable storage medium can repeat the steps of a method as many times as are needed to ensure that all of the contingent steps have been performed.

FIG. 1 is a block diagram illustrating an operating environment of computer system 101 for interacting with three-dimensional scenes, according to some examples. In FIG. 1, a user interacts with three-dimensional scene 105 via operating environment 100 that includes computer system 101. In some examples, computer system 101 includes controller 110 (e.g., processors of a portable electronic device or a remote server), user-facing component 120, one or more input devices 125 (e.g., eye tracking device 130, hand tracking device 140, and/or other input devices 150), one or more output devices 155 (e.g., speakers 160, tactile output generators 170, and other output devices 180), one or more sensors 190 (e.g., image sensors, light sensors, depth sensors, tactile sensors, orientation sensors, proximity sensors, temperature sensors, location sensors, motion sensors, velocity sensors, audio sensors, etc.), and one or more peripheral devices 195 (e.g., home appliances, wearable devices, etc.). In some examples, one or more of input devices 125, output devices 155, sensors 190, and peripheral devices 195 are integrated with user-facing component 120 (e.g., in a head-mounted device or a handheld device).

While pertinent features of the operating environment 100 are shown in FIG. 1, those of ordinary skill in the art will appreciate from the present disclosure that various other features have not been illustrated for the sake of brevity and so as not to obscure more pertinent aspects of the examples disclosed herein.

Hardware: There are many different types of electronic systems that enable a person to sense and/or interact with three-dimensional scenes. Examples include head-mounted systems, projection-based systems, heads-up displays (HUDs), vehicle windshields having integrated display capability, windows having integrated display capability, displays formed as lenses designed to be placed on a person's eyes (e.g., similar to contact lenses), headphones/earphones, speaker arrays, input systems (e.g., wearable or handheld controllers with or without haptic feedback), smartphones, tablets, and desktop/laptop computers. A head-mounted system may include speakers and/or other audio output devices integrated into the head-mounted system for providing audio output. A head-mounted system may have one or more speaker(s) and an integrated opaque display. Alternatively, a head-mounted system may be configured to accept an external opaque display (e.g., a smartphone). Alternatively, a head-mounted system may be configured to operate without displaying content, e.g., so that the head-mounted system provides output to a user via tactile and/or auditory means. The head-mounted system may incorporate one or more imaging sensors to capture images or video of the physical environment, and/or one or more microphones to capture audio of the physical environment. Rather than an opaque display, a head-mounted system may have a transparent or translucent display. The transparent or translucent display may have a medium through which light representative of images is directed to a person's eyes. The display may utilize digital light projection, OLEDs, LEDs, uLEDs, liquid crystal on silicon, laser scanning light source, or any combination of these technologies. The medium may be an optical waveguide, a hologram medium, an optical combiner, an optical reflector, or any combination thereof. In one example, the transparent or translucent display may be configured to become opaque selectively. Projection-based systems may employ retinal projection technology that projects graphical images onto a person's retina. Projection systems also may be configured to project virtual objects into the physical environment, for example, as a hologram or on a physical surface.

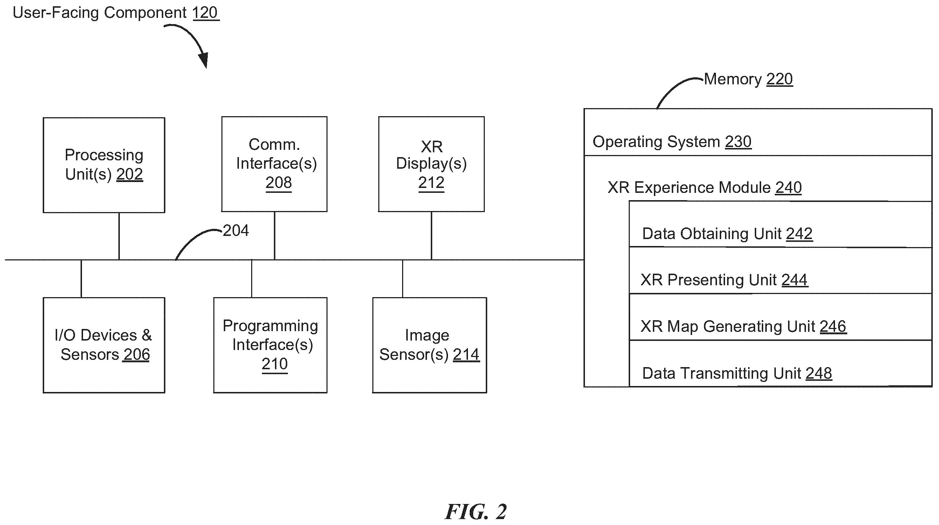

In some examples, user-facing component 120 is configured to provide a visual component of a three-dimensional scene. In some examples, user-facing component 120 includes a suitable combination of software, firmware, and/or hardware. User-facing component 120 is described in greater detail below with respect to FIG. 2. In some examples, the functionalities of controller 110 are provided by and/or combined with user-facing component 120. In some examples, user-facing component 120 provides an extended reality (XR) experience to the user while the user is virtually and/or physically present within scene 105.

In some examples, user-facing component 120 is worn on a part of the user's body (e.g., on his/her head, on his/her hand, etc.). In some examples, user-facing component 120 includes one or more XR displays provided to display the XR content. In some examples, user-facing component 120 encloses the field-of-view of the user. In some examples, user-facing component 120 is a handheld device (such as a smartphone or tablet) configured to present XR content, and the user holds the device with a display directed towards the field-of-view of the user and a camera directed towards the scene 105. In some examples, the handheld device is optionally placed within an enclosure that is worn on the head of the user. In some examples, the handheld device is optionally placed on a support (e.g., a tripod) in front of the user. In some examples, user-facing component 120 is an XR chamber, enclosure, or room configured to present XR content in which the user does not wear or hold user-facing component 120. Many user interfaces described with reference to one type of hardware for displaying XR content (e.g., a handheld device or a device on a tripod) could be implemented on another type of hardware for displaying XR content (e.g., a head-mounted device (HMD) or other wearable computing device). For example, a user interface showing interactions with XR content triggered based on interactions that happen in a space in front of a handheld or tripod-mounted device could similarly be implemented with an HMD where the interactions happen in a space in front of the HMD and the responses of the XR content are displayed via the HMD. Similarly, a user interface showing interactions with XR content triggered based on movement of a handheld or tripod-mounted device relative to the physical environment (e.g., scene 105 or a part of the user's body (e.g., the user's eye(s), head, or hand)) could similarly be implemented with an HMD where the movement is caused by movement of the HMD relative to the physical environment (e.g., scene 105 or a part of the user's body (e.g., the user's eye(s), head, or hand)).

FIG. 2 is a block diagram of user-facing component 120, according to some examples. While certain specific features are illustrated, those skilled in the art will appreciate from the present disclosure that various other features have not been illustrated for the sake of brevity, and so as not to obscure more pertinent aspects of the examples disclosed herein. Moreover, FIG. 2 is intended more as a functional description of the various features that could be present in a particular implementation, as opposed to a structural schematic of the examples described herein. As recognized by those of ordinary skill in the art, components shown separately could be combined and some components could be separated. For example, some functional modules shown separately in FIG. 2 could be implemented in a single module and the various functions of single functional blocks could be implemented by one or more functional blocks in various examples. The actual number of modules and the division of particular functions and how features are allocated among them will vary from one implementation to another and, in some examples, depends in part on the particular combination of hardware, software, and/or firmware chosen for a particular implementation.

In some examples, user-facing component 120 (e.g., HMD) includes one or more processing units 202 (e.g., microprocessors, ASICs, FPGAs, GPUs, CPUs, processing cores, and/or the like), one or more input/output (I/O) devices and sensors 206, one or more communication interfaces 208 (e.g., USB, FIREWIRE, THUNDERBOLT, IEEE 802.3x, IEEE 802.11x, IEEE 802.16x, GSM, CDMA, TDMA, GPS, IR, BLUETOOTH, ZIGBEE, and/or the like type interface), one or more programming (e.g., I/O) interfaces 210, one or more XR displays 212, one or more optional interior- and/or exterior-facing image sensors 214, a memory 220, and one or more communication buses 204 for interconnecting these and various other components.

In some examples, one or more communication buses 204 include circuitry that interconnects and controls communications between system components. In some examples, one or more I/O devices and sensors 206 include at least one of an inertial measurement unit (IMU), an accelerometer, a gyroscope, a thermometer, one or more biometric sensors (e.g., blood pressure monitor, heart rate monitor, blood oxygen sensor, blood glucose sensor, etc.), one or more microphones, one or more speakers, a haptics engine, one or more depth sensors (e.g., a structured light, a time-of-flight, or the like), and/or the like.

In some examples, one or more XR displays 212 are configured to provide an XR experience to the user. In some examples, one or more XR displays 212 correspond to holographic, digital light processing (DLP), liquid-crystal display (LCD), liquid-crystal on silicon (LCoS), organic light-emitting field-effect transistor (OLET), organic light-emitting diode (OLED), surface-conduction electron-emitter display (SED), field-emission display (FED), quantum-dot light-emitting diode (QD-LED), micro-electro-mechanical system (MEMS), and/or the like display types. In some examples, one or more XR displays 212 correspond to diffractive, reflective, polarized, holographic, etc. waveguide displays. For example, user-facing component 120 (e.g., HMD) includes a single XR display. In another example, user-facing component 120 includes an XR display for each eye of the user. In some examples, one or more XR displays 212 are capable of presenting XR content. In some examples, one or more XR displays 212 are omitted from user-facing component 120. For example, user-facing component 120 does not include any component that is configured to display content (or does not include any component that is configured to display XR content) and user-facing component 120 provides output via audio and/or haptic output types.

In some examples, one or more image sensors 214 are configured to obtain image data that corresponds to at least a portion of the face of the user that includes the eyes of the user (and may be referred to as an eye-tracking camera). In some examples, one or more image sensors 214 are configured to obtain image data that corresponds to at least a portion of the user's hand(s) and, optionally, arm(s) of the user (and may be referred to as a hand-tracking camera). In some examples, one or more image sensors 214 are configured to be forward-facing to obtain image data that corresponds to the scene as would be viewed by the user if user-facing component 120 (e.g., HMD) was not present (and may be referred to as a scene camera). One or more optional image sensors 214 can include one or more RGB cameras (e.g., with a complementary metal-oxide-semiconductor (CMOS) image sensor or a charge-coupled device (CCD) image sensor), one or more infrared (IR) cameras, one or more event-based cameras, and/or the like.

Memory 220 includes high-speed random-access memory, such as DRAM, SRAM, DDR RAM, or other random-access solid-state memory devices. In some examples, memory 220 includes non-volatile memory, such as one or more magnetic disk storage devices, optical disk storage devices, flash memory devices, or other non-volatile solid-state storage devices. Memory 220 optionally includes one or more storage devices remotely located from the one or more processing units 202. Memory 220 comprises a non-transitory computer-readable storage medium. In some examples, memory 220 or the non-transitory computer-readable storage medium of memory 220 stores the following programs, modules and data structures, or a subset thereof, including optional operating system 230 and XR experience module 240.

Operating system 230 includes instructions for handling various basic system services and for performing hardware dependent tasks. In some examples, XR experience module 240 is configured to present XR content to the user via one or more XR displays 212 or one or more speakers. To that end, in various examples, XR experience module 240 includes data obtaining unit 242, XR presenting unit 244, XR map generating unit 246, and data transmitting unit 248.

In some examples, data obtaining unit 242 is configured to obtain data (e.g., presentation data, interaction data, sensor data, location data, etc.) from at least controller 110 of FIG. 1. To that end, in various examples, data obtaining unit 242 includes instructions and/or logic therefor, and heuristics and metadata therefor.

In some examples, XR presenting unit 244 is configured to present XR content via one or more XR displays 212 or one or more speakers. To that end, in various examples, XR presenting unit 244 includes instructions and/or logic therefor, and heuristics and metadata therefor.

In some examples, XR map generating unit 246 is configured to generate an XR map (e.g., a 3D map of the extended reality scene or a map of the physical environment into which computer-generated objects can be placed) based on media content data. To that end, in various examples, XR map generating unit 246 includes instructions and/or logic therefor, and heuristics and metadata therefor.

In some examples, the data transmitting unit 248 is configured to transmit data (e.g., presentation data, location data, sensor data, etc.) to at least controller 110, and optionally one or more of input devices 125, output devices 155, sensors 190, and/or peripheral devices 195. To that end, in various examples, data transmitting unit 248 includes instructions and/or logic therefor, and heuristics and metadata therefor.

Although data obtaining unit 242, XR presenting unit 244, XR map generating unit 246, and data transmitting unit 248 are shown as residing on a single device (e.g., user-facing component 120 of FIG. 1), in other examples, any combination of data obtaining unit 242, XR presenting unit 244, XR map generating unit 246, and data transmitting unit 248 may reside on separate computing devices.

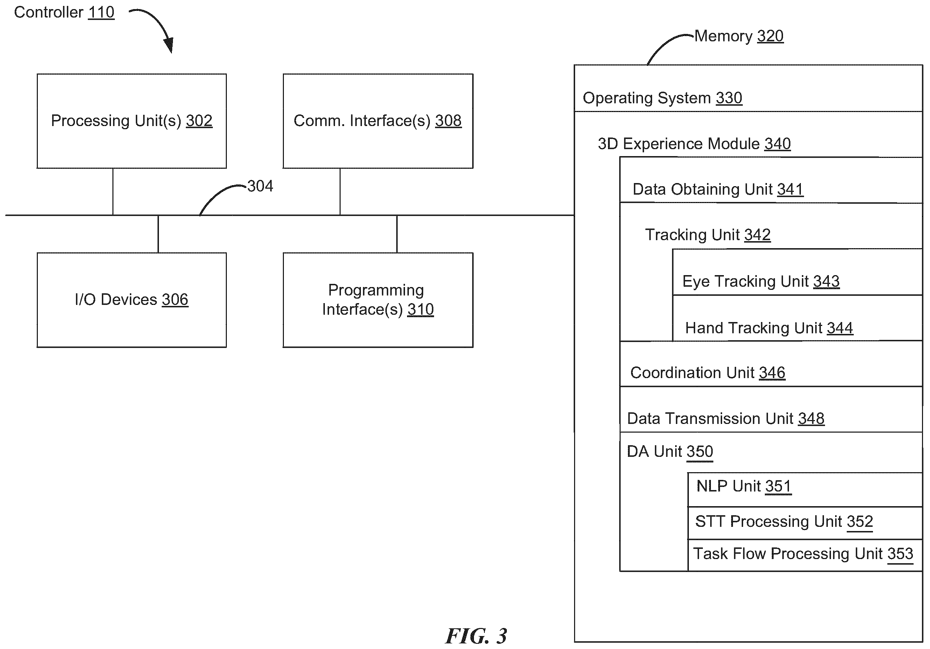

Returning to FIG. 1, controller 110 is configured to manage and coordinate a user's experience with respect to a three-dimensional scene. In some examples, controller 110 includes a suitable combination of software, firmware, and/or hardware. Controller 110 is described in greater detail below with respect to FIG. 3.

In some examples, controller 110 is a computing device that is local or remote relative to scene 105 (e.g., a physical environment). For example, controller 110 is a local server located within scene 105. In another example, controller 110 is a remote server located outside of scene 105 (e.g., a cloud server, central server, etc.). In some examples, controller 110 is communicatively coupled with the component(s) of computer system 101 that are configured to provide output to the user (e.g., output devices 155 and/or user-facing component 120) via one or more wired or wireless communication channels (e.g., BLUETOOTH, IEEE 802.11x, IEEE 802.16x, IEEE 802.3x, etc.). In some examples, controller 110 is included within the enclosure (e.g., a physical housing) of the component(s) of computer system 101 that are configured to provide output to the user (e.g., user-facing component 120) or shares the same physical enclosure or support structure with the component(s) of computer system 101 that are configured to provide output to the user.

In some examples, the various components and functions of controller 110 described below with respect to FIGS. 3, 4, 5, 6, 7A-7C, 8, 9, 10A-10G, 11, 12, 13A-13G, 14, 15, 16A-16D, and 17 are distributed across multiple devices. For example, a first set of the components of controller 110 (and their associated functions) are implemented on a server system remote to scene 105 while a second set of the components of controller 110 (and their associated functions) are local to scene 105. For example, the second set of components are implemented within a portable electronic device (e.g., a wearable device such as an HMD) that is present within scene 105. It will be appreciated that the particular manner in which the various components and functions of controller 110 are distributed across various devices can vary based on different implementations of the examples described herein.

FIG. 3 is a block diagram of a controller 110, according to some examples. While certain specific features are illustrated, those skilled in the art will appreciate from the present disclosure that various other features have not been illustrated for the sake of brevity, and so as not to obscure more pertinent aspects of the examples disclosed herein. Moreover, FIG. 3 is intended more as a functional description of the various features that may be present in a particular implementation, as opposed to a structural schematic of the examples described herein. As recognized by those of ordinary skill in the art, components shown separately could be combined and some components could be separated. For example, some functional modules shown separately in FIG. 3 could be implemented in a single module and the various functions of single functional blocks could be implemented by one or more functional blocks in various examples. The actual number of modules and the division of particular functions and how features are allocated among them will vary from one implementation to another and, in some examples, depends in part on the particular combination of hardware, software, and/or firmware chosen for a particular implementation.

In some examples, controller 110 includes one or more processing units 302 (e.g., microprocessors, application-specific integrated-circuits (ASICs), field-programmable gate arrays (FPGAs), graphics processing units (GPUs), central processing units (CPUs), processing cores, and/or the like), one or more input/output (I/O) devices 306, one or more communication interfaces 308 (e.g., universal serial bus (USB), FIREWIRE, THUNDERBOLT, IEEE 802.3x, IEEE 802.11x, IEEE 802.16x, global system for mobile communications (GSM), code division multiple access (CDMA), time division multiple access (TDMA), global positioning system (GPS), infrared (IR), BLUETOOTH, ZIGBEE, and/or the like type interface), one or more programming (e.g., I/O) interfaces 310, memory 320, and one or more communication buses 304 for interconnecting these and various other components.

In some examples, one or more communication buses 304 include circuitry that interconnects and controls communications between system components. In some examples, one or more I/O devices 306 include at least one of a keyboard, a mouse, a touchpad, a joystick, one or more microphones, one or more speakers, one or more image sensors, one or more displays, and/or the like.

Memory 320 includes high-speed random-access memory, such as dynamic random-access memory (DRAM), static random-access memory (SRAM), double-data-rate random-access memory (DDR RAM), or other random-access solid-state memory devices. In some examples, memory 320 includes non-volatile memory, such as one or more magnetic disk storage devices, optical disk storage devices, flash memory devices, or other non-volatile solid-state storage devices. Memory 320 optionally includes one or more storage devices remotely located from the one or more processing units 302. Memory 320 comprises a non-transitory computer-readable storage medium. In some examples, memory 320 or the non-transitory computer-readable storage medium of memory 320 stores the following programs, modules and data structures, or a subset thereof, including an optional operating system 330 and three-dimensional (3D) experience module 340.

Operating system 330 includes instructions for handling various basic system services and for performing hardware-dependent tasks.

In some examples, three-dimensional (3D) experience module 340 is configured to manage and coordinate the user experience provided by computer system 101 with respect to a three-dimensional scene. For example, 3D experience module 340 is configured to obtain data corresponding to the three-dimensional scene (e.g., data generated by computer system 101 and/or data from data obtaining unit 341 discussed below) to cause computer system 101 to perform actions for the user (e.g., provide suggestions, display content, etc.) based on the data. To that end, in various examples, 3D experience module 340 includes data obtaining unit 341, tracking unit 342, coordination unit 346, data transmission unit 348, and digital assistant (DA) unit 350. In some examples, 3D experience module 340 further includes at least some of: user information unit 502 (FIG. 5), assistive action unit 505 (FIG. 5), reminders unit 902 (FIG. 9), scene description unit 1202 (FIG. 12), scene selection unit 1208 (FIG. 12), mode selection unit 1502 (FIG. 15), and mode action unit 1504 (FIG. 15).

In some examples, data obtaining unit 341 is configured to obtain data (e.g., presentation data, interaction data, sensor data, location data, etc.) from one or more of user-facing component 120, input devices 125, output devices 155, sensors 190, and peripheral devices 195. To that end, in various examples, data obtaining unit 341 includes instructions and/or logic therefor, and heuristics and metadata therefor.

In some examples, tracking unit 342 is configured to map scene 105 and to track the position/location of the user (and/or of a portable device being held or worn by the user). To that end, in various examples, tracking unit 342 includes instructions and/or logic therefor, and heuristics and metadata therefor.

In some examples, tracking unit 342 includes eye tracking unit 343. Eye tracking unit 343 includes instructions and/or logic for tracking the position and movement of the user's gaze (or more broadly, the user's eyes, face, or head) using data obtained from eye tracking device 130. In some examples, eye tracking unit 343 tracks the position and movement of the user's gaze relative to a physical environment, relative to the user (e.g., the user's hand, face, or head), relative to a device worn or held by the user, and/or relative to content displayed by user-facing component 120.

Eye tracking device 130 is controlled by eye tracking unit 343 and includes various hardware and/or software components configured to perform eye tracking techniques. For example, eye tracking device 130 includes at least one eye tracking camera (e.g., infrared (IR) or near-IR (NIR) cameras) and illumination sources (e.g., IR or NIR light sources such as an array or ring of LEDs) that emit light (e.g., IR or NIR light) towards the user's eyes. The eye tracking cameras may be pointed towards the user's eyes to receive reflected IR or NIR light from the light sources directly from the eyes, or alternatively may be pointed towards mirrors that reflect IR or NIR light from the eyes to the eye tracking cameras. Eye tracking device 130 optionally captures images of the user's eyes (e.g., as a video stream captured at 60-120 frames per second), analyzes the images to generate eye tracking information, and communicates the eye tracking information to eye tracking unit 343. In some examples, two eyes of the user are separately tracked by respective eye tracking cameras and illumination sources. In some examples, only one eye of the user is tracked by a respective eye tracking camera and illumination sources.

In some examples, tracking unit 342 includes hand tracking unit 344. Hand tracking unit 344 includes instructions and/or logic for tracking, using hand tracking data obtained from hand tracking device 140, the position of one or more portions of the user's hands and/or motions of one or more portions of the user's hands. Hand tracking unit 344 tracks the position and/or motion relative to scene 105, relative to the user (e.g., the user's head, face, or eyes), relative to a device worn or held by the user, relative to content displayed by user-facing component 120, and/or relative to a coordinate system defined relative to the user's hand. In some examples, hand tracking unit 344 analyzes the hand tracking data to identify a hand gesture (e.g., a pointing gesture, a pinching gesture, a clenching gesture, and/or a grabbing gesture) and/or to identify content (e.g., physical content or virtual content) corresponding to the hand gesture, e.g., content selected by the hand gesture. In some examples, a hand gesture is an air gesture. An air gesture is a gesture that is detected without the user touching (or independently of) an input element that is part of a device (e.g., computer system 101, one or more input devices 125, hand tracking device 140, and/or device 500) and is based on detected motion of a portion (e.g., the head, one or more arms, one or more hands, one or more fingers, and/or one or more legs) of the user's body through the air including motion of the user's body relative to an absolute reference (e.g., an angle of the user's arm relative to the ground or a distance of the user's hand relative to the ground), relative to another portion of the user's body (e.g., movement of a hand of the user relative to a shoulder of the user, movement of one hand of the user relative to another hand of the user, and/or movement of a finger of the user relative to another finger or portion of a hand of the user), and/or absolute motion of a portion of the user's body (e.g., a tap gesture that includes movement of a hand in a predetermined pose by a predetermined amount and/or speed, or a shake gesture that includes a predetermined speed or amount of rotation of a portion of the user's body).

Hand tracking device 140 is controlled by hand tracking unit 344 and includes various hardware and/or software components configured to perform hand tracking and hand gesture recognition techniques. For example, hand tracking device 140 includes one or more image sensors (e.g., one or more IR cameras, 3D cameras, depth cameras, and/or color cameras, etc.) that capture three-dimensional information (e.g., a depth map) that represents a hand of a human user. The one or more image sensors capture the hand images with sufficient resolution to distinguish the fingers and their respective positions. In some examples, the one or more image sensors project a pattern of spots onto an environment that includes the hand and capture an image of the projected pattern. In some examples, the one or more image sensors capture a temporal sequence of the hand tracking data (e.g., captured three-dimensional information and/or captured images of the projected pattern) and hand tracking device 140 communicates the temporal sequence of the hand tracking data to hand tracking unit 344 for further analysis, e.g., to identify hand gestures, hand poses, and/or hand movements.

In some examples, hand tracking device 140 includes one or more hardware input devices configured to be worn and/or held by (or be otherwise attached to) one or more respective hands of the user. In such examples, hand tracking unit 344 tracks the position, pose, and/or motion of a user's hand based on tracking the position, pose, and/or motion of the respective hardware input device. Hand tracking unit 344 tracks the position, pose, and/or motion of the respective hardware input device optically (e.g., via one or more image sensors) and/or based on data obtained from sensor(s) (e.g., accelerometer(s), magnetometer(s), gyroscope(s), inertial measurement unit(s), and the like) contained within the hardware input device. In some examples, the hardware input device includes one or more physical controls (e.g., button(s), touch-sensitive surface(s), pressure-sensitive surface(s), knob(s), joystick(s), and the like). In some examples, instead of, or in addition to, performing a particular function in response to detecting a respective type of hand gesture, computer system 101 analogously performs the particular function in response to a user input that selects a respective physical control of the hardware input device. For example, computer system 101 interprets a pinching hand gesture input as a selection of an in-focus element and/or interprets selection of a physical button of the hardware device as a selection of the in-focus element.

In some examples, coordination unit 346 is configured to manage and coordinate the experience provided to the user via user-facing component 120, one or more output devices 155, and/or one or more peripheral devices 195. To that end, in various examples, coordination unit 346 includes instructions and/or logic therefor, and heuristics and metadata therefor.

In some examples, data transmission unit 348 is configured to transmit data (e.g., presentation data, location data, etc.) to user-facing component 120, one or more input devices 125, output devices 155, sensors 190, and/or peripheral devices 195. To that end, in various examples, data transmission unit 348 includes instructions and/or logic therefor, and heuristics and metadata therefor.

Digital assistant (DA) unit 350 includes instructions and/or logic for providing DA functionality to computer system 101. DA unit 350 therefore provides a user of computer system 101 with DA functionality while they and/or their avatar are present in a three-dimensional scene. For example, the DA performs various tasks related to the three-dimensional scene, either proactively or upon request from the user. In some examples, DA unit 350 performs at least some of: converting speech input into text (e.g., using speech-to-text (STT) processing unit 352); identifying a user's intent expressed in a natural language input received from the user; actively eliciting and obtaining information needed to fully satisfy the user's intent (e.g., by disambiguating terms in the natural language input and/or by obtaining information from data obtaining unit 341); determining a task flow for fulfilling the identified intent; and executing the task flow to fulfill the identified intent.

In some examples, DA unit 350 includes natural language processing (NLP) unit 351 configured to identify the user intent. NLP unit 351 takes the n-best candidate text representation(s) (word sequence(s) or token sequence(s)) generated by STT processing unit 352 and attempts to associate each of the candidate text representations with one or more user intents recognized by the DA. In some examples, a user intent represents a task that can be performed by the DA and has an associated task flow implemented in task flow processing unit 353. The associated task flow is a series of programmed actions and steps that the DA takes in order to perform the task. The scope of a DA's capabilities is, in some examples, dependent on the number and variety of task flows that are implemented in task flow processing unit 353, or in other words, on the number and variety of user intents the DA recognizes.

In some examples, once NLP unit 351 identifies a user intent based on the user request, NLP unit 351 causes task flow processing unit 353 to perform the actions required to satisfy the user request. For example, task flow processing unit 353 executes the task flow corresponding to the identified user intent to perform a task to satisfy the user request. In some examples, performing the task includes causing computer system 101 to provide output (e.g., graphical, audio, and/or haptic output) indicating the performed task.

In some examples, 3D experience module 340 accesses one or more artificial intelligence (AI) models that are configured to perform various functions described herein. The AI model(s) are at least partially implemented on controller 110 (e.g., implemented locally on a single device, or implemented in a distributed manner) and/or controller 110 communicates with one or more external services that provide access to the AI model(s). In some examples, one or more components and functions of DA unit 350, user information unit 502 (FIG. 5), assistive action unit 505 (FIG. 5), reminders unit 902 (FIG. 9), scene description unit 1202 (FIG. 12), scene selection unit 1208 (FIG. 12), mode selection unit 1502 (FIG. 15), and/or mode action unit 1504 (FIG. 15) are implemented using the AI model(s). For example, speech-to-text processing unit 352 and natural language processing unit 351 implement separate respective AI models to facilitate and/or perform speech recognition and natural language processing, respectively.

In some examples, the AI model(s) are based on (e.g., are, or are constructed from) one or more foundation models. Generally, a foundation model is a deep learning neural network that is trained based on a large training dataset and that can adapt to perform a specific function. Accordingly, a foundation model aggregates information learned from a large (and optionally, multimodal) dataset and can adapt to (e.g., be fine-tuned to) perform various downstream tasks that the foundation model may not have been originally designed to perform. Examples of such tasks include language translation, speech recognition, user intent determination (e.g., natural language processing), sentiment analysis, computer vision tasks (e.g., object recognition and scene understanding), question answering, image generation, audio generation, and generation of computer-executable instructions. Foundation models can accept a single type of input (e.g., text data) or accept multimodal input, such as two or more of text data, image data, video data, audio data, sensor data, and the like. In some examples, a foundation model is prompted to perform a particular task by providing it with a natural language description of the task. Example foundation models include the GPT-n series of models (e.g., GPT-1, GPT-2, GPT-3, and GPT-4), DALL-E, and CLIP from Open AI, Inc., Florence and Florence-2 from Microsoft Corporation, BERT from Google LLC, and LLaMA, LLaMA-2, and LLaMA-3 from Meta Platforms, Inc.

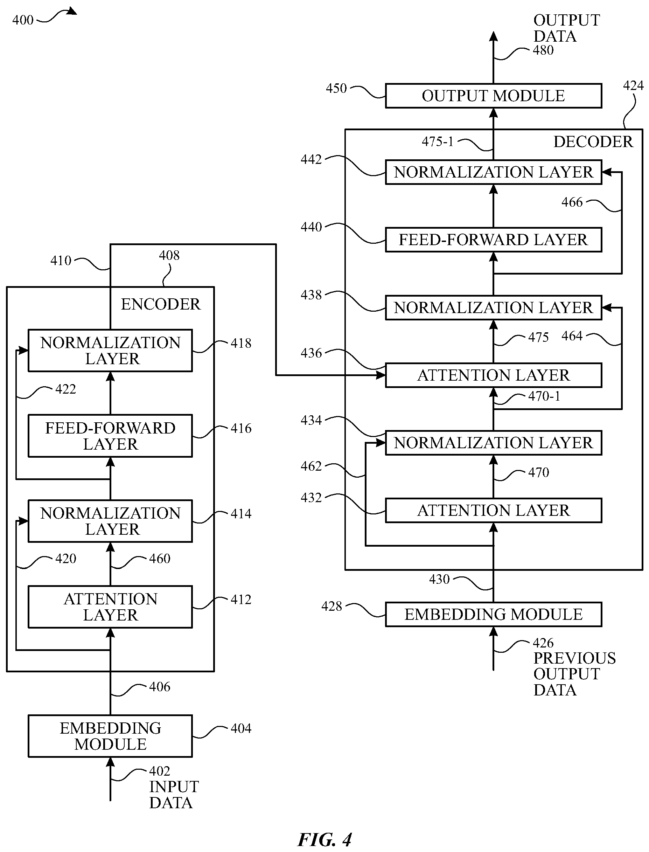

FIG. 4 illustrates architecture 400 for a foundation model, according to some examples. Architecture 400 is merely exemplary and various modifications to architecture 400 are possible. Accordingly, the components of architecture 400 (and their associated functions) can be combined, the order of the components (and their associated functions) can be changed, components of architecture 400 can be removed, and other components can be added to architecture 400. Further, while architecture 400 is transformer-based, one of skill in the art will understand that architecture 400 can additionally or alternatively implement other types of machine learning models, such as convolutional neural network (CNN)-based models and recurrent neural network (RNN)-based models.

Architecture 400 is configured to process input data 402 to generate output data 480 that corresponds to a desired task. Input data 402 includes one or more types of data, e.g., text data, image data, video data, audio data, sensor (e.g., motion sensor, biometric sensor, temperature sensor, and the like) data, computer-executable instructions, structured data (e.g., in the form of an XML file, a JSON file, or another file type), and the like. In some examples, input data 402 includes data from data obtaining unit 341. Output data 480 includes one or more types of data that depend on the task to be performed. For example, output data 480 includes one or more of: text data, image data, audio data, and computer-executable instructions. It will be appreciated that the above-described input and output data types are merely exemplary and that architecture 400 can be configured to accept various types of data as input and generate various types of data as output. Such data types can vary based on the particular function the foundation model is configured to perform.

Architecture 400 includes embedding module 404, encoder 408, embedding module 428, decoder 424, and output module 450, the functions of which are now discussed below.

Embedding module 404 is configured to accept input data 402 and parse input data 402 into one or more token sequences. Embedding module 404 is further configured to determine an embedding (e.g., a vector representation) of each token that represents each token in embedding space, e.g., so that similar tokens have a closer distance in embedding space and dissimilar tokens have a further distance. In some examples, embedding module 404 includes a positional encoder configured to encode positional information into the embeddings. The respective positional information for an embedding indicates the embedding's relative position in the sequence. Embedding module 404 is configured to output embedding data 406 of the input data by aggregating the embeddings for the tokens of input data 402.

Encoder 408 is configured to map embedding data 406 into encoder representation 410. Encoder representation 410 represents contextual information for each token that indicates learned information about how each token relates to (e.g., attends to) each other token. Encoder 408 includes attention layer 412, feed-forward layer 416, normalization layers 414 and 418, and residual connections 420 and 422. In some examples, attention layer 412 applies a self-attention mechanism on embedding data 406 to calculate an attention representation (e.g., in the form of a matrix) of the relationship of each token to each other token in the sequence. In some examples, attention layer 412 is multi-headed to calculate multiple different attention representations of the relationship of each token to each other token, where each different representation indicates a different learned property of the token sequence. Attention layer 412 is configured to aggregate the attention representations to output attention data 460 indicating the cross-relationships between the tokens from input data 402. In some examples, attention layer 412 further masks attention data 460 to suppress data representing the relationships between select tokens. Encoder 408 then passes (optionally masked) attention data 460 through normalization layer 414, feed-forward layer 416, and normalization layer 418 to generate encoder representation 410. Residual connections 420 and 422 can help stabilize and shorten the training and/or inference process by respectively allowing the output of embedding module 404 (i.e., embedding data 406) to directly pass to normalization layer 414 and allowing the output of normalization layer 414 to directly pass to normalization layer 418.

While FIG. 4 illustrates that architecture 400 includes a single encoder 408, in other examples, architecture 400 includes multiple stacked encoders configured to output encoder representation 410. Each of the stacked encoders can generate different attention data, which may allow architecture 400 to learn different types of cross-relationships between the tokens and generate output data 410 based on a more complete set of learned relationships.

Decoder 424 is configured to accept encoder representation 410 and previous output embedding 430 as input to generate output data 480. Embedding module 428 is configured to generate previous output embedding 430. Embedding module 428 is similar to embedding module 404. Specifically, embedding module 428 tokenizes previous output data 426 (e.g., output data 480 that was generated by the previous iteration), determines embeddings for each token, and optionally encodes positional information into each embedding to generate previous output embedding 430.

Decoder 424 includes attention layers 432 and 436, normalization layers 434, 438, and 442, feed-forward layer 440, and residual connections 462, 464, and 466. Attention layer 432 is configured to output attention data 470 indicating the cross-relationships between the tokens from previous output data 426. Attention layer 432 is similar to attention layer 412. For example, attention layer 432 applies a multi-headed self-attention mechanism on previous output embedding 430 and optionally masks attention data 470 to suppress data representing the relationships between select tokens (e.g., the relationship(s) between a token and future token(s)) so architecture 400 does not consider future tokens as context when generating output data 480. Decoder 424 then passes (optionally masked) attention data 470 through normalization layer 434 to generate normalized attention data 470-1.

Attention layer 436 accepts encoder representation 410 and normalized attention data 470-1 as input to generate encoder-decoder attention data 475. Encoder-decoder attention data 475 correlates input data 402 to previous output data 426 by representing the relationship between the output of encoder 408 and the previous output of decoder 424. Attention layer 436 allows decoder 424 to increase the weight of the portions of encoder representation 410 that are learned as more relevant to generating output data 480. In some examples, attention layer 436 applies a multi-headed attention mechanism to encoder representation 410 and to normalized attention data 470-1 to generate encoder-decoder attention data 475. In some examples, attention layer 436 further masks encoder-decoder attention data 475 to suppress the cross-relationships between select tokens.

Decoder 424 then passes (optionally masked) encoder-decoder attention data 475 through normalization layer 438, feed-forward layer 440, and normalization layer 442 to generate further-processed encoder-decoder attention data 475-1. Normalization layer 442 then provides further-processed encoder-decoder attention data 475-1 to output module 450. Similar to residual connections 420 and 422, residual connections 462, 464, and 466 may stabilize and shorten the training and/or inference process by allowing the output of a corresponding component to directly pass as input to a corresponding component.

While FIG. 4 illustrates that architecture 400 includes a single decoder 424, in other examples, architecture 400 includes multiple stacked decoders each configured to learn/generate different types of encoder-decoder attention data 475. This allows architecture 400 to learn different types of cross-relationships between the tokens from input data 402 and the tokens from output data 480, which may allow architecture 400 to generate output data 480 based on a more complete set of learned relationships.

Output module 450 is configured to generate output data 480 from further-processed encoder-decoder attention data 475-1. For example, output module 450 includes one or more linear layers that apply a learned linear transformation to further-processed encoder-decoder attention data 475-1 and a softmax layer that generates a probability distribution over the possible classes (e.g., words or symbols) of the output tokens based on the linear transformation data. Output module 450 then selects (e.g., predicts) an element of output data 480 based on the probability distribution. Architecture 400 then passes output data 480 as previous input data 426 to embedding module 428 to begin another iteration of the training and/or inference process for architecture 400.

It will be appreciated that various different AI models can be constructed based on the components of architecture 400. For example, some large language models (LLMs) (e.g., GPT-2 and GPT-3) are decoder-only (e.g., include one or more instances of decoder 424 and do not include encoder 408), some LLMs (e.g., BERT) are encoder-only (include one or more instances of encoder 408 and do not include decoder 424), and other foundation models (e.g., Florence-2) are encoder-decoder (e.g., include one or more instances of encoder 408 and include one or more instances of decoder 424). Further, it will be appreciated that the foundation models constructed based on the components of architecture 400 can be fine-tuned based on reinforcement learning techniques and training data specific to a particular task for optimization for the particular task, e.g., extracting relevant semantic information from image and/or video data, generating code, generating music, providing suggestions relevant to a specific user, and the like.

FIG. 5 illustrates additional components of 3D experience module 340, according to some examples. Specifically, FIG. 5 illustrates a block diagram of user information unit 502 and assistive action unit 505, the functions of which are now discussed below with respect to FIGS. 5, 6, and 7A-7C.

User information unit 502 is configured to obtain (e.g., determine) personal information about a particular user of computer system 101. User information unit 502 is further configured to manage personal knowledge base 503 based on the obtained personal information, e.g., by updating, adding, and/or removing personal information from personal knowledge base 503. User information unit 502 is further configured to provide selected personal information to assistive action unit 505.

Assistive action unit 505 is configured to generate one or more actions with respect to a three-dimensional scene in which the user and/or their avatar is present. Assistive action unit 505 generates the actions based on personal information from user information unit 502 and/or data from data obtaining unit 341. Because the generated actions can account for the user's personal information, computer system 101 may perform actions that are more relevant and/or helpful to the user, thereby improving a user's experience with respect to a three-dimensional scene.

Personal knowledge base 503 is configured to store personal information about the user. Example personal information includes contacts data (e.g., the contact information of the user and/or of other users), email data, message data, calendar data, phone data (e.g., call logs and voicemails), location data, reminders data, photos, videos, health information, workout information, financial information, web search history, navigation history, media data (e.g., songs and audiobooks), information related to a user's home (e.g., the states of the user's home appliances and home security systems and/or home security system access information), information about the user's daily routine, journal entries, notes, the respective locations of items in the user's home, items the user typically keeps in their home, the user's favorite items, and the like.

In some examples, user information unit 502 determines the personal information based on monitoring user interactions with software applications of computer system 101. For example, user information unit 502 determines information about a user's daily routine by monitoring usage of various applications (e.g., messaging applications, workout applications, navigation applications, news applications, etc.) throughout the day. Based on such monitoring, the personal information indicates, for example, that the user typically browses the internet for 10-15 minutes in the morning, then sends a text message to a particular contact, then uses a navigation application to navigate to their workplace, and then goes on a run in the afternoon. As another example, user information unit 502 determines information about the user's schedule and the user's friends by monitoring usage of a messaging application. For example, based on messages indicating that the user and their friend agree to meet at a particular restaurant, user information unit 502 determines a "friend" association between the user and their friend, determines an association between the restaurant meeting and the friend, and determines an association between the messaging application and the friend.

In some examples, user information unit 502 determines personal information from data that represents a scene, e.g., a three-dimensional scene. Data that represents a three-dimensional scene, referred to herein as "scene data, "includes data detected and/or generated with respect to the three-dimensional scene. For example, the scene data includes at least some of: an image of the scene, a video of the scene, audio data for audio present in the scene (e.g., audio spoken by the user and/or audio from other sources within the scene), display data for displayed components of the scene, motion data that describes the motion of a user and/or a device present in the scene, light data describing the lighting level of the scene, temperature data describing the temperature of the scene, a time and/or date when the scene occurs, a location of the scene, and the like. Accordingly, in some examples, the scene data includes at least some of the data obtained by data obtaining unit 341. In some examples, computer system 101 obtains at least a portion of the scene data while the user (and/or at least a portion of computer system 101) are present within the corresponding scene. In some examples, computer system 101 generates at least a portion of the scene data for a mixed or virtual reality scene within which an avatar of the user is present.

In some examples, user information unit 502 selectively updates personal knowledge base 503 to include personal information determined from the scene data. In some examples, the personal information includes object information for one or more objects that are present within a scene. Example object information includes one or more of: an identity of the object, a location of the object, a location of the object relative to another object (e.g., in a drawer, on a table, below a shelf, or the like), a location of the object relative to another location (e.g., in the bedroom, in the kitchen, in the office, or the like), a relationship between the user and the object (e.g., an object that the user typically keeps in their home, an object that is important to the user, an object that the user frequently uses, or the like), and a quantity of the object possessed by the user (e.g., how many instances of the object remain in the user's inventory). In some examples, user information unit 502 determines the object information based on processing the scene data using computer vision techniques.

In some examples, user information unit 502 updates personal knowledge base 503 based on the personal information (e.g., object information) if one or more update conditions, discussed below, are met. In some examples, if particular update condition(s) are not met, user information unit 502 does not determine the personal information and/or forgoes updating personal knowledge base 503 based on the personal information. The particular set of update conditions required to be met (or not met) to update (or to forgo updating) personal knowledge base 503 can vary across different implementations of the examples described herein.

In some examples, an update condition is met when the scene data is detected during an object enrollment session. Accordingly, personal knowledge base 503 can be updated based on object information for objects detected during an object enrollment session. In some examples, when a user device (e.g., device 700, 1000, 1300, or 1600) initiates an object enrollment session, the user device provides output to inform the user that object information will be determined and/or logged, e.g., for objects detected in the scene and/or for objects present within the scene that are selected by the user. During an example object enrollment session, a user moves around a scene (e.g., their house) while wearing or holding the user device and image sensors of the user device detect one or more objects within the scene. In some examples, during the object enrollment session, the user device outputs a prompt to indicate detection of an object, e.g., "flashlight detected in the living room drawer," "cereal detected in the pantry," and/or "milk detected in the refrigerator." In some examples, user information unit 502 selectively updates personal knowledge base 503 based on object information for objects that the user selects during the object enrollment session (e.g., via gaze input, via hand gesture input, and/or via speech input) and does not update personal knowledge base 503 based on objects that the user does not select.

In some examples, an update condition is met based on a location of the user device when the scene data is detected. Accordingly, in some examples, personal knowledge base 503 is updated based on scene data for predetermined location(s) and personal knowledge base 503 is not updated based on scene data for other locations. In some examples, the user device enables the user to define the predetermined locations for which they would like corresponding scene information to affect their personal knowledge base. Examples of such predefined locations include the user's home, the user's workplace, and/or other locations the user frequents. In this manner, user information unit 502 can update personal knowledge base 503 based on information for objects in locations that are relevant to the user and may forgo updating personal knowledge base 503 based on objects in less relevant locations.

In some examples, an update condition is met based on a frequency with which the same information is determined from scene data. For example, personal knowledge base 503 is updated based on scene data if user information unit 502 frequently (e.g., above a frequency threshold such as once a day, twice a day, once a week, and the like) determines the same object information from scene data. As one example, if user information unit 502 frequently determines, based on scene data, that a particular brand of cereal is in the user's pantry, user information unit 502 updates personal knowledge base 503 to include object information specifying that the particular cereal brand is a typical pantry item. As another example, if user information unit 502 frequently determines, based on scene data, that a user cooks a recipe with a particular set of ingredients, user information unit 502 updates personal knowledge base 503 to include object information that specifies the user's personal version of the recipe.

In some examples, an update condition is met when the user device receives a user input that requests to log information about an object. For example, the user device receives a natural language input requesting to log information about an object and another input (e.g., gaze input, hand gesture input, and/or speech input) that selects the object, e.g., concurrently receives the natural language input and the other input and/or receives the inputs within a predetermined duration of each other. In response to receiving the inputs, user information unit 502 determines corresponding object information and updates personal knowledge base 503 to include the object information. In this manner, personal knowledge base 503 is updated in response to commands such as "remember that I like this cereal" or "this is my car key and it is an important object."

FIG. 6 illustrates a portion of personal knowledge graph 600, according to some examples. Personal knowledge graph 600 can include other portions (not shown) that represent different types of personal information. In some examples, personal knowledge base 503 is implemented as personal knowledge graph 600. In some examples, user information unit 502 is configured to construct (e.g., generate) personal knowledge graph 600 to represent (e.g., store) the personal information obtained and/or determined according to the techniques discussed above.

Personal knowledge graph 600 includes portion 602 and portion 604. Portion 602 includes information determined from user interactions with an application of a user device, e.g., as discussed above. Portion 604 includes information determined from scene data, e.g., as discussed above. While FIG. 6 illustrates that portions 602 and 604 are not directly connected, in some examples, portions 602 and 604 are indirectly connected via one or more edges and/or nodes of personal knowledge graph 600.

Nodes 605-615 of personal knowledge graph 600 represent personal information categories or a value for a corresponding personal information category. The edges of personal knowledge graph 600 represent a relationship between the corresponding nodes. For example, for portion 602, node 605 represents the category of the user's friends, and the edges between node 605 and nodes 606 and 607 respectively represent that the user's friends include "friend #1" and "friend #2." The edges between node 606 and nodes 608 and 609 respectively represent a restaurant meeting with "friend #1" and a messaging application interaction with "friend #1." For portion 604, node 610 represents the category of "food" and the edges between node 610 and nodes 611 and 612 respectively represent that "pantry items" and "personal recipes" are subcategories of the "food" category. The edges between node 611 and nodes 613 and 614 respectively represent that "cereal brand #1" and "chip brand #1" are typical items in the user's pantry. The edge between node 612 and node 615 represents that a particular cream pasta recipe is one of the user's personal recipes.

In some examples, a node of personal knowledge graph 600 is associated with (e.g., includes or includes a reference to) metadata for the value of the node. For example, node 608 includes details (e.g., time, date, and location) of the restaurant meeting with friend #1, node 609 includes details (e.g., message content, message date, and message time) about the message application interaction with "friend #1", node 615 includes the ingredients for and/or the instructions for preparing the user's cream pasta recipe, node 613 includes the amount of (e.g., number of boxes of) "cereal brand #1" in the user's pantry, and node 614 includes the amount of (e.g., number of bags of) "chip brand #1" in the user's pantry.

Returning to FIG. 5, user information unit 502 is configured to infer a user intent with respect to a scene. A user intent with respect to a scene indicates a predicted and/or detected user action with respect to the scene, e.g., action the user will perform and/or an action the user is currently performing. User information unit 502 infers the user intent based on the scene data that represents the scene, e.g., based on image data, video data, and/or audio data.

In some examples, user information unit 502 infers the user intent with respect to a scene using AI model 504. AI model 504 is based on (e.g., is, or is constructed from) a foundation model, as discussed above with respect to FIG. 4. In some examples, user information unit 502 constructs a prompt that requests AI model 504 to infer the user intent. User information unit 502 then provides the prompt and the scene data to AI model 504 for AI model 504 to generate, e.g., using computer vision techniques, the inference about the user intent. Examples of the prompt include natural language prompts such as "guess what the user is doing based on this data," "predict the user's intent based on this data," or "given this data, what is the user about to do?".

In some examples, user information unit 502 is configured to select a portion of personal knowledge base 503 based on the inference about the user intent. The selected portion of personal knowledge base 503 includes personal information determined as relevant to the inferred user intent. In some examples, user information unit 502 selects the portion of personal knowledge base 503 by matching an attribute of the inferred user intent with a category (and/or value) within personal knowledge graph 600. For example, user information unit 502 issues a query to personal knowledge base 503 that instructs to return information from personal knowledge graph 600 that is relevant to (e.g., stored under) one or more categories that match the attribute. In some examples, user information unit 502 matches the attribute of the user intent with the category (and/or the value) based on semantic searching techniques, e.g., to require a threshold semantic closeness for the match but without requiring an exact match. As one example, based on scene data indicating that a user is in the kitchen and pouring cereal into a bowl, AI model 504 infers a user intent of preparing to eat. By matching the intent attribute of "preparing to eat" with the "food" category of personal knowledge graph 600 (as represented by node 610), user information unit 502 obtains the personal information stored in association with the "food" category (e.g., the items typically kept in the user's pantry and the user's personal cream pasta recipe) as represented by nodes 613, 614, and 615.

In some examples, user information unit 502 selects the portion of personal knowledge base 503 using an AI model, e.g., AI model 504 or a different AI model. For example, user information unit 502 constructs a prompt to the AI model that requests the AI model to predict a portion of personal knowledge graph 600 that is relevant to the inferred user intent. User information unit 502 then provides the prompt, personal knowledge graph 600, and the inferred user intent to the AI model for the AI model to output the selected portion of personal knowledge graph 600. In some examples, the prompt includes a natural language request to predict the portion of personal knowledge graph 600, e.g., "select a portion of this knowledge graph that is relevant to this inferred intent" or "based on this inferred intent, extract relevant data from this knowledge graph."

Assistive action unit 505 is configured to receive the selected portion of personal knowledge base 503 and generate an action based on the selected portion and scene data. In some examples, the scene represented by the scene data and the scene based on which the portion of personal knowledge base 503 is selected are the same scene. In other examples, the scene represented by the scene data and the scene based on which the portion is selected are different scenes, e.g., scenes thar occur at different times. In some examples, the generated actions are in the form of respective computer-executable instructions, that when executed, cause the user device to perform the respective actions.

Assistive action unit 505 includes AI model 506. In some examples, AI model 504 and AI model 506 are the same AI model. In other examples, AI model 504 and AI model 506 are different AI models. For example, AI model 504 is optimized to infer a user intent with respect to a scene and AI model 506 is optimized to generate actions based on the scene data. Like AI model 504, AI model 506 is based on a foundation model, as discussed above with respect to FIG. 4. In some examples, AI models 504 and 506 are large language models (LLMs).

In some examples, assistive action unit 505 generates the action by constructing a prompt that instructs AI model 506 to predict an action based on the selected portion of personal knowledge base 503 and the scene data. Assistive action unit 505 then provides the prompt, the selected portion of personal knowledge base 503, and the scene data to AI model 506 for AI model 506 to generate the action. FIGS. 7A-7C below illustrate examples of generating and performing the action.

In some examples, assistive action unit 505 causes the user device to perform the generated action if the action satisfies a set of action criteria. For example, the action satisfies the action criteria if the action has a confidence score above a threshold and/or is the top-ranked action generated by assistive action unit 505. If the action does not satisfy the set of action criteria, the user device forgoes performing the action. In this manner, the user device may not perform actions that are predicted to have low assistive value to a user.

In examples where user information unit 502 cannot select a portion of personal knowledge base 503 based on the inferred user intent with respect to a scene, assistive action unit 505 generates the action based on the scene data, e.g., without using a selected portion of personal knowledge base 503. Accordingly, to generate actions, assistive action unit 505 does not require a selected portion of personal knowledge base 503 as input. User information unit 502 may be unable to select a portion of personal knowledge base 503 if no category or value within personal knowledge graph 600 sufficiently matches an attribute of the inferred user intent and/or if AI model 504 cannot select a portion of personal knowledge base 503 with sufficient confidence.

FIGS. 7A-7C illustrate device 700 performing actions based on data that represents a scene, according to some examples. The actions are generated according to the techniques discussed above with respect to FIGS. 5 and 6.

FIGS. 7A-7C illustrate a user's view of respective three-dimensional scenes. In some examples, device 700 provides at least a portion of the scenes of FIGS. 7A-7C. For example, the scenes are XR scenes that include at least some virtual elements generated by device 700. In other examples, the scenes are physical scenes.

Device 700 implements at least some of the components of computer system 101. For example, device 700 includes one or more sensors (e.g., front-facing image sensors) configured to detect data representing the respective scene of FIGS. 7A-7C. In some examples, device 700 is an HMD (e.g., an XR headset or smart glasses) and FIGS. 7A-7C illustrate the user's view of the respective scenes via the HMD. For example, FIGS. 7A-7C illustrate physical scenes viewed via pass-through video, physical scenes viewed via direct optical see-through, or virtual scenes viewed via one or more displays of the HMD. In other examples, device 700 is another type of device, such as a smart watch, a smart phone, a tablet device, a laptop computer, a projection-based device, or a pair of headphones or earbuds.

The examples of FIGS. 7A-7C illustrate that the user and device 700 are present within the respective scenes of FIGS. 7A-7C. For example, the scenes are physical or extended reality scenes and the user and device 700 are physically present within the scenes. In other examples, an avatar of the user is present within the scenes. For example, when the scenes are virtual reality scenes, the avatar of the user is present within the virtual reality scenes.

In FIG. 7A, the user is present within the scene of their home kitchen. The user has poured all of the cereal in box 702 into bowl 704 so that box 702 is now empty.

In FIG. 7A, device 700 detects scene data representing the scene of FIG. 7A, e.g. image data and/or video data. The scene data indicates that the user has poured cereal into bowl 704 and that box 702 of "cereal brand #1" is empty. Based on the scene data, user information unit 502 determines an inference about a user intent with respect to the scene, e.g., an inference that the user is about to eat. After determining the inference about the user intent, user information unit 502 selects a portion of personal knowledge base 503 based on the inference. For example, user information unit 502 selects, from personal knowledge graph 600, data stored in association with the "food" category represented by node 610. The data specifies that "cereal brand #1" is an item typically in the user's pantry and the number of boxes of "cereal brand #1" remaining in the user's pantry. User information unit 502 selects the data from personal knowledge graph 600 based on a semantic match between the inferred user intent and the "food" category of personal knowledge graph 600.

In FIG. 7A, assistive action unit 505 generates an action based on the scene data and the data selected from personal knowledge graph 600. For example, based on (1) scene data indicating that box 702 of "cereal brand #1" is empty, (2) selected data indicating that "cereal brand #1" is typically in the user's pantry, and (3) selected data indicating that no further boxes of "cereal brand #1" remain in the user's pantry, assistive action unit 505 generates the action of adding "cereal brand #1" to the user's shopping list. Device 700 performs the action by adding "cereal brand #1" to the user's shopping list and provides audio output 706 "I've added cereal brand #1 to your shopping list." In another example, consider that the selected data instead indicates that more boxes of "cereal brand #1" remain in the user's pantry. In such examples, assistive action unit 505 may not generate the action in response to detection of the scene data, so device 700 does not provide audio output 706.

FIG. 7B illustrates another example of device 700 performing actions based on data that represents a scene. In FIG. 7B, the user is present within a scene of their home kitchen. The home kitchen includes refrigerator 708. Device 700 detects scene data for the scene. The scene data includes the user's speech input 710 "the kids want cream pasta for dinner" and image data that represents the kitchen. Based on the scene data, user information unit 502 determines an inference about a user intent with respect to the scene, e.g., an inference that the user is about to make cream pasta. After determining the inference about the user intent, user information unit 502 selects a portion of personal knowledge base 503 based on the inference. For example, user information unit 502 selects, from personal knowledge graph 600, data that specifies the user's personal recipe for cream pasta. User information unit 502 selects the data based on a semantic match between the inferred user intent and the value of node 615.

In FIG. 7B, assistive action unit 505 generates an action based on the scene data and the selected data from personal knowledge graph 600. For example, based on (1) scene data that indicates the user is in their kitchen and that includes audio data for speech input 710 and (2) selected data specifying the user's personal recipe for cream pasta, assistive action unit 505 generates actions to assist the user with locating the ingredients for their personal cream pasta recipe. For example, the actions include providing audio output 712 "ok, let's check the fridge to see if you have what you need" and detecting scene data to determine if the ingredients are present in detected scene data.

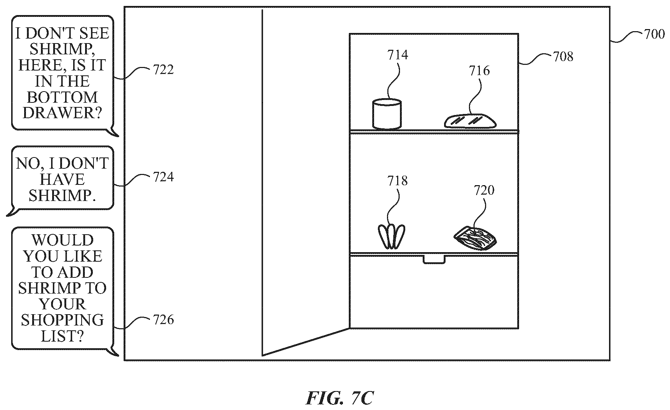

In FIG. 7C, based on audio output 712, the user has opened their refrigerator 708. Refrigerator 708 includes cream 714, chicken 716, spinach 718, and pasta 720. However, the user's personal cream pasta recipe uses cream, shrimp (instead of chicken), spinach, and pasta. Device 700 detects scene data that represents the scene of FIG. 7C. Assistive action unit 505 generates, based on the scene data and the ingredients for the user's personal cream pasta recipe, an action of asking the user whether they have shrimp. Device 700 performs the action to provide audio output 722 "I don't see shrimp here, is it in the bottom drawer?".

In FIG. 7C, after device 700 provides audio output 722, device 700 receives the user's speech input 724 "no, I don't have shrimp." Based on speech input 724 and the ingredients for the user's personal cream pasta recipe, assistive action unit 505 determines that the user does not have shrimp and generates the action of asking if the user would like to add shrimp to their shopping list. Device 700 performs the action to provide audio output 726 "would you like to add shrimp to your shopping list?".

If device 700 receives an affirmative user reply to audio output 726, device 700 performs the action of adding shrimp to the user's shopping list. If device 700 receives a negative user reply to audio output 726, assistive action unit 505 generates, based on detected scene data, other actions to assist the user with making cream pasta. For example, assistive action unit 505 generates the action to output "I see chicken in your fridge, would you like to make cream pasta with chicken instead?".

Additional descriptions regarding FIGS. 5, 6, and 7A-7C are provided below in reference to method 800 described below with respect to FIG. 8.

FIG. 8 is a flow diagram of a method 800 for performing actions with respect to a three-dimensional scene, according to some examples. In some examples, method 800 is performed at a computer system (e.g., computer system 101 in FIG. 1, device 700, device 1000, device 1300, or device 1600) that is in communication with one or more image sensors (e.g., RGB camera(s), infrared camera(s), and/or depth camera(s)). In some examples, the computer system is in communication with one or more other types of sensor devices (e.g., light sensors, depth sensors, tactile sensors, orientation sensors, proximity sensors, temperature sensors, location sensors, motion sensors, velocity sensors, audio sensors, and/or biometric sensors). In some examples, method 800 is governed by instructions that are stored in a non-transitory (or transitory) computer-readable storage medium and that are executed by one or more processors of a computer system, such as the one or more processing unit(s) 302 of computer system 101 (e.g., controller 110 in FIG. 1). In some examples, the operations of method 800 are distributed across multiple computer systems, e.g., a computer system and a separate server system. Some operations in method 800 are, optionally, combined, the orders of some operations are, optionally, changed, and some operations are, optionally, omitted.

At block 802, first data that represents a first scene (e.g., the scene of any one of FIGS. 7A or 7B) (e.g., image data and/or video data, where the image data and/or the video data represent at least a portion of the scene around the user, e.g., in front of the user) is detected via at least the one or more image sensors.

At block 806, in response to (804) detecting, via at least the one or more image sensors, the first data that represents the first scene and after an inference about a user intent with respect to the first scene is determined (e.g., by user information unit 502) based on the first data that represents the first scene, it is determined (e.g., by user information unit 502) whether a portion of (e.g., not the entirety of) a knowledge base (e.g., personal knowledge base 503) is selected (e.g., by user information unit 502) based on the inference about the user intent with respect to the first scene. The knowledge base is personal to a user of the computer system.

At block 808, in accordance with a determination that the portion of the knowledge base is selected based on the inference about the user intent with respect to the first scene, it is determined (e.g., by assistive action unit 505) whether a first action satisfies a set of action criteria. The first action is generated (e.g., by assistive action unit 505) based on the selected portion of the knowledge base.

At block 812, in accordance with a determination that the first action satisfies the set of action criteria, the first action is performed (e.g., as illustrated in FIG. 7A via audio output 706, in FIG. 7B via audio output 712, and/or in FIG. 7C via audio outputs 722 and 726).

At block 814, in accordance with a determination that the first action does not satisfy the set of action criteria, the first action is not performed.

At block 810, in accordance with a determination that a portion of the knowledge base is not selected based on the inference about the user intent with respect to the first scene, it is determined (e.g., by assistive action unit 505) whether a second action satisfies the set of action criteria. The second action is generated (e.g., by assistive action unit 505) based on the first data that represents the first scene.

At block 816, in accordance with a determination that the second action satisfies the set of action criteria, the second action is performed.

At block 818, in accordance with a determination that the second action does not satisfy the set of action criteria, the second action is not performed.

In some examples, the knowledge base (e.g., personal knowledge base 503) is updated (e.g., by user information unit 502) to include information determined from one or more user interactions with one or more applications (e.g., software applications) of the computer system.

In some examples, method 800 further includes detecting second data that represents a second scene, wherein: in accordance with a determination that a set of criteria is satisfied: the knowledge base is updated (e.g., by user information unit 502) based on (e.g., to include) information (e.g., object information discussed above with respect to FIG. 5) determined from the second data that represents the second scene; and in accordance with a determination that the set of criteria is not satisfied, the knowledge base is not updated based on the second data that represents a second scene. In some examples, the second data that represents the second scene includes image data that represents the second scene. In some examples, the second data that represents the second scene includes audio data that represents the second scene.

In some examples, the set of criteria include a first criterion that is satisfied when the second data is detected during an object enrollment session. In some examples, the set of criteria include another criterion that is satisfied when an object is determined to be selected by a user (e.g., via gaze input, hand gesture, input, and/or speech input) during the object enrollment session, wherein the object is present within the second scene, and wherein the information determined from the second data (e.g., object information) corresponds to the object.

In some examples, the set of criteria include a second criterion that is satisfied based on a location of the computer system when the second data that represents the second scene is detected.

In some examples, the information determined from the second data that represents the second scene includes first information (e.g., object information) and the set of criteria include a third criterion that is satisfied based on a frequency with which the same first information is determined from respective scene data that represents one or more respective scenes (e.g., one or more respective scenes that each occur before the second scene).

In some examples, the knowledge base includes a knowledge graph (e.g., personal knowledge graph 600) that is personal to the user of the computer system.

In some examples, the portion of the knowledge base is selected (e.g., by user information unit 502) by matching an attribute of the user intent with respect to the first scene with a category within the knowledge graph.

In some examples, the first data that represents the first scene includes image data that represents the first scene and audio data that represents the first scene. In some examples, the inference about the user intent with respect to the first scene is determined based on the image data that represents the first scene and the audio data that represents the first scene.

In some examples, determining the inference about the user intent with respect to the first scene includes constructing a prompt for a large language model (e.g., AI model 504 (e.g., a large language model (LLM))), wherein the prompt requests the large language model to predict the user intent with respect to the first scene based on the first data that represents the first scene.

In some examples, generating the first action includes constructing a second prompt for a second large language model (e.g., AI model 506 (e.g., an LLM)), wherein the second prompt requests the second large language model to predict an action based on the selected portion of the knowledge base and the first data that represents the first scene.

In some examples, performing the first action includes: detecting, via at least the one or more image sensors, third data that represents a third scene (e.g., the scene of FIG. 7C); and providing an output (e.g., audio output 722) that corresponds to assisting the user of the computer system with locating an item for a personalized procedure (e.g., a personalized recipe and/or another personalized procedure for performing a task), wherein the output is determined based on the third data that represents the third scene.

In some examples, performing the first action includes in accordance with a determination (e.g., by assistive action unit 505) that the user of the computer system does not possess the item for the personalized procedure, performing a third action (e.g., providing audio output 726) that corresponds to assisting the user of the computer system with obtaining the item.

In some examples, the selected portion of the knowledge base (e.g., node 615 and/or the personal data stored in, or in association with, node 615) specifies the item for the personalized procedure.

In some examples, the first data that represents the first scene (e.g., the scene of FIG. 7A) indicates that a second item (e.g., box 702 of "cereal brand #1") is depleted and performing the first action includes assisting the user of the computer system with replenishing the second item (e.g., by providing audio output 706).

In some examples, the selected portion of the knowledge base (e.g., node 613 and/or the personal data stored in, or in association with, node 613) specifies the second item.

FIG. 9 illustrates additional components of 3D experience module 340, according to some examples. Specifically, FIG. 9 illustrates a block diagram of reminders unit 902, the functions of which are now discussed below with respect to FIGS. 9, 10A-10G, and 11.

Generally, reminders unit 902 is configured to manage reminders based on scene data, e.g., the scene data discussed above with respect to FIG. 5. Reminders unit 902 includes reminder setting unit 904 and reminder triggering unit 906. Reminder setting unit 904 is configured to set a reminder based on scene data that represents a first scene and reminder triggering unit 906 is configured to trigger the reminder based on scene data that represents a second scene that occurs after (e.g., later in time than) the first scene. The first scene and the second scene can correspond to a same location or can respectively correspond to different locations.

In some examples, reminder setting unit 904 sets a reminder that is generated based on scene data if a confidence score for the reminder exceeds a threshold score and forgoes setting the reminder if the confidence score is below the threshold score. In some examples, reminder setting unit 904 implements AI model 905 to generate and score reminders based on scene data.

AI model 905 is based on (e.g., is, or is constructed from) a foundation model, as discussed above with respect to FIG. 4. In some examples, reminder setting unit 904 constructs a prompt that requests AI model 905 to generate a reminder based on input scene data. Reminder setting unit 904 then provides the prompt and the scene data to AI model 905 for AI model 905 to generate and score one or more reminders. In some examples, a generated reminder is in the form of computer-executable instructions, that when executed, cause computer system 101 to set the reminder.

The confidence score of the reminder is based on the content of the scene data. In some examples, the scene data includes detected audio data and the audio data includes a request (e.g., a user request) to set the reminder. Accordingly, such audio data can positively affect the confidence score of a generated reminder. For example, reminder setting unit 904 can set a reminder based on speech inputs such as "remind me when [x] expires" or "remind me if I leave the house without [x]" (where [x] refers to an object that is present within the scene).

In some examples, the scene data includes detected user gaze data, e.g., from eye tracking device 130 and/or eye tracking unit 343. The user gaze data includes respective locations of the user's gaze with respect to the scene, e.g., indicates the portion(s) of the scene that the user gazes at and/or indicates the respective duration(s) of the user gaze at the portion(s). In this manner, reminder setting unit 904 can set a reminder related to an object that is present within the scene based on determining that the user gazes at the object. For example, a detected user gaze at an object can positively affect a confidence score of a reminder that relates to the object.

In some examples, the scene data includes detected hand gesture data, e.g., from hand tracking device 140 and/or hand tracking unit 344. The hand gesture data includes information about a hand gesture performed with respect to the scene, e.g., a type of the hand gesture, locations of the hand while the hand gesture is performed, and object(s) within the scene that are selected by (e.g., pointed at, picked up by, or otherwise selected by) the hand gesture. In this manner, reminder setting unit 904 can set a reminder related to an object based on determining that a hand gesture selects the object. For example, detecting that a user picks up and/or sets down an object can positively affect a confidence score of a reminder that relates to the object.

In some examples, the scene data (e.g., image data and/or video data) indicates that an object is placed at (e.g., in) a location in the scene. In some examples, an object within the scene (e.g., a pantry, a refrigerator, a table, or a shelf) is the placement location. In some examples, the placement of the object can positively affect the confidence score of a reminder related to the object. For example, reminder setting unit 904 sets a reminder about an object based on placement of the object in a refrigerator or sets a reminder to check in on a status of an object based on placement of the object on a table.

In some examples, reminder setting unit 904 sets a reminder related to an object based on an obtained relationship between the user and the object. The relationship specifies, for example, that the user typically keeps the object in their home, the object is important to the user, the user frequently uses the object, and/or that the user typically keeps the object in a particular location. The relationship is obtained (e.g., selected) from personal knowledge base 503, e.g., as discussed above with respect to FIGS. 5, 6, and 7A-7C. More specifically, the relationship is obtained from personal knowledge base 503 based on an inferred user intent with respect to the scene, e.g., based on searching personal knowledge base 503 for personal information relevant to the inferred user intent. Accordingly, in some examples, an obtained relationship between the user and the object (e.g., specifying that the object is important to the user) can positively affect the confidence score of a reminder related to the object.

In some examples, reminder setting unit 904 sets the reminder without receiving user input that explicitly requests to set the reminder, e.g., without receiving a natural language input that explicitly requests to set a reminder and without receiving, e.g., via a user interface, other input that explicitly requests to set the reminder. Thus, reminder setting unit 904 may intelligently and proactively set reminders by analyzing data that represents various scenes that the user is present within.

In some examples, based on scene data, reminder triggering unit 906 determines a triggering score for a reminder set by reminder setting unit 904. In some examples, reminder triggering unit 906 triggers (e.g., causes a user device to provide) a reminder if a triggering score for the reminder exceeds a threshold score and forgoes triggering the reminder if the threshold score is below the threshold score. In some examples, reminder triggering unit 906 implements AI model 907 to determine triggering scores for respective reminders.

Like AI model 905, AI model 907 is based on (e.g., is or is constructed from) a foundation model, as discussed above with respect to FIG. 4. In some examples, AI model 905 and AI model 907 are the same AI model. In other examples, AI model 905 and AI model 907 are different AI models. For example, AI model 905 is optimized to generate reminders based on scene data and AI model 907 is optimized to determine when to trigger previously set reminders based on later scene data. In some examples, reminder triggering unit 906 constructs a prompt that requests AI model 907 to determine which of the previously set reminders should be triggered based on the scene data. Reminder triggering unit 906 then provides the prompt, the set of previously set reminders, and the scene data to AI model 907 for AI model 907 to generate the respective triggering scores for the reminders. In some examples, AI model 905 and AI model 907 are LLMs.

The triggering score for a reminder is based on the content of the scene data, e.g., image data and/or video data. In one example, the scene data indicates a location where an object was previously placed. Such scene data can positively affect the triggering score for a reminder related to that object. For example, reminder triggering unit 906 triggers a reminder related to an object that was placed at a particular location based on later scene data indicating that the particular location is again in the user's view. In another example, the scene data indicates a user action performed with respect to a location where the object was previously placed, e.g., a user action performed while the user is at or near the location (e.g., a physical grabbing action, a physical opening action, or the like). Such scene data can positively affect the triggering score for a reminder related to that object. For example, reminder triggering unit 906 triggers a reminder related to an object previously placed in a refrigerator based on later scene data indicating that the user physically opened the refrigerator. In yet another example, the scene data indicates that an object previously placed at a location is present at (e.g., in) the same location. Such scene data can positively affect a triggering score for a reminder related to that object. For example, reminder triggering unit 906 triggers a reminder related to an object previously placed in a refrigerator based on later scene data indicating that the object remains in the refrigerator.

In yet another example, the scene data indicates that a particular object is present in the scene. Such scene data can positively affect the triggering score for a reminder related to the particular object. For example, reminder triggering unit 906 triggers a reminder to buy more of an object based on later scene data indicating that the object is present in a grocery store. In yet another example, the scene data indicates a type of location associated with a particular object, e.g., a type of location where the particular object is typically located, such as a grocery store, a hardware store, a particular section of the grocery store, or the like. Such scene data can positively affect the triggering score for a reminder related to the object. For example, reminder triggering unit 906 triggers a reminder to buy more of a grocery object based on later scene data indicating that the user is in a grocery store.

In yet another example, the scene data indicates that a user has departed a location associated with a particular object, e.g., a location where the object can typically be obtained. Such scene data can positively affect the triggering score for a reminder related to the object. For example, reminder triggering unit 906 triggers a reminder to buy more of a grocery object based on scene data indicating that the user has left a grocery store. In yet another example, the scene data indicates that the user has departed the location associated with the particular object without obtaining the object. Such scene data can positively affect the triggering score for a reminder related to the object. For example, reminder triggering unit 906 triggers a reminder to buy more of a grocery object based on scene data indicating that the user has left a grocery store without obtaining the grocery object.

In some examples, the above discussed components and functions of reminders unit 902 are replaced by (e.g., implemented within) assistive action unit 505. For example, AI model 506 of assistive action unit is configured to generate and score reminders according to the techniques discussed above and AI model 506 is also configured to trigger reminders according to the techniques above. In other words, in some examples, the actions generated by AI model 506 include actions to set reminders based on scene data and to score and/or trigger previously set reminders based on later scene data.

FIGS. 10A-10G illustrate device 1000 setting reminders based on data that represents a scene and triggering a reminder based on data that represents a later scene, according to some examples. The reminders are set and triggered according to the techniques discussed with respect to FIG. 9.

FIGS. 10A-10G illustrate a user's view of respective three-dimensional scenes. In some examples, device 1000 provides at least a portion of the scenes of FIGS. 10A-10G. For example, the scenes are XR scenes that include at least some virtual elements generated by device 1000. In other examples, the scenes are physical scenes.

Device 1000 implements at least some of the components of computer system 101. For example, device 1000 includes one or more sensors (e.g., front-facing image sensors) configured to detect data representing the respective scene of FIGS. 10A-10G. In some examples, device 1000 is an HMD (e.g., an XR headset or smart glasses) and FIGS. 10A-10G illustrate the user's view of the respective scenes via the HMD. For example, FIGS. 10A-10G illustrate physical scenes viewed via pass-through video, physical scenes viewed via direct optical see-through, or virtual scenes viewed via one or more displays of the HMD. In other examples, device 1000 is another type of device, such as a smart watch, a smart phone, a tablet device, a laptop computer, a projection-based device, or a pair of headphones or earbuds.

The examples of FIGS. 10A-10G illustrate that the user and device 1000 are present within the respective scenes of FIGS. 10A-10G. For example, the scenes are physical or extended reality scenes and the user and device 1000 are physically present within the scenes. In other examples, an avatar of the user is present within the scenes. For example, when the scenes are virtual reality scenes, the avatar of the user is present within the virtual reality scenes.

In FIG. 10A, the user is present within the scene of their home kitchen. The user picks up yogurt 1002 via hand gesture 1004, gazes at yogurt 1002 (as indicated by gaze location 1006), and provides speech input 1008 "remind me when this expires." The displayed indicator for gaze location 1006 is not present in the scene and is for illustrative purposes only.

In FIG. 10A, device 1000 detects scene data representing the scene of FIG. 10A. The scene data includes audio data for speech input 1008, gaze data that represents gaze location 1006, an indication of detected hand gesture 1004 that picks up yogurt 1002, and image data that specifies the expiration date of yogurt 1002, i.e., June 10, 2024. Based on the scene data, reminder setting unit 904 sets a reminder according to the techniques discussed above. For example, reminder setting unit 904 prompts AI model 905 to generate a reminder based on the input scene data and in response, AI model 905 generates a reminder about the expiration date of yogurt 1002. The reminder has a sufficiently high confidence score for reminder setting unit 904 to set the reminder. Device 1000 then sets the reminder and provides audio output 1010 "ok, I'll remind you."

FIG. 10B illustrates an alternative manner of setting the reminder about the expiration date of yogurt 1002. In FIG. 10B, the user is present within the scene of their home kitchen. The user places yogurt 1002 in refrigerator 1014 via hand gesture 1012.

In FIG. 10B, device 1000 detects scene data representing the scene of FIG. 10B. The scene data includes image data that specifies the expiration date of yogurt 1002 and that indicates yogurt 1002 is placed in refrigerator 1014. The scene data further indicates detected hand gesture 1012 that placed yogurt 1002 in refrigerator 1014. Based on the scene data, reminder setting unit 904 generates and sets a reminder associated with the expiration date of yogurt 1002. Device 1000 further provides audio output 1016 "I'll remind you when this expires."

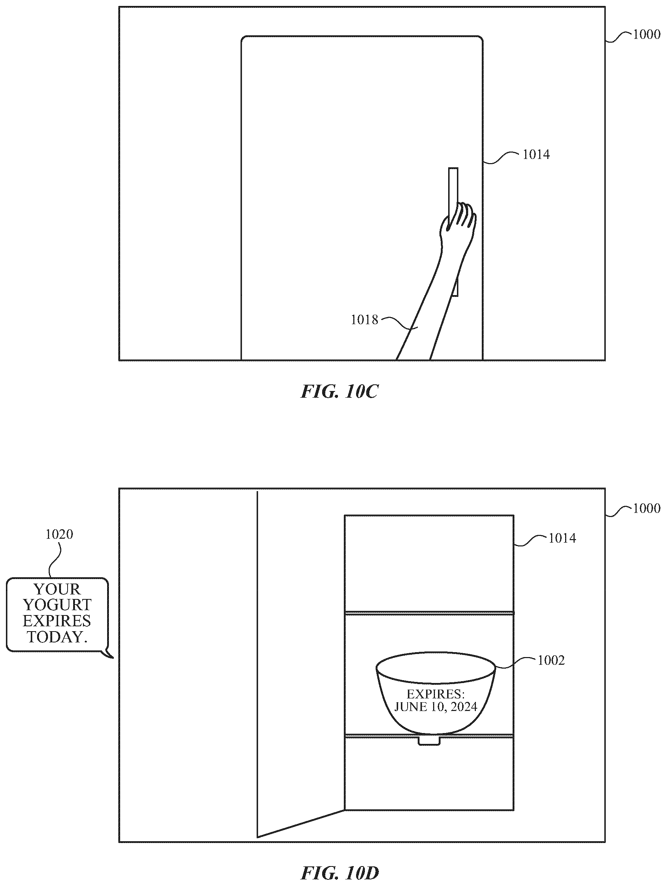

FIGS. 10C-10D illustrate device 1000 triggering the reminder that was set according to the description of FIG. 10A or FIG. 10B. The scenes of FIGS. 10C-10D occur after the scenes of FIGS. 10A and 10B. For example, the scenes of FIGS. 10A and 10B occur before the June 10, 2024, expiration date of yogurt 1002 and the scenes of FIGS. 10C-10D occur on the June 10, 2024, expiration date of yogurt 1002.

In FIG. 10C, the user is present within the scene of their home kitchen. The user is about to open refrigerator 1014 via hand gesture 1018. In FIG. 10D, the user has opened refrigerator 1014 via hand gesture 1018 and yogurt 1002 is in view. Device 1000 detects scene data representing the scenes of FIGS. 10C-10D. The scene data includes image data that indicates refrigerator 1014 (e.g., indicates the same location where yogurt 1002 was previously placed), that indicates the user action of opening refrigerator 1014, and that indicates yogurt 1002 is present in refrigerator 1014. Based on the scene data and the current date of June 10, 2024, reminder triggering unit 906 triggers the reminder about the expiration date of yogurt 1002. For example, device 1000 provides audio output 1020 "your yogurt expires today."

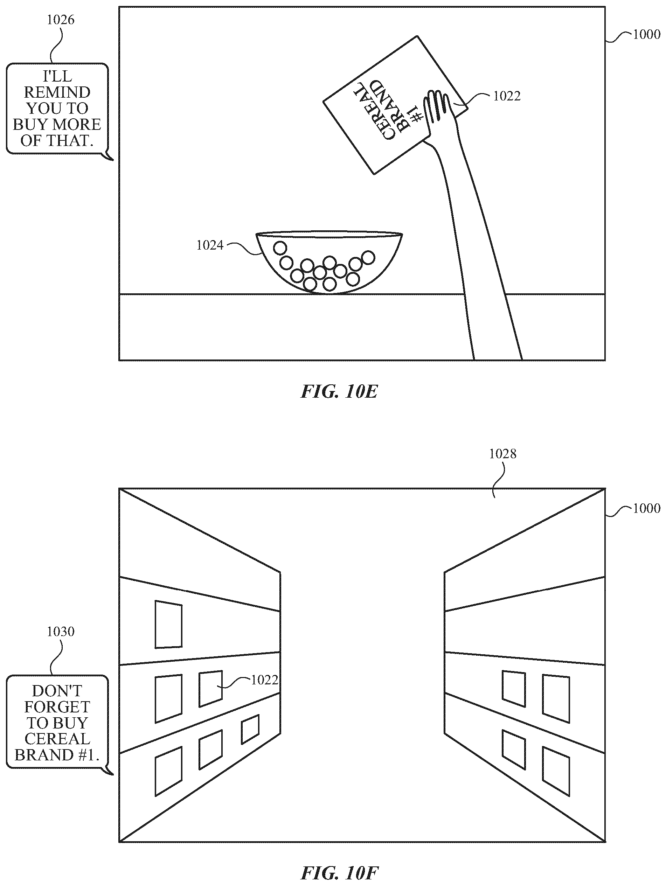

FIG. 10E illustrates another example of setting a reminder based on data that represents a scene. In FIG. 10E, the user is present within the scene of their home kitchen. The user pours all of box 1022 of "cereal brand #1" into bowl 1024 and box 1022 is empty. Device 1000 detects scene data representing the scene of FIG. 10E. The scene data includes image data indicating that box 1022 is empty. Based on the scene data, device 1000 obtains information from personal knowledge base 503 (FIG. 5), e.g., according to the techniques discussed above with respect to FIGS. 5-6. The information indicates a relationship between the user and box 1022, specifically that the user typically keeps at least one box 1022 of "cereal brand #1" in their pantry and that no boxes of "cereal brand #1" remain in the user's pantry. Based on the scene data and the information obtained from personal knowledge base 503, reminder setting unit 904 sets a reminder for the user to buy more of "cereal brand #1." Device 1000 therefore provides audio output 1026 "I'll remind you to buy more of that."

FIG. 10F illustrates device 1000 triggering the reminder that was set according to the description of FIG. 10E. In FIG. 10F, the user is present within the scene of cereal aisle 1028 of a grocery store. Cereal aisle 1028 includes box 1022 of "cereal brand #1". Device 1000 detects scene data representing the scene of FIG. 10F. The scene data includes image data indicating cereal aisle 1028 (e.g., a location where box 1022 of "cereal brand #1" is typically found) and indicating that box 1022 of "cereal brand #1" is present in the scene. Based on the scene data and the reminder to buy more of "cereal brand #1," reminder triggering unit 906 triggers the reminder. For example, device 1000 provides audio output 1030 "don't forget to buy cereal brand #1."

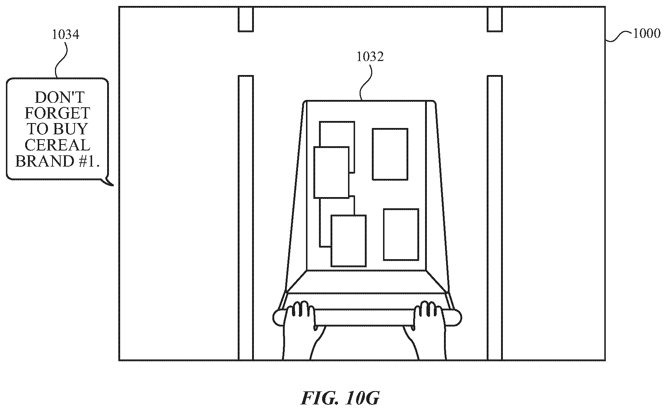

FIG. 10G illustrates an alternative manner in which device 1000 triggers the reminder that was set according to the description of FIG. 10E. In FIG. 10G, the user is present within the scene of a parking lot of a grocery store. The user has departed the grocery store and is pushing shopping cart 1032 in the parking lot. Shopping cart 1032 includes various items that the user purchased from the grocery store. Device 1000 detects scene data representing the scene of FIG. 10G. The scene data includes image data indicating that the user has departed the grocery store and that box 1022 of "cereal brand #1" is not in shopping cart 1032. Based on the scene data and the reminder to buy more of "cereal brand #1," reminder triggering unit 906 triggers the reminder. For example, device 1000 provides audio output 1034 "don't forget to buy cereal brand #1."

As illustrated in FIGS. 10A-10G, triggering a reminder based on the scene data may allow device 1000 to present the reminder to the user under more appropriate circumstances. For example, in FIGS. 10A-10D, instead of triggering a reminder about an expiration date at a fixed time during the expiration date, device 1000 triggers the reminder at a time (during the expiration date) that is based on the three-dimensional scene that the user is present within. Similarly, in FIGS. 10E-10G, instead of triggering the reminder to buy more of an object at a fixed time, device 1000 triggers the reminder at a time that is based on the three-dimensional scene that the user is present within.

Additional descriptions regarding FIGS. 9 and 10A-10G are provided below in reference to method 1100 described below with respect to FIG. 11.

FIG. 11 is a flow diagram of a method 1100 for generating and setting reminders with respect to a three-dimensional scene, according to some examples. In some examples, method 1100 is performed at a computer system (e.g., computer system 101 in FIG. 1, device 700, device 1000, device 1300, or device 1600) that is in communication with one or more image sensors (e.g., RGB camera(s), infrared camera(s), and/or depth camera(s)). In some examples, the computer system is in communication with one or more other types of sensor devices (e.g., light sensors, depth sensors, tactile sensors, orientation sensors, proximity sensors, temperature sensors, location sensors, motion sensors, velocity sensors, audio sensors, and/or biometric sensors). In some examples, method 1100 is governed by instructions that are stored in a non-transitory (or transitory) computer-readable storage medium and that are executed by one or more processors of a computer system, such as the one or more processing unit(s) 302 of computer system 101 (e.g., controller 110 in FIG. 1). In some examples, the operations of method 1100 are distributed across multiple computer systems, e.g., a computer system and a separate server system. Some operations in method 1100 are, optionally, combined, the orders of some operations are, optionally, changed, and some operations are, optionally, omitted.

At block 1102, first data that represents a first scene (e.g., the scene of FIG. 10A, 10B, or FIG. 10E) (e.g., image data and/or video data, where the image data and/or the video data represent at least a portion of the scene around the user, e.g., in front of the user) is detected via at least the one or more image sensors.

At block 1106, in response to (1104) detecting, via at least the one or more image sensors, the first data that represents the first scene: it is determined (e.g., by reminder setting unit 904) whether the first data that represents the first scene satisfies a set of reminder setting criteria (e.g., whether a confidence score for a reminder exceeds a threshold confidence score).

At block 1108, in accordance with a determination that the first data that represents the first scene satisfies the set of reminder setting criteria (e.g., that the confidence score of the reminder exceeds a threshold confidence score), a reminder is set (e.g., by reminder setting unit 904) based on the first data that represents the first scene (e.g., as illustrated in FIGS. 10A, 10B, or 10E).

At block 1110, in accordance with a determination that the first data that represents the first scene does not satisfy the set of reminder setting criteria (e.g., that the confidence score of the reminder does not exceed a threshold confidence score), the reminder is not set based on the first data that represents the first scene.

At block 1112, after setting the reminder based on the first data that represents the first scene, second data that represents a second scene (e.g., the scene of FIG. 10C, 10D, 10F, and/or 10G) (e.g., image data and/or video data, where the image data and/or the video data represent at least a portion of the scene around the user, e.g., in front of the user) is detected via at least the one or more image sensors. The second scene occurs after the first scene.

At block 1116, in response to (1114) detecting, via at least the one or more image sensors, the second data that represents the second scene, it is determined (e.g., by reminder triggering unit 906) whether the second data that represents the second scene satisfies a set of triggering criteria for the reminder (e.g., whether a triggering score for the reminder exceeds a threshold triggering score).

At block 1118, in accordance with a determination that the second data that represents the second scene satisfies a set of triggering criteria for the reminder (e.g., that the triggering score for the reminder exceeds a threshold triggering score), the reminder is triggered (e.g., as illustrated in FIGS. 10D, 10F, or 10G).

At block 1120, in accordance with a determination that the second data that represents the second scene does not satisfy a set of triggering criteria for the reminder (e.g., that the triggering score for the reminder does not exceed a threshold triggering score), the reminder is not triggered.

In some examples, the first scene and the second scene correspond to a same location (e.g., the location of the scenes of FIGS. 10A, 10B, 10C, and 10D).

In some examples, the first scene corresponds to a first location (e.g., the location of FIG. 10E) and the second scene corresponds to a second location (e.g., the location of FIG. 10F or 10G) different from the first location.

In some examples, the computer system is in communication with one or more audio sensors. In some examples, detecting, via at least the one or more image sensors, the first data that represents the first scene further includes detecting, via the one or more audio sensors, audio data (e.g., speech input 1008) that represents the first scene, wherein the audio data includes a request to set the reminder. In some examples, the set of reminder setting criteria is satisfied based on the audio data that includes the request to set the reminder.

In some examples, setting the reminder based on the first data that represents the first scene includes providing an audio output (e.g., audio output 1010, 1016, or 1026) that indicates that the reminder has been set.

In some examples, the reminder is set without receiving a user input that explicitly requests to set the reminder.

In some examples, the reminder corresponds to a first object (e.g., 1002 or 1022) that is present within the first scene.

In some examples, detecting, via at least the one or more image sensors, the first data that represents the first scene includes detecting data that represents a user's gaze (e.g., as indicated by gaze location 1006). In some examples, the set of reminder setting criteria is satisfied based on a determination that the user's gaze is directed to the first object.

In some examples, detecting, via at least the one or more image sensors, the first data that represents the first scene includes detecting a hand gesture (e.g., 1004 or 1012). In some examples, the set of reminder setting criteria is satisfied based on a determination that the hand gesture corresponds to a selection of the first object.

In some examples, the first data that represents the first scene indicates the first object (e.g., 1022). In some examples, relationship between a user of the computer system (e.g., as indicated by node 613) and the first object is obtained from a knowledge base (e.g., personal knowledge base 503) that is personal to the user of the computer system. In some examples, the set of reminder setting criteria is satisfied based on the obtained relationship between the user of the computer system and the first object.

In some examples, the relationship between the user of the computer system and the first object is obtained (e.g., by user information unit 502) from the knowledge base based on a user intent with respect to the first scene, wherein the user intent is determined (e.g., by user information unit 502) by processing the first data that represents the first scene.

In some examples, the first data that represents the first scene (e.g., the scene of FIG. 10B) indicates (e.g., shows and/or depicts) that the first object (e.g., 1002) is placed at (e.g., in) a third location (e.g., in refrigerator 1014) and the set of reminder setting criteria is satisfied based on the first object being placed at the third location (e.g., based on a determination that the first object is placed at the third location).

In some examples, the second data that represents the second scene (e.g., the scene of FIGS. 10C and/or 10D) indicates (e.g., shows and/or depicts) the third location and the set of triggering criteria for the reminder is satisfied based on the second data indicating the third location (e.g., based on a determination that the second data indicates the third location).

In some examples, the second data that represents the second scene indicates (e.g., shows and/or depicts) an action (e.g., hand gesture 1018 that opens refrigerator 1014) performed with respect to the third location, wherein the action is performed by a user of the computer system, and the set of triggering criteria for the reminder is satisfied based on the second data indicating the action performed with respect to the third location (e.g., based on a determination that the second data indicates the action performed with respect to the third location).

In some examples, the second data that represents the second scene (e.g., the scene of FIG. 10D) indicates (e.g., shows and/or depicts) that the first object (e.g., 1002) is present at the third location (e.g., in refrigerator 1014) and the set of triggering criteria for the reminder is satisfied based on the second data indicating that the first object is present at the third location (e.g., based on a determination that the second data indicates that the first object is present at the third location).

In some examples, the reminder corresponds to an expiration date of the first object (e.g., 1002).

In some examples, the reminder corresponds to replenishing the first object (e.g., 1022).

In some examples, the second data that represents the second scene (e.g., the scene of FIG. 10F) indicates (e.g., shows and/or depicts) that the first object (e.g., 1022) is present in the second scene and the set of triggering criteria for the reminder is satisfied based on the second data indicating that the first object is present in the second scene (e.g., based on a determination that the second data indicates that the first object is present in the second scene).

In some examples, the second data that represents the second scene (e.g., the scene of FIG. 10F) indicates (e.g., shows and/or depicts) a type of location (e.g., 1028) associated with the first object (e.g., 1022) and the set of triggering criteria for the reminder is satisfied based on the second data indicating the type of location associated with the first object (e.g., based on a determination that the second data indicates the type of location associated with the first object).

In some examples, the second data that represents the second scene (e.g., the scene of FIG. 10G) indicates (e.g., shows and/or depicts) that a user of the computer system has departed a location (e.g., the location of FIG. 10F) associated with the first object (e.g., 1022) and the set of triggering criteria for the reminder is satisfied based on the second data indicating that the user has departed the location associated with the first object (e.g., based on a determination that the second data indicates that the user has departed the location associated with the first object).

In some examples, the second data that represents the second scene (e.g., the scene of FIG. 10G) indicates (e.g., shows and/or depicts) that the user of the computer system has departed the location associated with the first object (e.g., 1022) without obtaining the first object and the set of triggering criteria for the reminder is satisfied based on the second data indicating that the user has departed the location associated with the first object without obtaining the first object (e.g., based on a determination that the second data indicates that the user has departed the location associated with the first object without obtaining the first object).

FIG. 12 illustrates additional components of 3D experience module 340, according to some examples. Specifically, FIG. 12 illustrates a block diagram of scene description unit 1202 and scene selection unit 1208. Generally, scene description unit 1202 is configured to determine whether to describe a three-dimensional scene, e.g., whether to provide audio and/or displayed output that describes various features present within the three-dimensional scene. Scene selection unit 1208 is configured to select a portion of a three-dimensional scene to be described. The functions of scene description unit 1202 and scene selection unit 1208 are now discussed in greater detail below with respect to FIGS. 12, 13A-13G, and 14.

Scene description unit 1202 can use various different types of information to determine whether to describe a scene, e.g., to initiate a world description accessibility mode on a user device (e.g., device 700, 1000, 1300, or 1600). For example, scene description unit 1202 determines whether to describe a scene based on the scene data (e.g., image data and/or video data) that represents the scene itself.

In some examples, scene description unit 1202 determines whether to describe a scene based on user data obtained before the scene data is detected, referred to herein as "previous context data." In some examples, the previous context data includes scene description settings implemented within settings unit 1204 of scene description unit 1202. Settings unit 1204 is configured to store and manage scene description settings of a user device (e.g., device 700, 1000, 1300, or 1600). In some examples, the scene description settings are activated/deactivated by the user via a user interface of the user device. The scene description settings specify the conditions under which a scene is to be described. Example scene description settings include to always describe a scene (e.g., describe a current scene when the device is powered on and being worn (or otherwise used) by the user), to describe a scene when navigating (e.g., describe a scene when the user device is in a navigation session in which the user device performs actions to assist with navigating to a destination location), to describe a scene when the user is moving about (e.g., to describe a scene when the user is detected to be walking, running, or otherwise moving within a scene), and to describe a scene when hazards (e.g., traffic, walking surface hazards, and/or other objects that impede a user's motion) are detected within the scene.

In some examples, scene description unit 1202 processes scene data in conjunction with scene description settings to determine whether to describe a scene. For example, scene description unit 1202 determines to describe a scene based on processing the scene data to determine that the user is moving about and based on a scene description setting that specifies to describe a scene if the user is moving about. As another example, scene description unit 1202 determines to describe a scene based on processing scene data and based on a scene description setting that specifies to describe the scene if hazards are detected within the scene.

In some examples, the previous context data includes a received natural language input that requests for assistance with navigation to a destination location, e.g., "help me navigate to [x]." Such information may be relevant to the determination of whether to describe a scene. For example, because the natural language input specifies the destination location, scene description unit 1202 determines to describe a scene based on scene data (e.g., images and/or videos) that depict objects relevant to navigating to the destination location (e.g., street signs and/or objects near or at the destination location).

In some examples, the previous context data includes information from one or more applications (e.g., notes applications, messaging applications, calendar applications, and the like) of the user device. Such application information may be relevant for the determination of whether to describe a scene. For example, like the natural language input, the application information can specify a user's destination location. In some examples, the application information is selected from personal knowledge base 503 according to the techniques discussed above with respect to FIGS. 5 and 6. More specifically, the application information is selected from personal knowledge base 503 (e.g., from personal knowledge graph 600) based on an inference about a user intent with respect to the scene. For example, based on scene data that depicts a user leaving their home, user information unit 502 infers that is user is about to go somewhere. Based on the inference about the user intent, user information unit 502 selects information from personal knowledge base 503 that specifies the destination location(s) the user is likely to go, e.g., meeting location(s) determined from messaging application data and/or calendar application data.

In some examples, scene description unit 1202 implements AI model 1206 to determine whether to describe a scene. AI model 1206 is based on (e.g., is, or is constructed from) a foundation model, as discussed above with respect to FIG. 4. In some examples, scene description unit 1202 constructs a prompt that requests AI model 1206 to determine whether to describe the scene based on the scene data and the previous context data, e.g., "decide whether to describe this scene based on this data." Scene description unit 1202 then provides the prompt, the scene data, and the previous context data to AI model 1206 to determine whether to describe the scene.

Scene selection unit 1208 is configured to select, based on the scene data and the previous context data, a portion of a scene to describe. In some examples, scene selection unit 1208 selects the portion of the scene in response to scene description unit 1202 determining to describe the scene. In some examples, scene selection unit 1208 applies computer vision techniques in conjunction with the previous context data to select the portion of the scene to describe. In some examples, scene selection unit 1208 identifies an object in the scene. In some examples, scene selection unit 1208 determines a direction of the object relative to the user of the computer system (e.g., in front of the user, behind the user, to the right of the user, to the left of the user, above the user, or below the user). In some examples, scene selection unit 1208 determines a distance between the object and the user. In some examples, scene selection unit 1208 determines an order in which to describe (e.g., output the identity of and/or other information about) multiple objects that are present within the scene. Accordingly, the user device may intelligently describe objects in an order determined as relevant to the user, e.g., to describe a hazard that the user is first likely to encounter before describing another object present within the scene.

In some examples, the previous context data (used to select a portion of a scene to describe) includes a visual acuity of the user. The visual acuity specifies the visual capabilities of the user, e.g., whether the user is near-sighted or far-sighted, the eye(s) in which the user has visual capability, and/or a value for the user's visual acuity level (e.g., 20/20 vision, 20/40 vision, and the like). In this manner, the user device can select portions of a scene that are relevant to a user according to their vision level, e.g., by describing elements near the user if the user is far-sighted and by describing elements far from the user if the user is near-sighted.

In some examples, the visual acuity of the user is selected from personal knowledge base 503 according to the techniques discussed above with respect to FIGS. 5-6. More specifically, based on the scene data, user information unit 502 infers a user intent with respect to the scene. For example, based on scene data that depicts change in scenery consistent with user and/or device motion, user information unit 502 infers that the user is walking around. Based on the inference about the user intent, user information unit 502 selects accessibility information (e.g., health information) from personal knowledge base 503. The accessibility information specifies the visual acuity of the user. In some examples, user information unit 502 selects the visual acuity information using AI model 504 and/or based on a semantic match between the intent attribute of "walking around" and accessibility information within personal knowledge graph 600.

In some examples, scene selection unit 1208 implements AI model 1210 to select the portion of the scene to describe. Like AI model 1206, AI model 1210 is based on (e.g., is, or is constructed from) a foundation model, as discussed above with respect to FIG. 4. In some examples, AI model 1206 and AI model 1210 are the same AI model. In other examples, AI model 1206 and AI model 1210 are different AI models. For example, AI model 1206 is optimized to determine whether to describe a scene and AI model 1210 is optimized to select a portion of the scene to describe. In some examples, scene selection unit 1208 constructs a prompt that requests AI model 1210 to output the scene information to describe, e.g., "describe the scene based on this previous context data." Scene selection unit 1208 then provides the prompt, the scene data, and the previous context data to AI model 1210 for AI model 1210 to generate the scene information to describe, e.g., the object(s) to describe, the order in which to describe the object(s), the distance(s) between the user and the object(s), and/or the direction of the object(s) relative to the user. In some examples, AI model 1210 generates the scene information to describe by generating executable instructions to output the scene information to describe. In some examples, AI models 1206 and 1210 are LLMs.

In some examples, scene selection unit 1208 is configured to determine, based on detected scene data, whether it is safe or unsafe for the user to perform an action in the scene. Scene selection unit 1208 is further configured to cause the user device to selectively provide outputs based on whether it is safe for the user to perform the action. Example actions include crossing a street, making a right or left turn, and the like. In some examples, AI model 1210 is configured to determine whether it is safe or unsafe to perform the action, e.g., by generating instructions to provide output specifying that the action should not be performed (when scene data indicates that the action is unsafe to perform) and by generating instructions to provide output specifying that the action can be performed (when scene data indicates that the action is safe to perform).

In some examples, the functions of scene selection unit 1208 are implemented by scene description unit 1202, e.g., so that scene description unit 1202 replaces scene selection unit 1208. For example, AI model 1206 is configured to both determine whether to describe a scene and to select the portion of the scene to describe, e.g., by generating executable instructions to output the scene information to describe.

FIGS. 13A-13G illustrate device 1300 providing outputs that describe selected portions of respective scenes, according to some examples. The scenes are described according to the techniques discussed above with respect to FIG. 12.

FIGS. 13A-13G illustrate a user's view of respective three-dimensional scenes. In some examples, device 1300 provides at least a portion of the scenes of FIGS. 13A-13G. For example, the scenes are XR scenes that include at least some virtual elements generated by device 1300. In other examples, the scenes are physical scenes.

Device 1300 implements at least some of the components of computer system 101. For example, device 1300 includes one or more sensors (e.g., front-facing image sensors) configured to detect data representing the respective scene of FIGS. 13A-13G. In some examples, device 1300 is an HMD (e.g., an XR headset or smart glasses) and FIGS. 13A-13G illustrate the user's view of the respective scenes via the HMD. For example, FIGS. 13A-13G illustrate physical scenes viewed via pass-through video, physical scenes viewed via direct optical see-through, or virtual scenes viewed via one or more displays of the HMD. In other examples, device 1300 is another type of device, such as a smart watch, a smart phone, a tablet device, a laptop computer, a projection-based device, or a pair of headphones or earbuds.

The examples of FIGS. 13A-13G illustrate that the user and device 1300 are present within the respective scenes of FIGS. 13A-13G. For example, the scenes are physical or extended reality scenes and the user and device 1300 are physically present within the scenes. In other examples, an avatar of the user is present within the scenes. For example, when the scenes are virtual reality scenes, the avatar of the user is present within the virtual reality scenes.

In FIG. 13A, the user is present within a scene of a city street. Device 1300 receives the user's speech input 1302 "help me get to Boba Bay." In response to receiving speech input 1302, device 1300 initiates a navigation session to assist the user with navigating to the destination location of "Boba Bay." During the navigation session, device 1300 monitors its location and provides navigation instructions determined based on the destination location and device 1300's current location. For example, in FIG. 13A, device 1300 provides audio output 1304 "ok, turn right in 100 feet."

In FIG. 13B, by following the navigation instructions, the user is now present within a scene near the destination location of "Boba Bay." Device 1300 remains in the navigation session. The scene includes sign 1306 for the destination location of "Boba Bay," sign 1308 indicating that "Boba Bay" is closed, railing 1310 in front of "Boba Bay," and sign 1312 for "Great Shoe Store." Device 1000 detects scene data for the scene of FIG. 13B. Scene description unit 1202 determines to describe the scene based on the scene data and the destination location of "Boba Bay." In some examples, scene description unit 1202 further determines to describe the scene based on a scene description setting that instructs to describe a scene when device 1300 is navigating. Scene description unit 1202 selects a portion of the scene to describe based on the scene data and the destination location. Based on the selected portion of the scene, device 1300 provides audio output 1314 "railing, 5 feet to your right. Boba Bay is behind the railing. The sign says Boba Bay is closed."

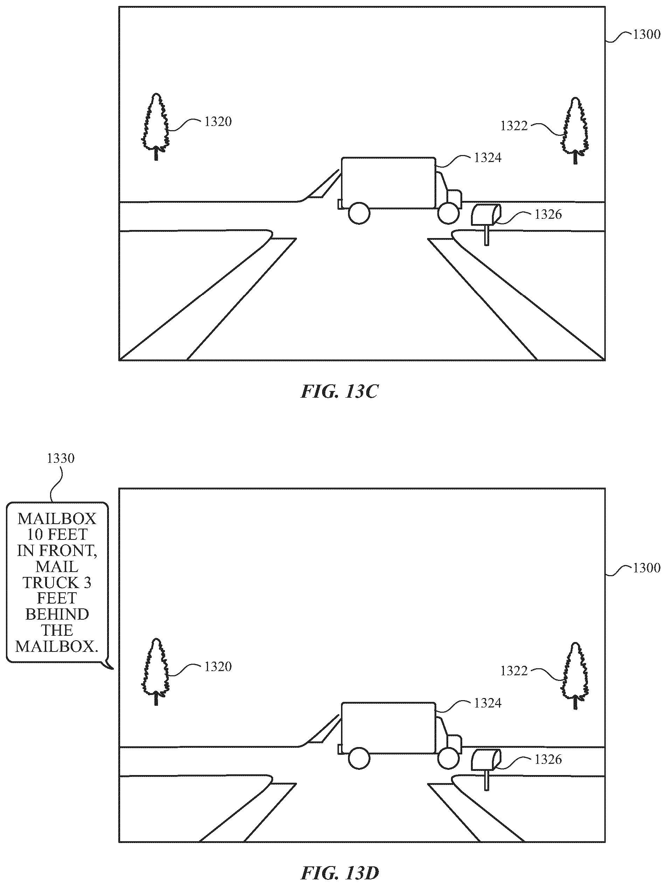

FIGS. 13C-13D illustrate another example of device 1300 providing output to describe a selected portion of a scene. In FIG. 13C, the user is present within a scene of a front yard. The scene includes tress 1320 and 1322 in the background, mailbox 1326 in the foreground, and mail truck 1324 in the foreground behind mailbox 1326. In FIGS. 13C-13D, the user of device 1300 is far-sighted and has activated a setting of device 1300 that instructs to describe a scene when the user is moving about.

In FIG. 13D, the user has moved forward within the scene of FIG. 13C. Device 1300 detects scene data for the scene of FIG. 13D. The scene data indicates that the user is moving about. Scene description unit 1202 determines to describe the scene based on the scene data and the activated setting to describe a scene when the user is moving about. In response to the determination to describe the scene, scene selection unit 1208 selects a portion of the scene to describe based on the scene data and visual acuity information specifying that the user is far-sighted. The visual acuity information is selected from personal knowledge base 503 according to the techniques discussed above. Based on the selected portion of the scene, device 1300 provides audio output 1330 ("Mailbox 10 feet in front. Mail truck 3 feet behind the mailbox"), thereby informing the user about objects in the foreground that may be difficult to view based on their visual acuity.

As illustrated in FIGS. 13A-13D, by selecting a portion of a scene to describe based on both the scene data and past context information (e.g., a destination location and/or the visual acuity of the user), device 1300 may intelligently describe selected elements of the scene that are relevant to a particular user. For example, in FIG. 13B, device 1300 does not describe each element within the scene of FIG. 13B (e.g., does not describe sign 1312 for "Great Shoe Store") to avoid overwhelming the user with potentially irrelevant information and instead describes elements of the scene that are predicted as relevant to the current navigation task. Similarly, in FIG. 13D, device 1300 does not describe each element within the scene (e.g., does not describe trees 1320 and 1322 in the background) to avoid overwhelming the user with information about objects they can already view based on their visual acuity. Device 1300 further describes the relevant objects in an order that is predicted to be helpful, e.g., describes mailbox 1326 before describing mail truck 1324, as the user will first encounter mailbox 1326 when walking forward.

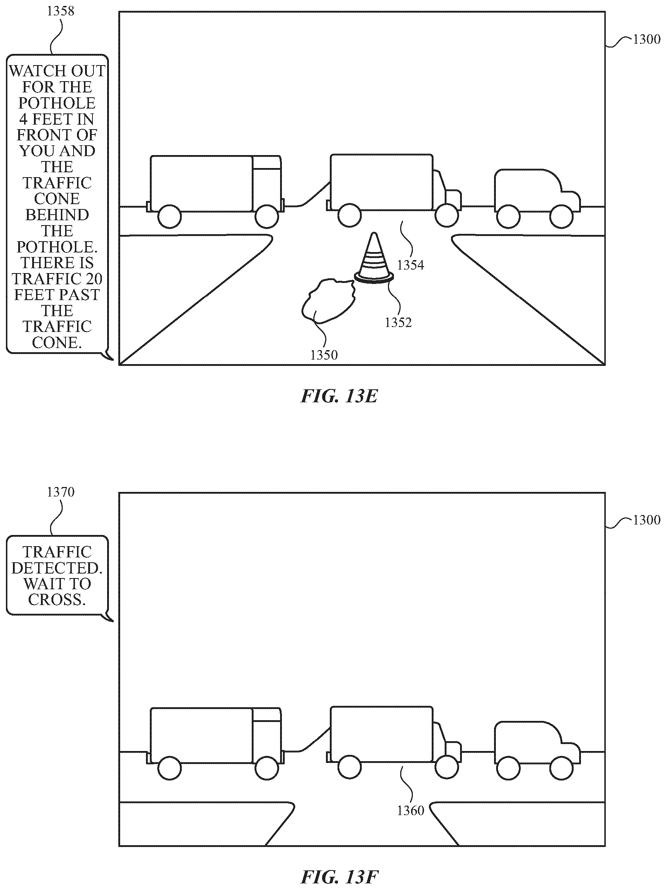

FIGS. 13E-13G illustrate another example of device 1300 providing output to describe a selected portion of a scene. In FIG. 13E, the user is within a scene that includes a sidewalk. The sidewalk has pothole 1350 and traffic cone 1352 is on the sidewalk. The sidewalk leads to an intersection with traffic 1354. In FIGS, 13E-13G, the user of device 1300 is blind and has activated a scene description setting of device 1300 that instructs to describe hazards within a scene.

In FIG. 13E, device 1300 detects scene data that represents the scene. The scene data depicts that pothole 1350 and traffic cone 1352 are hazards present within the scene. Based on the scene data and the scene description setting that instructs to describe hazards within the scene, scene description unit 1202 determines to describe the scene. Based on the scene data and the user's visual acuity level (e.g., blind), scene description unit 1202 selects a portion of the scene to describe. Based on the selected portion of the scene, device 1300 provides audio output 1358 "Watch out for the pothole 4 feet in front of you and the traffic cone behind the pothole. There is traffic 20 feet past the traffic cone." Notably, in contrast to the example of FIGS. 13C-13D, scene description unit 1202 additionally determines to describe elements (e.g., traffic 1354) in the background of the scene of FIG. 13E based on visual acuity information specifying that the user is blind.

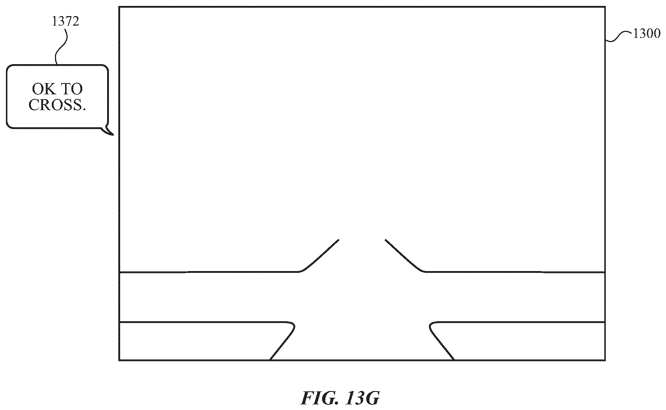

In FIG. 13F, the user has walked forward and avoided pothole 1350 and traffic cone 1352. The user now stands at an intersection with traffic 1360. Device 1300 detects scene data for the scene of FIG. 13F. Based on the scene data, scene selection unit 1208 generates instructions to provide audio output 1370 "traffic detected, wait to cross." In FIG. 13G, the user continues standing in the intersection and traffic 1360 has cleared. Device 1300 detects scene data for the scene of FIG. 13G. Based on the scene data, scene selection unit 1208 generates instructions to provide audio output 1372 "ok to cross."

Additional descriptions regarding FIGS. 12 and 13A-13G are provided below in reference to method 1400 described below with respect to FIG. 14.

FIG. 14 is a flow diagram of a method 1400 for selectively describing a three-dimensional scene, according to some examples. In some examples, method 1400 is performed at a computer system (e.g., computer system 101 in FIG. 1, device 700, device 1000, device 1300, or device 1600) that is in communication with one or more image sensors (e.g., RGB camera(s), infrared camera(s), and/or depth camera(s)). In some examples, the computer system is in communication with one or more other types of sensor devices (e.g., light sensors, depth sensors, tactile sensors, orientation sensors, proximity sensors, temperature sensors, location sensors, motion sensors, velocity sensors, audio sensors, and/or biometric sensors). In some examples, method 1400 is governed by instructions that are stored in a non-transitory (or transitory) computer-readable storage medium and that are executed by one or more processors of a computer system, such as the one or more processing unit(s) 302 of computer system 101 (e.g., controller 110 in FIG. 1). In some examples, the operations of method 1400 are distributed across multiple computer systems, e.g., a computer system and a separate server system. Some operations in method 1400 are, optionally, combined, the orders of some operations are, optionally, changed, and some operations are, optionally, omitted.

At block 1402, data (e.g., previous context data) associated with a user of the computer system is obtained (e.g., by scene description unit 1202).

At block 1404, after obtaining the data associated with the user of the computer system, first data that represents a first scene (e.g., the scene of FIGS. 13B, 13C, 13D, or 13E) (e.g., image data and/or video data, where the image data and/or the video data represent at least a portion of the scene around the user, e.g., in front of the user) is detected via at least the one or more image sensors.

At block 1408, in response to (1406) detecting, via at least the one or more image sensors, the first data that represents the first scene, it is determined (e.g., by scene description unit 1202) whether a set of scene description criteria is satisfied (e.g., whether to describe a scene), wherein the set of scene description criteria is satisfied based on the first data that represents the first scene.

At block 1410, in accordance with a determination that the set of scene description criteria is satisfied (e.g., in accordance with a determination to describe a scene), an output (e.g., 1314, 1330, or 1358) that describes a selected portion of (e.g., not the entirety of) the first scene (e.g., and/or a selected portion of another scene that occurs after the first scene) is provided. The portion of the first scene (and/or of the other scene) is selected (e.g., by scene description unit 1202 or by scene selection unit 1208) based on the data associated with the user of the computer system.

At block 1412, in accordance with a determination that the set of scene description criteria is not satisfied (e.g., in accordance with a determination to not describe the scene), an output that describes a selected portion of the first scene is not provided (e.g., a portion of the first scene is not selected).

In some examples, a first object (e.g., 1306, 1308, 1310, 1324, 1326, 1350, 1352, and/or 1354) is present within the selected portion of the first scene and providing the output that describes the selected portion of the first scene includes outputting a determined identity of the first object.

In some examples, providing the output that describes the selected portion of the first scene includes outputting a determined direction of the first object, wherein the determined direction is relative to the user of the computer system.

In some examples, providing the output that describes the selected portion of the first scene includes outputting a determined distance between the first object and the user of the computer system.

In some examples, the selected portion of the first scene includes a second object (e.g., 1306, 1308, 1310, 1324, 1326, 1350, 1352, and/or 1354) and a third object (e.g., 1306, 1308, 1310, 1324, 1326, 1350, 1352, and/or 1354) different from the second object and providing the output that describes the selected portion of the first scene includes: in accordance with a determination (e.g., by scene description unit 1202 or by scene selection unit 1208) to describe the second object and the third object in a first order, describing the second object and the third object in the first order; and in accordance with a determination (e.g., by scene description unit 1202 or by scene selection unit 1208) to describe the second object and the third object in a second order different from the first order, describing the second object and the third object in the second order different from the first order.

In some examples, the set of scene description criteria is satisfied further based on the data associated with the user of the computer system (e.g., the previous context data).

In some examples, the first data that represents the first scene (e.g., the scene of FIG. 13B) is detected while the computer system assists the user of the computer system with navigation to a destination location within a destination scene (e.g., the scene of FIG. 13B) and the data associated with the user of the computer system includes the destination location within the destination scene.

In some examples, the set of scene description criteria is satisfied further based on the destination location and providing the output (e.g., 1314) that describes the selected portion of the first scene includes providing an output that describes one or more objects that are present in the first scene, wherein the one or more objects are selected (e.g., by scene description unit 1202 or by scene selection unit 1208) based on the destination location.

In some examples, the set of scene description criteria is satisfied based on a determination that the user is moving about, wherein the determination that the user is moving about is based on the first data that represents the first scene (e.g., the scene of FIGS. 13C and/or 13D).

In some examples, the set of scene description criteria is satisfied based on a hazard (e.g., 1350, 1352, and/or 1354) that is present within the first scene (e.g., the scene of FIG. 13E) (e.g., based on a determination that a hazard is present within the first scene), wherein the first data that represents the first scene indicates the hazard, and providing the output (e.g., 1358) that describes the selected portion of the first scene includes providing an output that describes the hazard.

In some examples, the set of scene description criteria is further satisfied based on a setting of the computer system that specifies when to describe a scene (e.g., a setting stored in and/or managed by settings unit 1204).

In some examples, the data associated with the user of the computer system includes a visual acuity of the user of the computer system and the portion of the first scene (e.g., the scene of FIGS. 13D or 13E) is selected based on the visual acuity of the user of the computer system.

In some examples, the visual acuity of the user of the computer system is selected, based on an inference about a user intent with respect to the first scene (e.g., the scene of FIGS. 13D or 13E), from a knowledge base (e.g., personal knowledge base 503) that is personal to the user of the computer system, wherein the inference about the user intent with respect to the first scene is determined based on the first data that represents the first scene.

In some examples, method 1400 includes: detecting, via at least the one or more image sensors, second data that represents a second scene (e.g., the scene of FIGS. 13F or 13G); and in response to detecting, via at least the one or more image sensors, the second data that represents the second scene: in accordance with a determination (e.g., by scene selection unit 1308), based on the second data that represents the second scene, that it is unsafe for the user of the computer system to perform an action in the second scene, providing an output (e.g., 1370) indicating that the action should not be currently performed; and in accordance with a determination (e.g., by scene selection unit 1308), based on the second data that represents the second scene, that it is safe for the user of the computer system to perform the action in the second scene, providing an output (e.g., 1372) indicating that the action can be currently performed.

In some examples, obtaining the data associated with the user of the computer system includes receiving a natural language input (e.g., 1302) that requests for assistance with navigation to a second destination location within a second destination scene (e.g., the scene of FIG. 13B) and the set of scene description criteria is satisfied based on the natural language input.

FIG. 15 illustrates additional components of 3D experience module 340, according to some examples. Specifically, FIG. 15 illustrates mode selection unit 1502 and mode action unit 1504. Generally, mode selection unit 1502 is configured to select an accessibility mode and set a user device (e.g., 700, 1000, 1300, or 1600) into the selected accessibility mode. Mode action unit 1504 is configured to generate actions based on the selected accessibility mode and cause the user device to perform the generated actions. The functions of mode selection unit 1502 and mode action unit 1504 are now discussed in greater detail below with respect to FIGS. 15, 16A-16D, and 17.

Mode selection unit 1502 is configured to select an accessibility mode of a user device based on at least scene data that represents a three-dimensional scene. An accessibility mode describes a mode in which the user device performs accessibility functions specific to that mode. Example accessibility modes include a world description mode in which the user device outputs a description of select objects in a scene (e.g., as described with respect to FIGS. 12, 13A-13G, and 14), a world gesture mode in which the user device outputs an identity of an object that is selected by a gesture (e.g., a hand gesture), an American Sign Language (ASL) translation mode in which the user device translates detected ASL movements and/or gestures, and a reading mode in which the user device provides audio output of detected text.

In some examples, mode selection unit 1502 selects an accessibility mode based on information that is personal to a user of the user device, e.g., information stored within personal knowledge base 503. In some examples, the information is selected from personal knowledge base 503 according to the techniques discussed above with respect to FIGS. 5-6. The personal information includes, for example, information from one or more applications (e.g., a messaging application, a calendar application, and/or a notes application) that specifies a destination location for a navigation task. In some examples, as described above with respect to FIGS. 12, 13A-13G, and 14, mode selection unit 1502 determines to describe a scene (i.e., selects a world description accessibility mode) based on the destination location.

In some examples, the information that is personal to the user includes a setting of the user device, e.g., a setting that specifies the conditions under which an accessibility mode is to be selected. In some examples, the user device allows the user to toggle the settings via a user interface of the user device. Example settings for the world description mode include the scene description settings described above with respect to FIG. 12, e.g., to describe a scene when navigating and/or to describe a scene when the user is moving about. Example settings for the world gesture mode include (1) set to the world gesture mode based on an explicit request (e.g., via natural language input and/or other input via a user interface) or (2) automatically set to the world gesture mode upon detection of a gesture (e.g., a hand gesture) that selects an object. Example settings for the ASL translation mode include (1) set to the ASL translation mode based on an explicit request (e.g., via natural language input and/or other input via a user interface) or (2) automatically set to the ASL translation mode upon detection of ASL gestures. Example settings for the reading mode include (1) set to the reading mode based on an explicit request or (2) automatically set to the reading mode upon detection of text in a scene.

In some examples, setting a user device to a particular accessibility mode includes changing a parameter of a sensor (e.g., an image sensor) of the user device. Example parameters include position (e.g., physical location), frame rate, aperture, shutter speed, magnification level, and focus. As one example, when mode selection unit 1502 sets the user device to an ASL translation mode, the user device increases the frame rate of one or more image sensors to detect ASL gestures more accurately based on the image data. As another example, when mode selection unit 1502 sets the user device to a world gesture mode, the user device changes the focus of one or more image sensors to increase focus on the foreground of the scene, e.g., to detect the user's hand gestures more accurately (as when the user is wearing the device, the user's hand gestures are performed in the foreground).

In some examples, mode selection unit 1502 implements one or more AI models (e.g., LLM(s)) to select an accessibility mode. The AI model(s) are based on a foundation model, as discussed above with respect to FIG. 4. In some examples, mode selection unit 1502 constructs a prompt to an AI model that requests the model to select an accessibility mode. Mode selection unit 1502 then provides the prompt, the scene data, and the personal information to the AI model for the AI model to select the mode, e.g., for the AI model to generate executable instructions to set a device into the selected mode.

Mode action unit 1504 is configured to determine (e.g., generate) actions based on scene data and the selected accessibility mode. Mode action unit 1504 further causes the user device to perform the determined actions. For example, for the world description mode, action unit 1504 determines an action to describe select portions of a scene (e.g., as described above with respect to FIGS. 12, 13A-13G, and 14). For the world gesture mode, mode action unit 1504 identifies an object that is selected by a hand gesture and causes the user device to output the identity of the object. For the ASL translation mode, mode action unit 1504 translates (e.g., determines text corresponding to) ASL gestures and/or movements and causes a user device to output the translation. For the reading mode, mode action unit 1504 recognizes text that is present in the scene and causes the user device to output the text. In some examples, mode action unit 1504 implements one or more AI models (e.g., that are based on the foundation model described above with respect to FIG. 4) configured to perform the above-described computer vision tasks.

In some examples, mode selection unit 1502 is configured to cause the user device to exit an accessibility mode. In some examples, when the user device exits the accessibility mode, the user device no longer performs actions specific to that accessibility mode based on detected scene data, e.g., until the user device is again set to the accessibility mode. In some examples, when the user device exits the accessibility mode, the user device ceases executing one or more computing processes (e.g., computer vision processes) that were initiated in response to entering the accessibility mode. In some examples, when the user device exits the accessibility mode, the user device changes the parameter(s) of device sensor(s), e.g., changes the parameter(s) back to default value(s) or back to value(s) at the time immediately before the user device was set to the accessibility mode.

In some examples, the user device exits the accessibility mode based on user input (e.g., natural language input or other input detected via a user interface) that requests to exit the accessibility mode. In some examples, mode selection unit 1502 implements one or more AI models configured to process scene data to determine whether to exit a current accessibility mode based on the scene data. For example, mode selection unit 1504 causes the user device to exit a reading mode based on image data that depicts that the user has closed a book that the user device was previously reading to the user. As another example, mode selection unit 1504 causes the user device to exit an ASL translation mode based on image data that depicts that nobody is in the user's current field of view.

FIGS. 16A-16D illustrate device 1600 performing actions based on different accessibility modes, according to some examples. The accessibility modes are selected and the actions are determined according to the techniques discussed above with respect to FIG. 15.

FIGS. 16A-16D illustrate a user's view of respective three-dimensional scenes. In some examples, device 1600 provides at least a portion of the scenes of FIGS. 16A-16D. For example, the scenes are XR scenes that include at least some virtual elements generated by device 1600. In other examples, the scenes are physical scenes.

Device 1600 implements at least some of the components of computer system 101. For example, device 1600 includes one or more sensors (e.g., front-facing image sensors) configured to detect data representing the respective scene of FIGS. 16A-16D. In some examples, device 1600 is an HMD (e.g., an XR headset or smart glasses) and FIGS. 16A-16D illustrate the user's view of the respective scenes via the HMD. For example, FIGS. 16A-16D illustrate physical scenes viewed via pass-through video, physical scenes viewed via direct optical see-through, or virtual scenes viewed via one or more displays of the HMD. In other examples, device 1600 is another type of device, such as a smart watch, a smart phone, a tablet device, a laptop computer, a projection-based device, or a pair of headphones or earbuds.

The examples of FIGS. 16A-16D illustrate that the user and device 1600 are present within the respective scenes of FIGS. 16A-16D. For example, the scenes are physical or extended reality scenes and the user and device 1600 are physically present within the scenes. In other examples, an avatar of the user is present within the scenes. For example, when the scenes are virtual reality scenes, the avatar of the user is present within the virtual reality scenes.

FIGS. 13A-13G illustrate device 1300 performing actions based on the world description accessibility mode. The description of FIGS. 13A-13G is not repeated for brevity.

FIGS. 16A-16B illustrate device 1600 performing actions based on the world gesture accessibility mode. In FIG. 16A, the user is within a scene of a grocery store and items 1602, 1604, and 1606 are in front of the user. The user has a level of visual impairment such that they can discern that items 1602, 1604, and 1606 are in front of them, but they cannot discern the identity of the items. The user performs hand gesture 1608 (e.g., a pointing gesture) that selects object 1602.

Device 1600 detects scene data that represents the scene of FIG. 16A, e.g., by detecting image data that represents the scene and by detecting hand gesture 1608 that selects object 1602. Based on the scene data and a setting of device 1600 that instructs to set to the world gesture mode upon detection of a gesture that selects an object, mode selection unit 1502 sets device 1600 into the world gesture accessibility mode. Mode action unit 1504 identifies selected object 1602 and device 1600 provides audio output 1610 "this is ketchup" that identifies selected object 1602.

In FIG. 16B, the user remains in the scene of the grocery store and device 1600 remains set to the world gesture accessibility mode. The user performs hand gesture 1612 that selects object 1604. Device 1600 detects scene data that represents the scene of FIG. 16B, e.g., by detecting image data that represents the scene and by detecting hand gesture 1612. Based on the scene data and the world gesture accessibility mode, mode action unit 1504 identifies selected object 1604 and device 1600 provides audio output 1614 "this is mustard" that identifies selected object 1604.

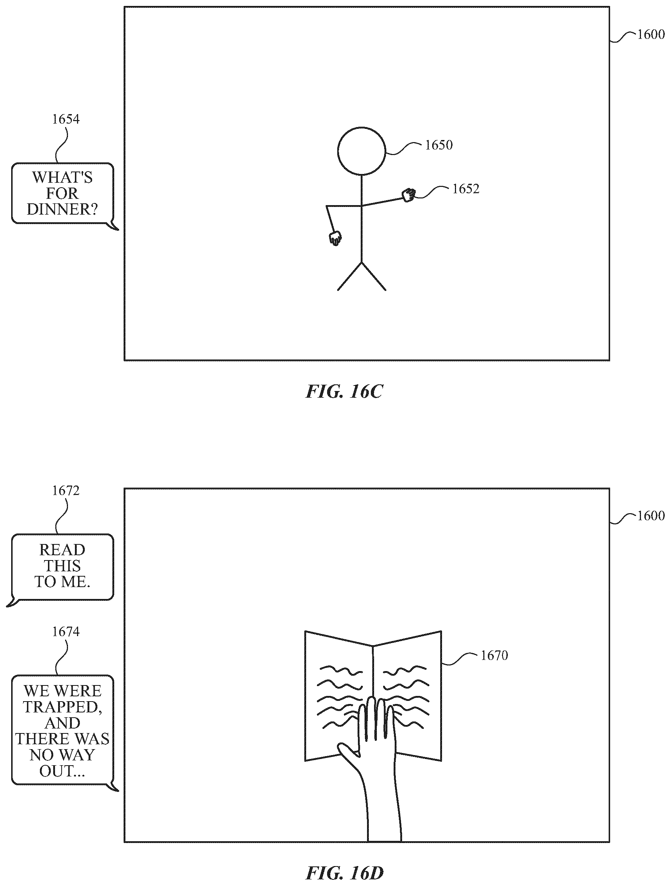

FIG. 16C illustrates device 1600 performing actions based on the ASL translation accessibility mode. In FIG. 16C, person 1650 is in front of the user and person 1650 is performing ASL gestures 1652 to communicate with the user. Device 1600 detects scene data representing the scene of FIG. 16C. Based on the scene data (e.g., based on the detection of ASL gestures 1652 from the scene data) and a setting of device 1600 that instructs to set to the ASL translation accessibility mode upon detection of an ASL gesture, mode selection unit 1502 sets device 1600 into the ASL translation mode. Based on detected scene data and the ASL translation accessibility mode, mode action unit 1504 translates ASL gestures 1652 and device 1600 provides audio output 1654 ("what's for dinner?") that is a translation of ASL gestures 1652.

FIG. 16D illustrates device 1600 performing actions based on the reading accessibility mode. In FIG. 16D, the user holds up book 1670. Device 1600 receives the user's speech input 1672 "read this to me." Device 1600 detects scene data depicting that book 1670 is in the user's view. Based on speech input 1672 and the scene data, mode selection unit 1502 determines to read book 1670 to the user (e.g., determines to enter a reading accessibility mode). Based on detected scene data and the reading accessibility mode, mode action unit 1504 recognizes the text of book 1670 and device 1600 provides audio output 1674 ("we were trapped, and there was no way out...") corresponding to the recognized text, thereby reading book 1670 to the user.

Additional descriptions regarding FIGS. 15 and 16A-16D are provided below in reference to method 1700 described below with respect to FIG. 17.

FIG. 17 is a flow diagram of a method 1700 for performing actions according to different accessibility modes, according to some examples. In some examples, method 1700 is performed at a computer system (e.g., computer system 101 in FIG. 1, device 700, device 1000, device 1300, or device 1600) that is in communication with one or more image sensors (e.g., RGB camera(s), infrared camera(s), and/or depth camera(s)). In some examples, the computer system is in communication with one or more other types of sensor devices (e.g., light sensors, depth sensors, tactile sensors, orientation sensors, proximity sensors, temperature sensors, location sensors, motion sensors, velocity sensors, audio sensors, and/or biometric sensors). In some examples, method 1700 is governed by instructions that are stored in a non-transitory (or transitory) computer-readable storage medium and that are executed by one or more processors of a computer system, such as the one or more processing unit(s) 302 of computer system 101 (e.g., controller 110 in FIG. 1). In some examples, the operations of method 1700 are distributed across multiple computer systems, e.g., a computer system and a separate server system. Some operations in method 1700 are, optionally, combined, the orders of some operations are, optionally, changed, and some operations are, optionally, omitted.

At block 1702, first data that represents a first scene (e.g., the scene of FIGS. 13B, 13C, 13D, 13E, 16A, 16C, or 16D) (e.g., image data and/or video data, where the image data and/or the video data represent at least a portion of the scene around the user, e.g., in front of the user) is detected via at least the one or more image sensors.

At block 1706, in response to (1704) detecting, via at least the one or more image sensors, the first data that represents the first scene, it is determined (e.g., by mode selection unit 1502) whether a set of criteria for a first accessibility mode is satisfied (e.g., determined whether to set the computer system to the first accessibility mode). Satisfaction of the set of criteria for the first accessibility mode is based on the first data that represents the first scene.

At block 1708, in accordance with a determination that a set of criteria for a first accessibility mode is satisfied (e.g., a determination to set the computer system to the first accessibility mode) the computer system is set (e.g., by mode selection unit 1502) to the first accessibility mode.

At block 1710, in accordance with a determination that the set of criteria for the first accessibility mode is not satisfied (e.g., a determination to not set the computer system to the first accessibility mode) the computer system is not set to the first accessibility mode.

At block 1714, while (1712) the computer system is set to the first accessibility mode, second data that represents a second scene (e.g., the scene of FIGS. 13B, 13C, 13D, 13E, 16A, 16B, 16C, or 16D) (e.g., image data and/or video data, where the image data and/or the video data represent at least a portion of the scene around the user, e.g., in front of the user) is detected via at least the one or more image sensors. In some examples, the first scene and the second scene are the same scene. In some examples, the second scene occurs after the first scene.

At block 1716, while (1712) the computer system is set to the first accessibility mode, after detecting, via at least the one or more image sensors, the second data that represents the second scene, an action (e.g., an action determined by mode action unit 1504) (e.g., providing audio outputs 1314, 1330, 1358, 1614, 1654, and/or 1674) is performed. The action is based on the first accessibility mode and the second data that represents the second scene.

In some examples, satisfaction of the set of criteria for the first accessibility mode is further based on information personal to a user of the computer system.

In some examples, the information personal to the user of the computer system includes a setting of the computer system, wherein the setting corresponds to the first accessibility mode.

In some examples, method 1700 includes receiving a natural language input (e.g., 1672) that corresponds to a request to enter the first accessibility mode, wherein satisfaction of the set of accessibility criteria for the first accessibility mode is further based on the request to enter the first accessibility mode.

In some examples, the computer system is in communication with a sensor device (e.g., an image sensor) and setting the computer system to the first accessibility mode includes changing a parameter of the sensor device.

In some examples, the first accessibility mode is a mode in which the computer system outputs a description of one or more objects that are present in a respective scene (e.g., a world description accessibility mode) (e.g., as illustrated in FIGS. 13B, 13C, 13D, and/or 13E) and performing the action includes outputting a description of an object that is present within the second scene (e.g., as illustrated in FIGS. 13B, 13C, 13D, and/or 13E).

In some examples, satisfaction of the set of criteria for the first accessibility mode is based on a determination that the user is moving about, wherein the determination that the user is moving about is based on the first data that represents the first scene.

In some examples, the object (e.g., 1306, 1308, and/or 1310) that is present within the second scene (e.g., the scene of FIG. 13B) is selected based on a destination location for a navigation task.

In some examples, the first accessibility mode is a mode (e.g., a world gesture accessibility mode) in which the computer system outputs a description of an object that is selected by a respective user gesture; detecting, via at least the one or more image sensors, the second data that represents the second scene includes detecting a first user gesture (e.g., 1612); and performing the action includes: in accordance with a determination that the first user gesture corresponds to a selection of an object (e.g., 1604) that is present within the second scene, outputting a description of the object that is present within the second scene (e.g., providing audio output 1614).

In some examples, detecting, via at least the one or more image sensors, the first data that represents the first scene includes detecting a second user gesture (e.g., 1608) and satisfaction of the set of criteria for the first accessibility mode is based on a determination that the second gesture corresponds to a selection of an object (e.g., 1602) that is present within the first scene.

In some examples, the first accessibility mode is a mode in which the computer system outputs a translation of respective sign language movement (e.g., an ASL translation accessibility mode) and performing the action includes outputting a translation of sign language movement (e.g., 1652) that is detected from the second data that represents the second scene (e.g., providing audio output 1654).

In some examples, detecting, via at least the one or more image sensors, the first data that represents the first scene (e.g., the scene of FIG. 16C) includes detecting sign language movement (e.g., 1652) that is performed within the first scene and satisfaction of the set of criteria for the first accessibility mode is based on the detection of the sign language movement that is performed within the first scene.

In some examples, the first accessibility mode is a mode in which the computer system provides audio output of text (e.g., a reading accessibility mode) and performing the action includes providing an audio output of text that is present within the second scene (e.g., providing audio output 1674).

In some examples, method 1700 includes: while the computer system is set to the first accessibility mode: in accordance with a determination that a set of accessibility mode exit criteria is satisfied, exiting the first accessibility mode; and after exiting the first accessibility mode: detecting, via at least the one or more image sensors, third data that represents a third scene; and in response to detecting, via at least the one or more image sensors, the third data that represents the third scene, forgoing performing an action that is based on the first accessibility mode and the third data that represents the third scene.

In some examples, method 1700 includes receiving a user input that corresponds to a request to exit the first accessibility mode, wherein the set of accessibility mode exit criteria is satisfied based on receiving the user input that corresponds to the request to exit the first accessibility mode.

In some examples, method 1700 includes detecting, via at least the one or more image sensors, fourth data that represents a fourth scene (e.g., image data and/or video data, where the image data and/or the video data represent at least a portion of the scene around the user, e.g., in front of the user), wherein the set of accessibility mode exit criteria is satisfied based on the fourth data that represents the fourth scene.

In some examples, aspects/operations of methods 800, 1100, 1400, and 1700 may be interchanged, substituted, and/or added between these methods. For example, a reminder is set according to method 1100 based on information selected from a knowledge base, as described with respect to method 800. For brevity, further details are not repeated here.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best use the invention and various described embodiments with various modifications as are suited to the particular use contemplated.

As described above, one aspect of the present technology is the gathering and use of data available from various sources to facilitate user interactions with a three-dimensional scene. The present disclosure contemplates that in some instances, this gathered data may include personal information data that uniquely identifies or can be used to contact or locate a specific person. Such personal information data can include demographic data, location-based data, telephone numbers, email addresses, twitter IDs, home addresses, data or records relating to a user's health or level of fitness (e.g., vital signs measurements, medication information, exercise information), date of birth, or any other identifying or personal information.

The present disclosure recognizes that the use of such personal information data, in the present technology, can be used to the benefit of users. For example, the personal information data can be used to perform actions to assist a user. Further, other uses for personal information data that benefit the user are also contemplated by the present disclosure. For instance, health and fitness data may be used to provide insights into a user's general wellness, or may be used as positive feedback to individuals using technology to pursue wellness goals.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of or access to certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in each country.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of performing actions for the user, the present technology can be configured to allow users to select to "opt in" or "opt out" of participation in the collection of personal information data during registration for services or anytime thereafter. In another example, users can select not to provide personal information data based on which actions are generated and/or performed. In yet another example, users can select to limit the length of time for which such data is maintained. In addition to providing "opt in" and "opt out" options, the present disclosure contemplates providing notifications relating to the access or use of personal information. For instance, a user may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing specific identifiers (e.g., date of birth, etc.), controlling the amount or specificity of data stored (e.g., collecting location data at a city level rather than at an address level), controlling how data is stored (e.g., aggregating data across users), and/or other methods.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, actions can be generated and performed based on non-personal information data or a bare minimum amount of personal information, such as the content being requested by the device associated with a user, other non-personal information available to the service, or publicly available information.

A selection of features of the disclosure is set out in the following numbered clauses:-
1. A method, comprising:
   at a computer system that is in communication with one or more one or more image sensors:
   detecting, via at least the one or more image sensors, first data that represents a first scene; and
   in response to detecting, via at least the one or more image sensors, the first data that represents the first scene and after an inference about a user intent with respect to the first scene is determined based on the first data that represents the first scene:
      in accordance with a determination that a portion of a knowledge base is selected based on the inference about the user intent with respect to the first scene, wherein the knowledge base is personal to a user of the computer system, and in accordance with a determination that a first action satisfies a set of action criteria, performing the first action, wherein the first action is generated based on the selected portion of the knowledge base.
2. The method of clause 1, further comprising:
   in response to detecting, via at least the one or more image sensors, the first data that represents the first scene and after the inference about the user intent with respect to the first scene is determined based on the first data that represents the first scene:
   in accordance with a determination that a portion of the knowledge base is not selected based on the inference about the user intent with respect to the first scene and in accordance with a determination that a second action satisfies the set of action criteria, performing the second action, wherein the second action is generated based on the first data that represents the first scene.
3. The method of any one of clauses 1-2, wherein the knowledge base is updated to include information determined from one or more user interactions with one or more applications of the computer system.
4. The method of any one of clauses 1-3, further comprising:
   detecting second data that represents a second scene, wherein:
   in accordance with a determination that a set of criteria is satisfied:
      the knowledge base is updated based on information determined from the second data that represents the second scene; and
   in accordance with a determination that the set of criteria is not satisfied,
      the knowledge base is not updated based on the second data that represents a second scene.
5. The method of clause 4, wherein the second data that represents the second scene includes image data that represents the second scene.
6. The method of any one of clauses 4-5, wherein the second data that represents the second scene includes audio data that represents the second scene.
7. The method of any one of clauses 4-6, wherein the set of criteria include a first criterion that is satisfied when the second data is detected during an object enrollment session.
8. The method of any one of clauses 4-7, wherein the set of criteria include a second criterion that is satisfied based on a location of the computer system when the second data that represents the second scene is detected.
9. The method of any one of clauses 4-8, wherein:
   the information determined from the second data that represents the second scene includes first information; and
   the set of criteria include a third criterion that is satisfied based on a frequency with which the same first information is determined from respective scene data that represents one or more respective scenes.
10. The method of any one of clauses 1-9, wherein the knowledge base includes a knowledge graph that is personal to the user of the computer system.
11. The method of clause 10, wherein the portion of the knowledge base is selected by matching an attribute of the user intent with respect to the first scene with a category within the knowledge graph.
12. The method of any one of clauses 1-11, wherein the first data that represents the first scene includes image data that represents the first scene and audio data that represents the first scene, and wherein the inference about the user intent with respect to the first scene is determined based on the image data that represents the first scene and the audio data that represents the first scene.
13. The method of any one of clauses 1-12, wherein determining the inference about the user intent with respect to the first scene includes constructing a prompt for a large language model, wherein the prompt requests the large language model to predict the user intent with respect to the first scene based on the first data that represents the first scene.
14. The method of any one of clauses 1-13, wherein generating the first action includes constructing a second prompt for a second large language model, wherein the second prompt requests the second large language model to predict an action based on the selected portion of the knowledge base and the first data that represents the first scene.
15. The method of any one of clauses 1-14, wherein performing the first action includes:
   detecting, via at least the one or more image sensors, third data that represents a third scene; and
   providing an output that corresponds to assisting the user of the computer system with locating an item for a personalized procedure, wherein the output is determined based on the third data that represents the third scene.
16. The method of clause 15, wherein performing the first action includes:
   in accordance with a determination that the user of the computer system does not possess the item for the personalized procedure, performing a third action that corresponds to assisting the user of the computer system with obtaining the item.
17. The method of any one of clauses 1-16, wherein the selected portion of the knowledge base specifies the item for the personalized procedure.
18. The method of any one of clauses 1-17, wherein the first data that represents the first scene indicates that a second item is depleted and performing the first action includes assisting the user of the computer system with replenishing the second item.
19. The method of clause 18, wherein the selected portion of the knowledge base specifies the second item.
20. A non-transitory computer-readable storage medium storing one or more programs configured to be executed by one or more processors of a computer system that is in communication with one or more image sensors, the one or more programs including instructions for performing the method of any of clauses 1-19.
21. A computer system configured to communicate with one or more image sensors, the computer system comprising:
   one or more processors; and
   memory storing one or more programs configured to be executed by the one or more processors, the one or more programs including instructions for performing the method of any of clauses 1-19.
22. A computer system configured to communicate with one or more image sensors, the computer system comprising:
   means for performing the method of any of clauses 1-19.
23. A non-transitory computer-readable storage medium storing one or more programs configured to be executed by one or more processors of a computer system that is in communication with one or more image sensors, the one or more programs including instructions for:
   detecting, via at least the one or more image sensors, first data that represents a first scene; and
   in response to detecting, via at least the one or more image sensors, the first data that represents the first scene and after an inference about a user intent with respect to the first scene is determined based on the first data that represents the first scene:
   in accordance with a determination that a portion of a knowledge base is selected based on the inference about the user intent with respect to the first scene, wherein the knowledge base is personal to a user of the computer system, and in accordance with a determination that a first action satisfies a set of action criteria, performing the first action, wherein the first action is generated based on the selected portion of the knowledge base.
24. A computer system configured to communicate with one or more image sensors, the computer system comprising:
   one or more processors; and
   memory storing one or more programs configured to be executed by the one or more processors, the one or more programs including instructions for:
      detecting, via at least the one or more image sensors, first data that represents a first scene; and
      in response to detecting, via at least the one or more image sensors, the first data that represents the first scene and after an inference about a user intent with respect to the first scene is determined based on the first data that represents the first scene:
      in accordance with a determination that a portion of a knowledge base is selected based on the inference about the user intent with respect to the first scene, wherein the knowledge base is personal to a user of the computer system, and in accordance with a determination that a first action satisfies a set of action criteria, performing the first action, wherein the first action is generated based on the selected portion of the knowledge base.
25. A computer system configured to communicate with one or more image sensors, the computer system comprising:
   means for detecting, via at least the one or more image sensors, first data that represents a first scene; and
   means, in response to detecting, via at least the one or more image sensors, the first data that represents the first scene and after an inference about a user intent with respect to the first scene is determined based on the first data that represents the first scene, for:
   in accordance with a determination that a portion of a knowledge base is selected based on the inference about the user intent with respect to the first scene, wherein the knowledge base is personal to a user of the computer system, and in accordance with a determination that a first action satisfies a set of action criteria, performing the first action, wherein the first action is generated based on the selected portion of the knowledge base.
26. A method, comprising:
   at a computer system that is in communication with one or more image sensors:
   detecting, via at least the one or more image sensors, first data that represents a first scene;
   in response to detecting, via at least the one or more image sensors, the first data that represents the first scene:
   in accordance with a determination that the first data that represents the first scene satisfies a set of reminder setting criteria, setting a reminder based on the first data that represents the first scene; and
   after setting the reminder based on the first data that represents the first scene:
   detecting, via at least the one or more image sensors, second data that represents a second scene, wherein the second scene occurs after the first scene; and
   in response to detecting, via at least the one or more image sensors, the second data that represents the second scene:
      in accordance with a determination that the second data that represents the second scene satisfies a set of triggering criteria for the reminder, triggering the reminder.
27. The method of clause 26, wherein the first scene and the second scene correspond to a same location.
28. The method of any one of clauses 26-27, wherein the first scene corresponds to a first location and the second scene corresponds to a second location different from the first location.
29. The method of any one of clauses 26-28, wherein:
   the computer system is in communication with one or more audio sensors;
   detecting, via at least the one or more image sensors, the first data that represents the first scene further includes detecting, via the one or more audio sensors, audio data that represents the first scene, wherein the audio data includes a request to set the reminder; and
   the set of reminder setting criteria is satisfied based on the audio data that includes the request to set the reminder.
30. The method of any one of clauses 26-29, wherein setting the reminder based on the first data that represents the first scene includes providing an audio output that indicates that the reminder has been set.
31. The method of any one of clauses 26-30, wherein the reminder is set without receiving a user input that explicitly requests to set the reminder.
32. The method of any one of clauses 26-31, wherein the reminder corresponds to a first object that is present within the first scene.
33. The method of clause 32, wherein:
   detecting, via at least the one or more image sensors, the first data that represents the first scene includes detecting data that represents a user's gaze; and
   the set of reminder setting criteria is satisfied based on a determination that the user's gaze is directed to the first object.
34. The method of any one of clauses 32-33, wherein:
   detecting, via at least the one or more image sensors, the first data that represents the first scene includes detecting a hand gesture; and
   the set of reminder setting criteria is satisfied based on a determination that the hand gesture corresponds to a selection of the first object.
35. The method of any one of clauses 32-34, wherein:
   the first data that represents the first scene indicates the first object;
   a relationship between a user of the computer system and the first object is obtained from a knowledge base that is personal to the user of the computer system; and
   the set of reminder setting criteria is satisfied based on the obtained relationship between the user of the computer system and the first object.
36. The method of clause 35, wherein the relationship between the user of the computer system and the first object is obtained from the knowledge base based on a user intent with respect to the first scene, wherein the user intent is determined by processing the first data that represents the first scene.
37. The method of any one of clauses 32-36, wherein:
   the first data that represents the first scene indicates that the first object is placed at a third location; and
   the set of reminder setting criteria is satisfied based on the first object being placed at the third location.
38. The method of clause 37, wherein:
   the second data that represents the second scene indicates the third location; and
   the set of triggering criteria for the reminder is satisfied based on the second data indicating the third location.
39. The method of clause 38, wherein:
   the second data that represents the second scene indicates an action performed with respect to the third location, wherein the action is performed by a user of the computer system; and
   the set of triggering criteria for the reminder is satisfied based on the second data indicating the action performed with respect to the third location.
40. The method of any one of clauses 38-39, wherein:
   the second data that represents the second scene indicates that the first object is present at the third location; and
   the set of triggering criteria for the reminder is satisfied based on the second data indicating that the first object is present at the third location.
41. The method of any one of clauses 32-40, wherein the reminder corresponds to an expiration date of the first object.
42. The method of any one of clauses 32-41, wherein the reminder corresponds to replenishing the first object.
43. The method of any one of clauses 32-42, wherein:
   the second data that represents the second scene indicates that the first object is present in the second scene; and
   the set of triggering criteria for the reminder is satisfied based on the second data indicating that the first object is present in the second scene.
44. The method of any one of clauses 32-43, wherein:
   the second data that represents the second scene indicates a type of location associated with the first object; and
   the set of triggering criteria for the reminder is satisfied based on the second data indicating the type of location associated with the first object.
45. The method of any one of clauses 32-44, wherein:
   the second data that represents the second scene indicates that a user of the computer system has departed a location associated with the first object; and
   the set of triggering criteria for the reminder is satisfied based on the second data indicating that the user has departed the location associated with the first object.
46. The method of clause 45, wherein:
   the second data that represents the second scene indicates that the user of the computer system has departed the location associated with the first object without obtaining the first object; and
   the set of triggering criteria for the reminder is satisfied based on the second data indicating that the user has departed the location associated with the first object without obtaining the first object.
47. A non-transitory computer-readable storage medium storing one or more programs configured to be executed by one or more processors of a computer system that is in communication with one or more image sensors, the one or more programs including instructions for performing the method of any of clauses 26-46.
48. A computer system configured to communicate with one or more image sensors, the computer system comprising:
   one or more processors; and
   memory storing one or more programs configured to be executed by the one or more processors, the one or more programs including instructions for performing the method of any of clauses 26-46.
49. A computer system configured to communicate with one or more image sensors, the computer system comprising:
   means for performing the method of any of clauses 26-46.
50. A non-transitory computer-readable storage medium storing one or more programs configured to be executed by one or more processors of a computer system that is in communication with one or more image sensors, the one or more programs including instructions for:
   detecting, via at least the one or more image sensors, first data that represents a first scene;
   in response to detecting, via at least the one or more image sensors, the first data that represents the first scene:
      in accordance with a determination that the first data that represents the first scene satisfies a set of reminder setting criteria, setting a reminder based on the first data that represents the first scene; and
      after setting the reminder based on the first data that represents the first scene:
      detecting, via at least the one or more image sensors, second data that represents a second scene, wherein the second scene occurs after the first scene; and
      in response to detecting, via at least the one or more image sensors, the second data that represents the second scene:
         in accordance with a determination that the second data that represents the second scene satisfies a set of triggering criteria for the reminder, triggering the reminder.
51. A computer system configured to communicate with one or more image sensors, the computer system comprising:
   one or more processors; and
   memory storing one or more programs configured to be executed by the one or more processors, the one or more programs including instructions for:
      detecting, via at least the one or more image sensors, first data that represents a first scene;
      in response to detecting, via at least the one or more image sensors, the first data that represents the first scene:
         in accordance with a determination that the first data that represents the first scene satisfies a set of reminder setting criteria, setting a reminder based on the first data that represents the first scene; and
         after setting the reminder based on the first data that represents the first scene:
         detecting, via at least the one or more image sensors, second data that represents a second scene, wherein the second scene occurs after the first scene; and
         in response to detecting, via at least the one or more image sensors, the second data that represents the second scene:
            in accordance with a determination that the second data that represents the second scene satisfies a set of triggering criteria for the reminder, triggering the reminder.
52. A computer system configured to communicate with one or more image sensors, the computer system comprising:
   means for detecting, via at least the one or more image sensors, first data that represents a first scene;
   means, in response to detecting, via at least the one or more image sensors, the first data that represents the first scene, for:
      in accordance with a determination that the first data that represents the first scene satisfies a set of reminder setting criteria, setting a reminder based on the first data that represents the first scene;
      means, after setting the reminder based on the first data that represents the first scene, for detecting, via at least the one or more image sensors, second data that represents a second scene, wherein the second scene occurs after the first scene; and
      means, after setting the reminder based on the first data that represents the first scene and in response to detecting, via at least the one or more image sensors, the second data that represents the second scene, for:
         in accordance with a determination that the second data that represents the second scene satisfies a set of triggering criteria for the reminder, triggering the reminder.
53. A method, comprising:
   at a computer system that is in communication with one or more one or more image sensors:
   obtaining data associated with a user of the computer system;
   after obtaining the data associated with the user of the computer system, detecting, via at least the one or more image sensors, first data that represents a first scene; and
   in response to detecting, via at least the one or more image sensors, the first data that represents the first scene:
      in accordance with a determination that a set of scene description criteria is satisfied, wherein the set of scene description criteria is satisfied based on the first data that represents the first scene:
      providing an output that describes a selected portion of the first scene, wherein the portion of the first scene is selected based on the data associated with the user of the computer system.
54. The method of clause 53, wherein:
   a first object is present within the selected portion of the first scene; and
   providing the output that describes the selected portion of the first scene includes outputting a determined identity of the first object.
55. The method of clause 54, wherein:
   providing the output that describes the selected portion of the first scene includes outputting a determined direction of the first object, wherein the determined direction is relative to the user of the computer system.
56. The method of any one of clauses 54-55, wherein:
   providing the output that describes the selected portion of the first scene includes outputting a determined distance between the first object and the user of the computer system.
57. The method of any one of clauses 54-56, wherein the selected portion of the first scene includes a second object and a third object different from the second object, and wherein providing the output that describes the selected portion of the first scene includes:
   in accordance with a determination to describe the second object and the third object in a first order, describing the second object and the third object in the first order; and
   in accordance with a determination to describe the second object and the third object in a second order different from the first order, describing the second object and the third object in the second order different from the first order.
58. The method of any one of clauses 53-57, wherein the set of scene description criteria is satisfied further based on the data associated with the user of the computer system.
59. The method of any one of clauses 53-58, wherein:
   the first data that represents the first scene is detected while the computer system assists the user of the computer system with navigation to a destination location within a destination scene; and
   the data associated with the user of the computer system includes the destination location within the destination scene.
60. The method of clause 59, wherein:
   the set of scene description criteria is satisfied further based on the destination location; and
   providing the output that describes the selected portion of the first scene includes providing an output that describes one or more objects that are present in the first scene, wherein the one or more objects are selected based on the destination location.
61. The method of any one of clauses 53-60, wherein:
   the set of scene description criteria is satisfied based on a determination that the user is moving about, wherein the determination that the user is moving about is based on the first data that represents the first scene.
62. The method of any one of clauses 53-61, wherein:
   the set of scene description criteria is satisfied based on a hazard that is present within the first scene, wherein the first data that represents the first scene indicates the hazard; and
   providing the output that describes the selected portion of the first scene includes providing an output that describes the hazard.
63. The method of any one of clauses 53-62, wherein the set of scene description criteria is further satisfied based on a setting of the computer system that specifies when to describe a scene.
64. The method of any one of clauses 53-63, wherein:
   the data associated with the user of the computer system includes a visual acuity of the user of the computer system; and
   the portion of the first scene is selected based on the visual acuity of the user of the computer system.
65. The method of clause 64, wherein the visual acuity of the user of the computer system is selected, based on an inference about a user intent with respect to the first scene, from a knowledge base that is personal to the user of the computer system, wherein the inference about the user intent with respect to the first scene is determined based on the first data that represents the first scene.
66. The method of any one of clauses 53-65, further comprising:
   detecting, via at least the one or more image sensors, second data that represents a second scene; and
   in response to detecting, via at least the one or more image sensors, the second data that represents the second scene:
      in accordance with a determination, based on the second data that represents the second scene, that it is unsafe for the user of the computer system to perform an action in the second scene, providing an output indicating that the action should not be currently performed; and
      in accordance with a determination, based on the second data that represents the second scene, that it is safe for the user of the computer system to perform the action in the second scene, providing an output indicating that the action can be currently performed.
67. The method of any one of clauses 53-66, wherein:
   obtaining the data associated with the user of the computer system includes receiving a natural language input that requests for assistance with navigation to a second destination location within a second destination scene; and
   the set of scene description criteria is satisfied based on the natural language input.
68. A non-transitory computer-readable storage medium storing one or more programs configured to be executed by one or more processors of a computer system that is in communication with one or more image sensors, the one or more programs including instructions for performing the method of any of clauses 53-67.
69. A computer system configured to communicate with one or more image sensors, the computer system comprising:
   one or more processors; and
   memory storing one or more programs configured to be executed by the one or more processors, the one or more programs including instructions for performing the method of any of clauses 53-67.
70. A computer system configured to communicate with one or more image sensors, the computer system comprising:
   means for performing the method of any of clauses 53-67.
71. A non-transitory computer-readable storage medium storing one or more programs configured to be executed by one or more processors of a computer system that is in communication with one or more image sensors, the one or more programs including instructions for:
   obtaining data associated with a user of the computer system;
   after obtaining the data associated with the user of the computer system, detecting, via at least the one or more image sensors, first data that represents a first scene; and
      in response to detecting, via at least the one or more image sensors, the first data that represents the first scene:
      in accordance with a determination that a set of scene description criteria is satisfied, wherein the set of scene description criteria is satisfied based on the first data that represents the first scene:
      providing an output that describes a selected portion of the first scene, wherein the portion of the first scene is selected based on the data associated with the user of the computer system.
72. A computer system configured to communicate with one or more image sensors, the computer system comprising:
   one or more processors; and
   memory storing one or more programs configured to be executed by the one or more processors, the one or more programs including instructions for:
      obtaining data associated with a user of the computer system;
      after obtaining the data associated with the user of the computer system, detecting, via at least the one or more image sensors, first data that represents a first scene; and
      in response to detecting, via at least the one or more image sensors, the first data that represents the first scene:
         in accordance with a determination that a set of scene description criteria is satisfied, wherein the set of scene description criteria is satisfied based on the first data that represents the first scene:
         providing an output that describes a selected portion of the first scene, wherein the portion of the first scene is selected based on the data associated with the user of the computer system.
73. A computer system configured to communicate with one or more image sensors, the computer system comprising:
   means for obtaining data associated with a user of the computer system;
   means, after obtaining the data associated with the user of the computer system, for detecting, via at least the one or more image sensors, first data that represents a first scene; and
   means, in response to detecting, via at least the one or more image sensors, the first data that represents the first scene, for:
      in accordance with a determination that a set of scene description criteria is satisfied, wherein the set of scene description criteria is satisfied based on the first data that represents the first scene:
      providing an output that describes a selected portion of the first scene, wherein the portion of the first scene is selected based on the data associated with the user of the computer system.
74. A method, comprising:
   at a computer system that is in communication with one or more one or more image sensors:
   detecting, via at least the one or more image sensors, first data that represents a first scene;
   in response to detecting, via at least the one or more image sensors, the first data that represents the first scene:
      in accordance with a determination that a set of criteria for a first accessibility mode is satisfied, wherein satisfaction of the set of criteria for the first accessibility mode is based on the first data that represents the first scene, setting the computer system to the first accessibility mode; and
      in accordance with a determination that the set of criteria for the first accessibility mode is not satisfied, forgoing setting the computer system to the first accessibility mode; and
   while the computer system is set to the first accessibility mode:
      detecting, via at least the one or more image sensors, second data that represents a second scene; and
      after detecting, via at least the one or more image sensors, the second data that represents the second scene, performing an action based on the first accessibility mode and the second data that represents the second scene.
75. The method of clause 74, wherein satisfaction of the set of criteria for the first accessibility mode is further based on information personal to a user of the computer system.
76. The method of clause 75, wherein the information personal to the user of the computer system includes a setting of the computer system, wherein the setting corresponds to the first accessibility mode.
77. The method of any one of clauses 74-76, further comprising:
   receiving a natural language input that corresponds to a request to enter the first accessibility mode, wherein satisfaction of the set of accessibility criteria for the first accessibility mode is further based on the request to enter the first accessibility mode.
78. The method of any one of clauses 74-77, wherein:
   the computer system is in communication with a sensor device; and
   setting the computer system to the first accessibility mode includes changing a parameter of the sensor device.
79. The method of any one of clauses 74-78, wherein:
   the first accessibility mode is a mode in which the computer system outputs a description of one or more objects that are present in a respective scene; and
   performing the action includes outputting a description of an object that is present within the second scene.
80. The method of clause 79, wherein:
   satisfaction of the set of criteria for the first accessibility mode is based on a determination that the user is moving about, wherein the determination that the user is moving about is based on the first data that represents the first scene.
81. The method of any one of clauses 79-80, wherein the object that is present within the second scene is selected based on a destination location for a navigation task.
82. The method of any one of clauses 74-78, wherein:
   the first accessibility mode is a mode in which the computer system outputs a description of an object that is selected by a respective user gesture;
   detecting, via at least the one or more image sensors, the second data that represents the second scene includes detecting a first user gesture; and
   performing the action includes:
      in accordance with a determination that the first user gesture corresponds to a selection of an object that is present within the second scene, outputting a description of the object that is present within the second scene.
83. The method of clause 82, wherein:
   detecting, via at least the one or more image sensors, the first data that represents the first scene includes detecting a second user gesture; and
   satisfaction of the set of criteria for the first accessibility mode is based on a determination that the second gesture corresponds to a selection of an object that is present within the first scene.
84. The method of any one of clauses 74-78, wherein:
   the first accessibility mode is a mode in which the computer system outputs a translation of respective sign language movement; and
   performing the action includes outputting a translation of sign language movement that is detected from the second data that represents the second scene.
85. The method of clause 84, wherein:
   detecting, via at least the one or more image sensors, the first data that represents the first scene includes detecting sign language movement that is performed within the first scene; and
   satisfaction of the set of criteria for the first accessibility mode is based on the detection of the sign language movement that is performed within the first scene.
86. The method of any one of clauses 74-78, wherein:
   the first accessibility mode is a mode in which the computer system provides audio output of text; and
   performing the action includes providing an audio output of text that is present within the second scene.
87. The method of any one of clauses 74-86, further comprising:
   while the computer system is set to the first accessibility mode:
      in accordance with a determination that a set of accessibility mode exit criteria is satisfied, exiting the first accessibility mode; and
   after exiting the first accessibility mode:
      detecting, via at least the one or more image sensors, third data that represents a third scene; and
      in response to detecting, via at least the one or more image sensors, the third data that represents the third scene, forgoing performing an action that is based on the first accessibility mode and the third data that represents the third scene.
88. The method of clause 87, further comprising:
   receiving a user input that corresponds to a request to exit the first accessibility mode, wherein the set of accessibility mode exit criteria is satisfied based on receiving the user input that corresponds to the request to exit the first accessibility mode.
89. The method of any one of clauses 87-88, further comprising:
   detecting, via at least the one or more image sensors, fourth data that represents a fourth scene, wherein the set of accessibility mode exit criteria is satisfied based on the fourth data that represents the fourth scene.
90. A non-transitory computer-readable storage medium storing one or more programs configured to be executed by one or more processors of a computer system that is in communication with one or more image sensors, the one or more programs including instructions for performing the method of any of clauses 74-89.
91. A computer system configured to communicate with one or more image sensors, the computer system comprising:
   one or more processors; and
   memory storing one or more programs configured to be executed by the one or more processors, the one or more programs including instructions for performing the method of any of clauses 74-89.
92. A computer system configured to communicate with one or more image sensors, the computer system comprising:
   means for performing the method of any of clauses 74-89.
93. A non-transitory computer-readable storage medium storing one or more programs configured to be executed by one or more processors of a computer system that is in communication with one or more image sensors, the one or more programs including instructions for:
   detecting, via at least the one or more image sensors, first data that represents a first scene;
   in response to detecting, via at least the one or more image sensors, the first data that represents the first scene:
      in accordance with a determination that a set of criteria for a first accessibility mode is satisfied, wherein satisfaction of the set of criteria for the first accessibility mode is based on the first data that represents the first scene, setting the computer system to the first accessibility mode; and
      in accordance with a determination that the set of criteria for the first accessibility mode is not satisfied, forgoing setting the computer system to the first accessibility mode; and
   while the computer system is set to the first accessibility mode:
      detecting, via at least the one or more image sensors, second data that represents a second scene; and
      after detecting, via at least the one or more image sensors, the second data that represents the second scene, performing an action based on the first accessibility mode and the second data that represents the second scene.
94. A computer system configured to communicate with one or more image sensors, the computer system comprising:
   one or more processors; and
   memory storing one or more programs configured to be executed by the one or more processors, the one or more programs including instructions for:
      detecting, via at least the one or more image sensors, first data that represents a first scene;
      in response to detecting, via at least the one or more image sensors, the first data that represents the first scene:
         in accordance with a determination that a set of criteria for a first accessibility mode is satisfied, wherein satisfaction of the set of criteria for the first accessibility mode is based on the first data that represents the first scene, setting the computer system to the first accessibility mode; and
         in accordance with a determination that the set of criteria for the first accessibility mode is not satisfied, forgoing setting the computer system to the first accessibility mode; and
      while the computer system is set to the first accessibility mode:
         detecting, via at least the one or more image sensors, second data that represents a second scene; and
         after detecting, via at least the one or more image sensors, the second data that represents the second scene, performing an action based on the first accessibility mode and the second data that represents the second scene.
95. A computer system configured to communicate with one or more image sensors, the computer system comprising:
   means for detecting, via at least the one or more image sensors, first data that represents a first scene;
   means, in response to detecting, via at least the one or more image sensors, the first data that represents the first scene, for:
      in accordance with a determination that a set of criteria for a first accessibility mode is satisfied, wherein satisfaction of the set of criteria for the first accessibility mode is based on the first data that represents the first scene, setting the computer system to the first accessibility mode; and
      in accordance with a determination that the set of criteria for the first accessibility mode is not satisfied, forgoing setting the computer system to the first accessibility mode; and
   while the computer system is set to the first accessibility mode:
      means for detecting, via at least the one or more image sensors, second data that represents a second scene; and
      means, after detecting, via at least the one or more image sensors, the second data that represents the second scene, for performing an action based on the first accessibility mode and the second data that represents the second scene.

## Claims

1. A method, comprising:
at a computer system that is in communication with one or more one or more image sensors:
detecting, via at least the one or more image sensors, first data that represents a first scene; and
in response to detecting, via at least the one or more image sensors, the first data that represents the first scene and after an inference about a user intent with respect to the first scene is determined based on the first data that represents the first scene:
in accordance with a determination that a portion of a knowledge base is selected based on the inference about the user intent with respect to the first scene, wherein the knowledge base is personal to a user of the computer system, and in accordance with a determination that a first action satisfies a set of action criteria, performing the first action, wherein the first action is generated based on the selected portion of the knowledge base.

2. The method of claim 1**,** further comprising:
in response to detecting, via at least the one or more image sensors, the first data that represents the first scene and after the inference about the user intent with respect to the first scene is determined based on the first data that represents the first scene:
in accordance with a determination that a portion of the knowledge base is not selected based on the inference about the user intent with respect to the first scene and in accordance with a determination that a second action satisfies the set of action criteria, performing the second action, wherein the second action is generated based on the first data that represents the first scene.

3. The method of any one of claims 1-2, wherein the knowledge base is updated to include information determined from one or more user interactions with one or more applications of the computer system.

4. The method of any one of claims 1-3, further comprising:
detecting second data that represents a second scene, wherein:
in accordance with a determination that a set of criteria is satisfied:
the knowledge base is updated based on information determined from the second data that represents the second scene; and
in accordance with a determination that the set of criteria is not satisfied,
the knowledge base is not updated based on the second data that represents a second scene.

5. The method of claim 4, wherein the second data that represents the second scene includes image data that represents the second scene.

6. The method of any one of claims 4-5, wherein the second data that represents the second scene includes audio data that represents the second scene.

7. The method of any one of claims 4-6, wherein the set of criteria include a first criterion that is satisfied when the second data is detected during an object enrollment session.

8. The method of any one of claims 4-7, wherein the set of criteria include a second criterion that is satisfied based on a location of the computer system when the second data that represents the second scene is detected.

9. The method of any one of claims 1-8, wherein the knowledge base includes a knowledge graph that is personal to the user of the computer system.

10. The method of claim 9, wherein the portion of the knowledge base is selected by matching an attribute of the user intent with respect to the first scene with a category within the knowledge graph.

11. The method of any one of claims 1-10, wherein the first data that represents the first scene includes image data that represents the first scene and audio data that represents the first scene, and wherein the inference about the user intent with respect to the first scene is determined based on the image data that represents the first scene and the audio data that represents the first scene.

12. The method of any one of claims 1-11, wherein determining the inference about the user intent with respect to the first scene includes constructing a prompt for a large language model, wherein the prompt requests the large language model to predict the user intent with respect to the first scene based on the first data that represents the first scene.

13. The method of any one of claims 1-12, wherein generating the first action includes constructing a second prompt for a second large language model, wherein the second prompt requests the second large language model to predict an action based on the selected portion of the knowledge base and the first data that represents the first scene.

14. A computer-readable storage medium storing one or more programs configured to be executed by one or more processors of a computer system that is in communication with one or more image sensors, the one or more programs including instructions for performing the method of any of claims 1-13.

15. A computer system configured to communicate with one or more image sensors, the computer system comprising:
one or more processors; and
memory storing one or more programs configured to be executed by the one or more processors, the one or more programs including instructions for performing the method of any of claims 1-14.
